(19) **Europäisches Patentamt / European Patent Office / Office européen des brevets**

(11) **EP 2 817 937 B1**

(12) # EUROPEAN PATENT SPECIFICATION

(45) Date of publication and mention
of the grant of the patent:
**05.04.2017 Bulletin 2017/14**

(21) Application number: **13710152.3**

(22) Date of filing: **22.02.2013**

(51) Int Cl.:
*H04L 29/06* (2006.01)    *H04W 12/02* (2009.01)
*H04L 9/18* (2006.01)    *G01S 1/02* (2010.01)
*H04W 84/22* (2009.01)    *G06Q 30/02* (2012.01)
*H04L 29/08* (2006.01)    *H04L 9/06* (2006.01)
*G01S 5/00* (2006.01)    *H04W 4/02* (2009.01)

(86) International application number:
**PCT/US2013/027409**

(87) International publication number:
**WO 2013/126759 (29.08.2013 Gazette 2013/35)**

(54) **METHOD AND DEVICES FOR OBSCURING A DEVICE IDENTIFIER**

VERFAHREN UND VORRICHTUNGEN ZUR VERNEBELUNG EINER GERÄTEKENNUNG

PROCÉDÉ ET DISPOSITIFS POUR OBSCURCIR UN IDENTIFICATEUR DE DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2012   US 201261601620 P
24.04.2012   US 201261637834 P
11.07.2012   US 201261670226 P
24.08.2012   US 201261693169 P
14.09.2012   US 201261701457 P
12.10.2012   US 201261713239 P
19.10.2012   US 201261716373 P
24.10.2012   US 201261717964 P
20.11.2012   US 201261728677 P
21.12.2012   US 201261745395 P
21.12.2012   US 201261745308 P
21.02.2013   US 201313773336**

(43) Date of publication of application:
**31.12.2014 Bulletin 2015/01**

(73) Proprietor: **Qualcomm Incorporated
San Diego, CA 92121 (US)**

(72) Inventors:
• **WURSTER, Charles S.
San Diego, California 92121 (US)**
• **SHANG, Ning
San Diego, California 92121 (US)**
• **THOMAS, Panos
San Diego, California 92121 (US)**
• **SPRIGG, Stephen A.
San Diego, California 92121 (US)**
• **HOHLFELD, Matthew
San Diego, California 92121 (US)**
• **MCLEAN, Ivan Hugh
San Diego, California 92121 (US)**

(74) Representative: **Dunlop, Hugh Christopher et al
Maucher Jenkins
26 Caxton Street
London SW1H 0RJ (GB)**

(56) References cited:
**EP-A1- 1 626 363        EP-A1- 2 200 218
WO-A1-2010/117364      US-A1- 2008 187 137**

• **HUN-WOOK KIM ET AL: "Symmetric Encryption
in RFID Authentication Protocol for Strong
Location Privacy and Forward-Security",
HYBRID INFORMATION TECHNOLOGY, 2006.
ICHIT '06, IEEE, PISCATAWAY, NJ, USA, 9
November 2006 (2006-11-09), pages 718-723,
XP032070247, DOI: 10.1109/ICHIT.2006.253688
ISBN: 978-0-7695-2674-4**

**(Cont. next page)**

- **GENE TSUDIK ED - NIKITA BORISOV ET AL: "A Family of Dunces: Trivial RFID Identification and Authentication Protocols", 20 June 2007 (2007-06-20), PRIVACY ENHANCING TECHNOLOGIES; [LECTURE NOTES IN COMPUTER SCIENCE], SPRINGER BERLIN HEIDELBERG, BERLIN, HEIDELBERG, PAGE(S) 45 - 61, XP019073083, ISBN: 978-3-540-75550-0 page 48, line 20 - page 53, line 11**
- **YANJUN ZUO: "Secure and private search protocols for RFID systems", INFORMATION SYSTEMS FRONTIERS ; A JOURNAL OF RESEARCH AND INNOVATION, KLUWER ACADEMIC PUBLISHERS, BO, vol. 12, no. 5, 28 August 2009 (2009-08-28), pages 507-519, XP019863478, ISSN: 1572-9419, DOI: 10.1007/S10796-009-9208-6**
- **CHAUDHRY M A R ET AL: "Protocols stack and connection establishment in bluetooth radio", STUDENTS CONFERENCE, 2002. ISCON '02. PROCEEDINGS. IEEE AUG. 16-17, 2002, PISCATAWAY, NJ, USA,IEEE, vol. 1, 16 August 2002 (2002-08-16), pages 48-55, XP010647264, ISBN: 978-0-7803-7505-5**

**Description**

BACKGROUND

Cellular and wireless communication devices have seen explosive growth over the past several years. This growth has been fueled by better communications hardware, larger networks, and more reliable protocols. Today's smartphones include cameras, GPS receivers, Bluetooth® transceivers, and of course the cellular communication capabilities (e.g., LTE, 3G and/or 4G network access) to enable the devices to establish data communication links with the Internet. Smartphones are now very widely deployed in society. Additionally, the components and capabilities in smartphones are now very affordable, enabling the capabilities to be deployed in other types of devices.

Numerous solutions have been proposed to facilitate location of persons or assets leveraging cellular and wireless devices. Most of these systems involve the development of a wearable device that communicates the position of the wearer to a server. Others involve establishment of a radio connection between the wearer and a cellular device. Such systems suffer from issues of cost, effectiveness and practicality, which limit their viability. Further, schemes that transmit wireless information indicating user identities or other unique information may be tracked by unintended parties, causing security concerns. For example, nefarious parties may capture radio messages that include user identities, such as by using a packet sniffer, and may determine the origin of the messages by analyzing data transmitting in the clear. HUN-WOOK KIM et al, "Symmetric Encryption in RFID Authentication Protocol for Strong Location Privacy and Forward Security", HYBRID INFORMATION TECHNOLOGY, 2006, ICHIT '06, IEEE, 9 November 2006, pages 718-723 disclose a method for protecting the identity of an RFID tag by providing a rolling identifier, which prevents tracking of the RFID tag. Patent applications EP 2 200 218 and EP 1 626 363 also disclose methods for obscuring RFID identifiers to prevent tracking and to protect privacy.

SUMMARY

The invention provides methods according to claims 1 and 5, a server according to claim 9, a wireless identity transmitter according to claim 10, non-transitory computer-readable media according to claims 11 and 12 and a system according to claim 13. Preferred embodiments of the invention are defined in the dependent claims.
Various example embodiments disclosed in the description provide systems, devices, and methods for locating a wireless identity transmitter based on broadcast identification packets that are encoded, encrypted or otherwise obscured in a rolling manner to provide a level of security and anonymity. The wireless identity transmitter may be a compact device configured to broadcast a unique and secure identification code using short-range wireless signaling technology, such as Bluetooth® Low Energy (LE). The identification broadcast packets ("broadcast messages") may be received by physically proximate proximity broadcast receivers (PBR), which may be dedicated receivers, smartphones configured with a PBR application, tablet computers configured with a PBR application, and stationary receivers, to name just a few examples. Because the wireless identity transmitter broadcasts its identifier using short-range wireless signals, a proximity broadcast receiver's own location may provide an approximate location for the wireless identity transmitter when a broadcast message (and included identifier) is received. Using long range wireless networks and/or the Internet, proximity broadcast receivers may transmit or upload received identifiers along with other associated information, such as time and location, to a central server as sighting messages. This forms a database of recorded sightings on the central server that may present both historical and actively updated location (or proximity) information for the wireless identity transmitter.

To protect privacy and prevent unauthorized tracking of particular wireless identity transmitters, identifiers in broadcast messages may be changed (or rolled) periodically in a manner that is known to the central server but that is difficult for an unauthorized system to predict. In an embodiment, a wireless identity transmitter may sync a nonce or counter between the transmitter and a central server to enable broadcasts of obscured identification information to the central server. Payload data within broadcast messages may be encrypted or randomized to prevent unintended interception and received by the central server for processing. The wireless identity transmitter may encrypt identification information and clock, nonce or counter information using secret keys and functions known only to the wireless identity transmitter and the central server. With a loosely-synced nonce or counter between the central server and the wireless identity transmitter, the central server may generate and compare expected message contents from the wireless identity transmitter based against received messages. If the central server finds a match between stored information and received message data, the central server may extrapolate the identity of the wireless identity transmitter broadcasting the received message. Alternatively, the central server may use stored secret key, device identity, and nonce or counter information with pseudo-random functions to create and compare data with received messages. The central server may avoid brute-force comparisons to identify the wireless identity transmitter of received messages.

The proximate proximity broadcast receivers may log received broadcast messages and may periodically transmit sighting messages. By leveraging the capabilities of the proximity broadcast receivers (e.g., smartphones, stationary receivers, etc.) to associate received broadcast messages with the current time and location, the central server can maintain a location track (like a trail of bread crumbs) for wireless identity transmitters which can be used to locate or narrow the search for a particular device. By obscuring the identifier, including in some embodiments obscuring or randomizing the Bluetooth identifier, unauthorized entities may be prevented from tracking the wireless identity transmitters.

In some embodiments, wireless identity transmitters may conduct one-way communications with proximity broadcast receivers and servers, broadcasting messages at regular intervals and accepting no response messages, or alternatively receiving configuration settings from nearby devices.

BRIEF DESCRIPTION OF THE DRAWINGS

The accompanying drawings, which are incorporated herein and constitute part of this specification, illustrate exemplary embodiments, and together with the general description given above and the detailed description given below, serve to explain the features of the invention.

FIG. 1 is a system diagram illustrating network components suitable for use in various embodiments.

FIG. 2 is a communication system diagram illustrating network components of embodiment architectures suitable for use in various embodiments.

FIG. 3 is a process flow diagram illustrating an embodiment method for broadcasting an identifier from a wireless identity transmitter.

FIG. 4A is a process flow diagram illustrating an embodiment method for a wireless identity transmitter receiving configuration settings after performing boot-up operations.

FIG. 4B is a process flow diagram illustrating an embodiment method for a wireless identity transmitter receiving configuration settings after performing boot-up operations and broadcasting messages based on the configuration settings.

FIG. 5 is a process flow diagram of an embodiment method for a wireless identity transmitter performing two-way wireless communications with a proximity broadcast receiver.

FIG. 6 is a component diagram illustrating various modules within a mobile proximity broadcast receiver suitable for use in various embodiments.

FIGS. 7A-7B are process flow diagrams illustrating an embodiment methods of a mobile proximity broadcast receiver relaying a wireless identity transmitter's identifier along with other data such as a time or location.

FIG. 8 is a call flow diagram for responding to a user request for a wireless identity transmitter's location in accordance with various embodiments.

FIG. 9 is a process flow diagram illustrating an embodiment method of responding to a second segment indicating how a message from a wireless device should be handled.

FIG. 10 is a process flow diagram illustrating an embodiment method of receiving an instruction from a central server in response to transmitting a sighting message based on proximity to a wireless identity transmitter.

FIG. 11 is a process flow diagram illustrating an embodiment method of a mobile proximity broadcast receiver responding to an alert for a particular wireless identity transmitter.

FIG. 12 is a call flow diagram for responding to a user request for a wireless identity transmitter's location by sending an alert in accordance with various embodiments.

FIG. 13 is a component diagram illustrating various modules within a central server suitable for use in various embodiments.

FIG. 14 is a diagram illustrating a wireless identity transmitter registration process for use in various embodiments.

FIGS. 15A & 15B are process flow diagrams illustrating embodiment methods for a central server to process sighting messages received from proximity broadcast receivers.

FIG. 16 is a call flow diagram illustrating communications between a wireless identity transmitter, a proximity broadcast receiver, and a central server in accordance with various embodiments.

FIG. 17 is a process flow diagram illustrating an embodiment method for sending alerts to mobile proximity broadcast receivers in identified sectors in response to a user request for a wireless identity transmitter's location.

FIG. 18 is a process flow diagram illustrating an embodiment method for a central server determining whether a proximity broadcast receiver has lost a wireless identity transmitter.

FIG. 19 is a process flow diagram illustrating an embodiment method for a server handling a rolling identifier.

FIG. 20 is a process flow diagram illustrating operations by a wireless identity transmitter and a central server for transmitting and processing rolling identifiers encrypted with an encryption algorithm according to the invention.

FIG. 21A is a process flow diagram illustrating an embodiment method for a wireless identity transmitter generating and broadcasting rolling identifier payloads using an encryption algorithm.

FIG. 21B a process flow diagram illustrating an embodiment method for a central server receiving and handling rolling identifier payloads using an encryption algorithm.

FIG. 22 is a process flow diagram illustrating embodiment operations by a wireless identity transmitter and a central server for transmitting and processing rolling identifiers using a pseudo-random function.

FIG. 23A is a process flow diagram illustrating an embodiment method for a wireless identity transmitter generating and broadcasting rolling identifier payloads using a pseudo-random function.

FIG. 23B a process flow diagram illustrating an embodiment method for a central server receiving and handling rolling identifier payloads using a pseudo-random function.

FIG. 24A is a process flow diagram illustrating an embodiment method for a wireless identity transmitter generating and broadcasting messages with rolling identifiers and encoded nonces or counters.

FIGS. 24B-24C are process flow diagrams illustrating embodiment methods for a central server receiving and handling messages including rolling identifiers and encoded nonces or counters.

FIG. 25A is a process flow diagram of an embodiment method for a wireless identity transmitter performing two-way wireless communications with a proximity broadcast receiver via a negotiated communications link.

FIG. 25B is a process flow diagram of an embodiment method for a proximity broadcast receiver transmitting messages to an available wireless identity transmitter via a negotiated communications link.

FIG. 25C illustrates an embodiment method 2570 for a wireless identity transmitter to transmit messages using a rolling Bluetooth MAC address while paired with a mobile device.

FIG. 25D illustrates an embodiment method 2580 for a mobile device, such as a smartphone, to process received messages from a wireless identity transmitter utilizing a rolling Bluetooth MAC address.

FIGS. 26A-26B are component block diagrams of wireless identity transmitters in accordance with various embodiments.

FIG. 27A-27B are component block diagrams of proximity broadcast receivers in accordance with various embodiments.

FIG. 28 is a message format diagram illustrating a message including identity information according to a further embodiment.

FIG. 29 is a component block diagram of a mobile device suitable for use in various embodiments.

FIG. 30 is a component block diagram of a server device suitable for use in various embodiments.

DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention as defined by the claims.

The word "exemplary" is used herein to mean "serving as an example, instance, or illustration." Any implementation described herein as "exemplary" is not necessarily to be construed as preferred or advantageous over other implementations.

The term "mobile device" is used herein to refer to any one or all of cellular telephones, smart-phones (e.g., iPhone®), web-pads, tablet computers, Internet enabled cellular telephones, WiFi enabled electronic devices, personal data assistants (PDA's), laptop computers, personal computers, and similar electronic devices equipped with a short-range radio (e.g., a Bluetooth® radio, a Peanut@ radio, a WiFi radio, etc.) and a wide area network connection (e.g., an LTE, 3G or 4G wireless wide area network transceiver or a wired connection to the Internet). Reference to a particular type of computing device as being a mobile device is not intended to limit the scope of the claims unless a particular type of mobile device is recited in the claims.

The term "broadcast message" is used herein to refer to short-range wireless broadcast signals broadcast by wireless identity transmitters (defined below) that may include identification information (i.e., identifiers) associated with the wireless identity transmitters and/or their users. Such identifiers may be periodically changed and encrypted (i.e., rolling identifiers). In various embodiments, broadcast messages may include other identifying information, such as Bluetooth® MAC addresses and counters, which may also be encrypted. Additionally, broadcast messages may include metadata and other data, such as characteristics of the transmitting wireless identity transmitter (e.g., device type), sensor data, and/or commands or other instructions. In various embodiments, broadcast messages may be transmitted via a wireless communication protocol, such as Bluetooth Low Energy, WiFi, WiFi Direct, Zigbee®, Peanut®, and other RF protocol. In various embodiments, because of the high unreliability of certain short-range transmission channels, broadcast messages may be single packet transmissions limited to a certain size (e.g., 80 bits, 10 bytes, 20 bytes, etc.). For example, the payload of an embodiment broadcast message may be 80 total bits, including 4 bits that indicate battery status information and 76 bits that indicate a rolling identifier. As another example, an embodiment broadcast message may include 20 bits representing a nonce or counter and 60 bits representing a rolling identifier, such as generated with a pseudo-random function or encryption algorithm.

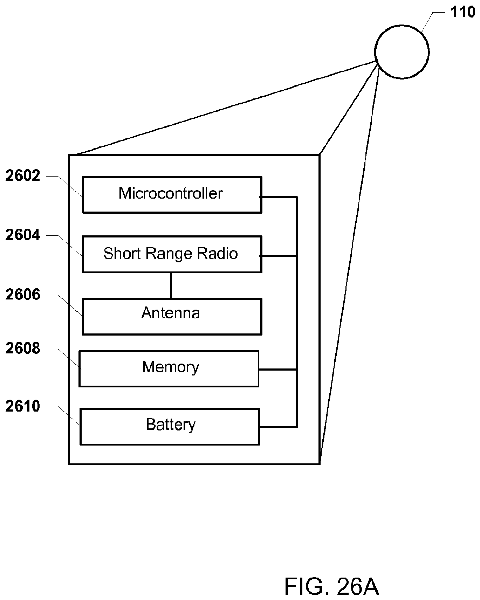

The term "wireless identity transmitter" is used herein to refer to a compact device configured to periodically transmit broadcast messages via short-range wireless transmitters. Wireless identity transmitters may be mobile, such as when carried or affixed to mobile persons or items, or alternatively may be stationary, such as when installed within buildings. Wireless identity transmitters may store and be associated with a unique device identifier (i.e., a *"deviceID"*), such as a factory ID. In an embodiment, the unique device identifier may be a code 56-bits in length. In various embodiments, for security purposes, this unique device identifier, along with other data (e.g., nonce or counter values), may be encoded, encrypted, or otherwise obfuscated when included within broadcast messages as a "rolling identifier." Wireless identity transmitters may be configured to maintain inaccurate time (e.g., UTC) information, such as by using a 30 ppm 16 kHz crystal oscillator as a clock. Wireless identity transmitters are described throughout the disclosure, in particular with reference to FIGS. 26A-26B. In various figures and diagrams of this disclosure, wireless identity transmitters may be referred to as "WIT" or "WITs".

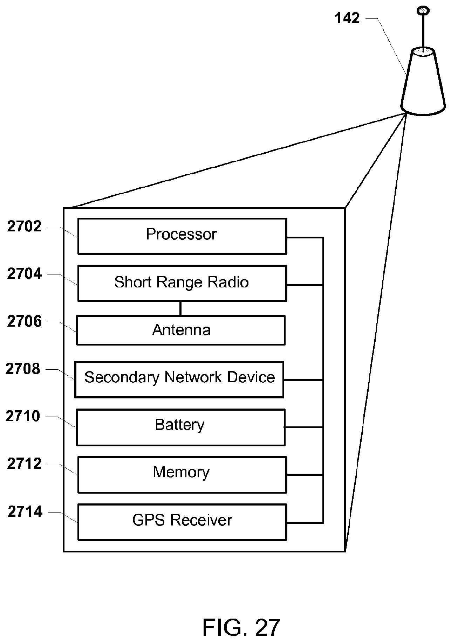

The term "proximity broadcast receiver" is used herein to refer to devices that are configured to receive broadcast messages, such as transmitted by wireless identity transmitters. In various embodiments, proximity broadcast receivers may be stationary devices (or "stationary proximity broadcast receivers") permanently positioned throughout places (e.g., buildings, retail stores, etc.) or alternatively may be mobile devices configured to operate as proximity broadcast receivers (or "mobile proximity broadcast receivers"). For example, a smartphone may be configured to receive broadcast messages and operate as a mobile proximity broadcast receiver. Reference to a particular type of computing device as being a proximity broadcast receiver is not intended to limit the scope of the claims unless a particular type of device is recited in the claims. Further, unless otherwise indicated, references to proximity broadcast receivers throughout this disclosure are not intended to limit any method or system to a particular type of proximity broadcast receiver device (e.g., wireless or stationary). Proximity broadcast receivers are described throughout the disclosure, in particular with reference to FIGS. 27A-27B. In various figures and diagrams of this disclosure, proximity broadcast receivers may be referred to as "PBR" or "PBRs," and mobile proximity broadcast receivers are referred to in the figures as "MPBR" or "MPBRs."

The terms "identity transceiver" and "wireless identity transceiver" are used herein to refer to devices that are configured to receive and transmit broadcast messages. In other words, an identity transceiver may function as both a proximity broadcast receiver and an identity transmitter. For example, a smartphone may be configured to broadcast short-range signals that include its unique identifier as well as receive broadcast messages from wireless identity transmitters within proximity. Throughout this disclosure, various operations may be described as being distinctly performed by either a wireless identity transmitter or a proximity broadcast receiver, however, those skilled in the art should appreciate that a device configured to operate as an identity transceiver may be configured to perform any or all of the same operations and thus may be interchangeable with references to either a wireless identity transmitter or a proximity broadcast receiver.

The term "sighting message" is used herein to refer to reports, signals, and/or messages sent by proximity broadcast receivers to a central server in response to receiving broadcast messages from wireless identity transmitters. Sighting messages may be transmissions that include part or all of the information encoded in received broadcast messages, including any obscured or encrypted information, such as identifiers of wireless identity transmitters. Additionally, sighting messages may include metadata and other information (or "associated data"), such as the sending proximity broadcast receivers' identification information (e.g., device ID, third-party affiliations, etc.), whether the proximity broadcast receiver paired with a wireless identity transmitter, transmissions context information (e.g., a code indicating the sighting message is related to an alert or a registered service), information regarding software or applications executing on proximity broadcast receivers (e.g., app IDs), location information, proximity information with respect to known areas within a place, and timestamp data. In an embodiment, sighting messages may also include authentication information (e.g., secret keys, passes, special codes, digital certificates, etc.) that may be used by a central server to confirm the identification (or identification information) of proximity broadcast receivers transmitting the sighting messages. For example, a sighting message may include a code from a hash function that can be decoded by the central server to ensure the sending proximity broadcast receiver is associated with a particular registered service. In various embodiments, sighting messages may be sent immediately after receipt of broadcasts (e.g., when related to an alert), buffered, or scheduled along with other scheduled transmissions.

The various embodiments provide methods, devices, and systems for locating or tracking a wireless identity transmitter via short-range wireless broadcasts of an encoded, encrypted or otherwise obfuscated identifier. The broadcasts including the encrypted identifier may be received by a network of proximity broadcast receivers, such as cell phones, mobile devices, or stationary proximity broadcast receivers, which can communicate with one or more central servers. In the various embodiments, a wireless identity transmitter may be a compact device configured to transmit a packet with an identification code in a format that can be received by any proximity broadcast receiver within range of the short-range wireless broadcast. Since the wireless identity transmitter relies on a short-range wireless signaling (e.g., short-range radio signals, such as Bluetooth Low Energy packets, light signals, sound signals, etc.) to transmit broadcast messages that include its identifier, only proximity broadcast receivers within proximity may receive such broadcast message. Thus, a proximity broadcast receiver's own location may provide an approximate location for the wireless identity transmitter at the time of receipt of a broadcast message. Each proximity broadcast receiver receiving a broadcast message from a wireless identity transmitter may pass sighting messages including the encrypted wireless identity transmitter identifiers to a central server for processing. The central server may decode encrypted or obscured information including the rolling identifier within received sighting messages.

According to the invention, a wireless identity transmitter is configured to periodically change the manner in which the device identifier is encoded/encrypted or change the identifier itself (referred to herein as a "rolling identifier") in a manner that makes tracking the transmitter difficult while enabling the central server to decode, decrypt or otherwise recognize the unique device identifier (and other identifying information) of the wireless identity transmitter. For example, a wireless identity transmitter may be configured to periodically broadcast a Bluetooth packet including an encoded version of the wireless identity transmitter's device identifier (i.e., *deviceID*). Such encryption of identifiers indicated in broadcast messages is required to enable the central server to reliably identify the originator wireless identity transmitter of a broadcast message while forcing a third-party (e.g., passive attacker) to determine the origin of the broadcast message by only guessing. For example, if the identifier was static, the third party could sniff the identifier, such as by impersonating a proximity broadcast receiver, and then use the identifier to track the wireless identity transmitter. Rolling identifiers may make such an attack impossible if the third party lacks the means of generating the encrypted identifiers.

Since a single packet broadcast message may not support a payload that can fit a cipher text of a conventional asymmetric key encryption, standard private/public key pair encryption may not be useable in the various embodiments. Additionally, wireless identity transmitters are generally broadcast-only devices, so there is no back channel that is typically required in conventional encryption schemes. Therefore, the central server in various embodiments may process encrypted message payloads by pre-provisioning a shared secret key unique to each wireless identity transmitter. Such secret keys may be associated with each wireless identity transmitter's unique device identifier at the central server and may be used to decode data (e.g., identifiers) encoded by the each wireless identity transmitter.

Performing the invention, a wireless identity transmitter uses a streaming-like encryption algorithm (e.g., AES-CTR) to encrypt its device identifier, shared secret key, and a nonce, broadcasting a payload that includes the encrypted data with and the nonce in the clear. Performing another example method, a wireless identity transmitter may use a pseudo-random function to encrypt the device identifier, shared secret key, and a nonce or counter, broadcasting a payload that includes the encrypted data without the nonce or counter in the clear. Performing another example method, a wireless identity transmitter may use a combination of a streaming-like encryption and pseudo-random function encryption to generate a payload to broadcast. In an example embodiment, the wireless identity transmitter and the central server may each have a cryptographically secure pseudo-random number generator or algorithm that is used to generate identifiers on a common time scale so that any given moment, the central server can calculate the identifier being transmitted by a particular wireless identity transmitter.

In various embodiments, the wireless identity transmitter may maintain a nonce or counter (or clock data) that periodically increments to represent the passage of time and that may be used in various encryption methods. When the wireless identity transmitter is powered on (or the battery is replaced), the nonce or counter may be set to a known initial value, such as 0. As the wireless identity transmitter functions, the nonce or counter may increase periodically (e.g., increment by one every several seconds/minutes/hours). If the wireless identity transmitter encounters inconsistent power (e.g., the battery is taken out or replaced), the nonce or counter may reset. Using such a nonce or counter, a wireless identity transmitter may be configured to periodically broadcast messages with encrypted payloads that include changing and encrypted device identification. In an embodiment, an encrypted payload may contain a concatenation of the device's unique identifier (i.e., the *deviceID*) and a current nonce or counter value for that wireless identity transmitter. In an embodiment, the wireless identity transmitter may encrypt the concatenated data using a secret key. Payloads may be broadcast at varying frequencies and may be received by proximity broadcast receivers or a central server for processing.

In an embodiment, the central server may be configured to identify wireless identity transmitters by matching received encrypted payloads with pre-generated payloads (or model payloads) corresponding to registered wireless identity transmitters. Based on information obtained during registration operations between the central server and wireless identity transmitters, the central server may store unique information about each wireless identity transmitter. For example, the central server may know the secret key, device identifier (or *deviceID*), and initial nonce or counter value of a wireless identity transmitter based on registration communications. Using such stored information, the central server may generate a series of model payloads that the wireless identity transmitter is expected (or likely) to broadcast within a time period, such as a 24-hour period. If the central server receives a payload that matches any of these model payloads, the central server may determine the identity of the originating wireless identity transmitter, as well as a loosely-accurate nonce or counter value within the wireless identity transmitter. Model payloads may be generated based off of a current, synched nonce or counter for each registered wireless identity transmitter (i.e., current model payloads). In an embodiment, the central server may also adjust for wireless identity transmitter clock skew by keeping a window of model payloads. For example, the central server may generate payloads using nonce or counter values representing times before and after an expected nonce or counter. The central server may also determine the period of the wireless identity transmitter clock by monitoring the change in the received payloads over time. In an embodiment, the central server may track changes of the reported nonce or counter values of a wireless identity transmitter and may report how inaccurate a device clock is for a particular period of time.

Model payloads may also be generated based off of initial nonce or counter values reported by each registered wireless identity transmitter during registration operations (i.e., initial model payloads). When a wireless identity transmitter is powered off and on again (e.g., rest, battery replaced, etc.), the wireless identity transmitter may reset to the original or initial nonce or counter value. If an encrypted payload received at the central server does not match any current model payload, the central server may compare the received encrypted payload to stored initial model payloads. When the central server finds an initial model payload matches the received encrypted payload (e.g., the wireless identity transmitter was reset), the central server may update a database to indicate the corresponding wireless identity transmitter's nonce or counter was reset, thus resynchronizing with the reset wireless identity transmitter's clock.

In a situation in which a wireless identity transmitter pauses for a period of time but does not reset its nonce or counter used for generating encrypted payloads, payloads subsequently generated by the wireless identity transmitter may not match expected payloads stored in the central server (e.g., current model payloads and initial model payloads). To address this situation, the central server may determine that a pause occurred when model payloads and/or nonce or counter values do not match a received encrypted payload. The central server may identify the wireless identity transmitter by performing a brute-force search of all known and/or registered wireless identity transmitters represented in a database and decode the received encrypted payload based on recorded secret keys and device identifications. In an embodiment, the brute-force search may include only wireless identity transmitters that have not broadcast payloads recently received by the central server.

For the purposes of this disclosure, the various embodiment methods for decoding, decrypting, and otherwise accessing obscured identification information (e.g., rolling identifiers) are described as being performed by a central server to associate such information with registered users and/or registered devices. However, those skilled in the art should appreciate that any computing device with authorization may be configured to perform such operations to decipher obscured identification information broadcast by wireless identity transmitters. For example, a mobile proximity broadcast receiver (e.g., a smartphone) employed by a user may utilize the various methods for decrypting, decoding, and otherwise accessing rolling identifiers that are associated with wireless identity transmitters also owned by that user.

Additional precautions may be important to protect against security breaches, such as hacker attacks against databases associated with a central server, as well as to provide registered users (e.g., merchants, parents, children, etc.) peace of mind and confidence their privacy may be fully protected. Such privacy safeguards may be provided to parties registered with embodiment systems by storing identifying information (e.g., names, addresses, financial information, medical information, etc.) separately from other information related to tracking devices and/or proximity information of users. In particular, to avoid unintended leaking of personal information of registered merchants, customers, children, or individuals, embodiment systems may utilize "double-blind" architectures. For example, such a double-blind architecture may use a first unit (e.g., a server, database, or other computing hub) that stores and has access to information related to the proximity information or other location-based data of registered users' devices (e.g., wireless identity transmitters, proximity broadcast receivers, identity transceivers, mobile devices, etc.). In other words, the first unit may access information associated with sighting messages that indicate approximate locations/proximities of various users' devices. However, the first unit may not store uniquely identifying personal information, such as user names, addresses, and/or social security numbers. Instead, a second unit may store the identifying personal information without being configured to access any location/proximity information as used by the first unit. The first and second units may use anonymous identifiers that connect data stored within the two units without indicating the protected information stored in either unit. In an embodiment, the first and second units may be maintained by separate entities (e.g., service providers), and further, at least one of such entities may be trusted by registered users who provide identifying information.

In a further embodiment, wireless identity transmitters may be configured to receive incoming transmissions from proximity broadcast receivers. Incoming transmissions may include firmware updates or upgrades, software instructions, configuration information, and other data to adjust the behavior of the wireless identity transmitters. Wireless identity transmitters may be configured (or scheduled) to selectively receive incoming transmissions based on clock signals, user input data (e.g., button press), or received signals. For example, a trigger signal received from a proximity broadcast receiver may instruct a wireless identity transmitter to activate its receiver for receiving subsequent messages. In particular, wireless identity transmitters may be configured to receive configuration settings from proximate devices (e.g., proximity broadcast receivers configured to transmit configuration setting values). Such configuration settings may set parameters that vary how often and/or with what transmit power identifiers are broadcast by the wireless identity transmitter.

The various embodiments leverage a large infrastructure of mobile devices already in place. Many modern mobile devices, such as smartphones, are already equipped with multiple radios, including short-range radios such as Bluetooth® radios, and therefore may be configured to perform as mobile proximity broadcast receivers and receive identification codes from a proximate wireless identity transmitter. Mobile devices are also often equipped with a clock that may provide a current time and a GPS receiver that may provide a current location whenever a wireless identity transmitter identifier is received. The mobile devices may communicate these identification codes, times, and locations via sighting messages to central servers through longer range network connections, such as a cellular radio connection. Thus, many of the large number of mobile devices already in use or soon to be in use may be incorporated as mobile proximity broadcast receivers to extend the reach of various embodiment systems.

By relying on the long range radios and other services of proximity broadcast receivers to report the location and time of received broadcast message (or "sightings") to a central server, wireless identity transmitters can be relatively small, inexpensive, and simple devices, including little more than a short-range radio, such as a Bluetooth® LE transceiver, and a battery. In various embodiments, wireless identity transmitters may also include additional short-range radios, such as Peanut@ radios. In various embodiments, the wireless identity transmitters may not include a user interface, multiple radios, global positioning system (GPS) receiver, or other features common on mobile devices. Embodiment wireless identity transmitters may also consume very little power allowing them to be deployed without needing to be frequently recharged or replaced. These characteristics make them ideal for a wide variety of uses and implementation in a variety of physical configurations. For example, wireless identity transmitters may be easily hidden or incorporated into many different personal objects, such as buttons, watches, shoes, briefcases, backpacks, ID badges, clothing, product packaging, etc.

Embodiment methods, devices, and systems may be used for a wide range of purposes. For example, various embodiments may be used to track missing children, mental patients, pets, Alzheimer patients, victims of natural disasters and the first responders who try to rescue them, etc. Further embodiments may be installed on high-value property for tracking such property in logistics systems, monitoring boundary area transits (e.g., into/out of construction sites, and tracking whether the property is ever stolen or reported missing. Embodiments could also be use for monitoring people entering and leaving a controlled area. Various embodiments may assist or complement the Amber Alert system or provide information to police officers. Embodiments may also provide valuable information to private persons or business entities.

Wireless identity transmitters may also serve to communicate information (e.g., sensor data) or prompt proximity broadcast receivers to take particular actions. In some embodiments, wireless identity transmitters may transmit broadcast messages that indicate one or more behaviors to be performed by a proximity broadcast receiver, such as a mobile phone, in which case the broadcast message may also include a secondary segment corresponding to a command (i.e., a command identifier) or the type of the wireless identity transmitter (i.e., a device type identifier or device type information). Proximity broadcast receivers receiving the broadcast message may take an action based on the identification or secondary code. Alternately, the proximity broadcast receivers may transmit the received broadcast message to the central server, which may return instructions or another code to the proximity broadcast receiver to indicate a behavior to be performed.

In further embodiments, wireless identity transmitters may be used to track items and indicate when assets leave or enter the presence (or proximity) of a proximity broadcast receiver. For example, a personal geofence may be established around a proximity broadcast receiver carried by a user, so that alerts or reminder messages may be transmitted when associated wireless identity transmitters leave or enter the reception range of the proximity broadcast receiver. Such indications of wireless identity transmitter proximity may act like a leash and may be useful for tracking children, luggage, wallets or purses, cars in a parking lot, etc. In another embodiment, the chain of custody of wireless identity transmitters may be determined and recorded within a central server based on determining proximate proximity broadcast receivers and/or input data confirming when tracked items are removed from the reception range of proximity broadcast receivers.

In further embodiments, wireless identity transmitters and proximity broadcast receivers may be configured to exchange transmissions using various wireless technologies, such as LTE-D, peer-to-peer LTE-D, WiFi, and WiFi Direct. In an embodiment, wireless identity transmitters may be configured to broadcast messages via a WiFi radio such that proximity broadcast receivers with WiFi transceivers may receive the broadcast messages. In such embodiments, wireless identity transmitters may utilize WiFi transmissions to broadcast identification information similar to WiFi access point broadcast advertisements. For example, a wireless identity transmitter including a WiFi radio may be configured to transmit broadcast messages via WiFi transmissions with low power so that the reception range is limited, thereby providing a short-range radio signal with a range similar to that of Bluetooth LE transmissions. In utilizing various wireless broadcast technologies and communication protocols with wireless identity transmitters, proximity broadcast receivers with limited capabilities may still be capable of receiving and processing broadcast messages from wireless identity transmitters. For example, a smartphone configured to operate as a mobile proximity broadcast receiver and including a WiFi transceiver but not a Bluetooth LE radio may receive and process broadcast messages from a wireless identity transmitter configured to broadcast short-range signals with a WiFi radio. In an embodiment, wireless identity transmitters may broadcast over multiple radios, such as a Bluetooth LE transceiver and a low-power WiFi transceiver, in order to enable more models of proximity broadcast receivers (e.g., more types of smartphones) to receive and relay sightings.

In other embodiments, wireless identity transmitters may include sensors that generate sensor data that may be encoded in broadcast messages. Such sensors data may include microphones, cameras, pressure sensors, heat sensors, accelerometers, humidity sensors, temperature sensors, CO2 sensors, etc. Data from such sensors may be used or stored by proximity broadcast receivers or a central server receiving the data via sighting messages from proximity broadcast receivers.

The various embodiment methods may determine wireless identity transmitters are within proximity of proximity broadcast receivers, and vice versa, based on the receipt of short-range wireless broadcast messages. Further, embodiments may not require determining exact locations for wireless identity transmitters and/or proximity broadcast receivers but instead may determine approximate and/or relative locations of devices between each other. Accordingly, references to determining location and/or distance throughout the disclosure may be for the purpose of determining proximity between signaling devices.

In various embodiments, companies, organization and institutions (e.g., schools, stores, parks, airports, shopping malls, office buildings, etc.) may deploy stationary proximity broadcast receivers to receive and relay broadcast messages from users' wireless identity transmitters. Alternatively, places may deploy stationary wireless identity transmitters and users' mobile proximity broadcast receivers may receive and relay broadcast messages. In further embodiments, places may employ both proximity broadcast receivers and wireless identity transmitters to receive, relay, and process data from both users carrying wireless identity transmitters and/or mobile proximity broadcast receivers. Regardless of the source of broadcast messages, the central server (or a local computing device) may determine approximate proximities between a proximity broadcast receiver and a wireless identity transmitter based on received sighting messages.

Additionally, based on identification of the proximity broadcast receiver and the wireless identity transmitter related to a received sighting message, the central server may be configured to determine which device is related to a registered service (e.g., a retail store) and which is related to a user (e.g., a user). The term "registered service" may be used herein to refer to a party or service that is registered, authenticated, valid, or otherwise known to a central server and that may be related with sighting messages. Registered services may include merchants, retailers, services, stores (e.g., big-box retailers, local coffee shops, etc.), and various other third-parties that are registered with the central server. Registered services may also include known routines, actions, or services managed by the central server, such as particular searches or active alerts, or alternatively applications that may be executing on a mobile device (e.g., a third-party app). In an embodiment, registered services may further include any third-parties that have registered as developers with the central server. For example, a registered service may correspond to a merchant that has registered proximity broadcast receivers with the central server. In an embodiment, registered users (e.g., users) employing mobile proximity broadcast receivers that transmit sighting messages in response to receiving broadcast messages from others' wireless identity transmitters (e.g., a merchant's stationary identity transmitter positioned within a retail store) may also be considered registered services by the central server.

For illustration purposes, a mobile proximity broadcast receiver (e.g., a smartphone configured to operate as a proximity broadcast receiver) carried by a user waiting in the check-out line may receive a broadcast message from a wireless identity transmitter positioned on top of the cash register point-of-sale device within the retail store and may transmit a sighting message to the central server. Upon receive of the sighting message, the central server may determine that the wireless identity transmitter belongs to the retail store based on the profile that corresponds to a rolling identifier and that the mobile proximity broadcast receiver is associated with a user profile based on an identifier of the proximity broadcast receiver included within metadata in the sighting message. From this information, the central server may transmit marketing information to the user.

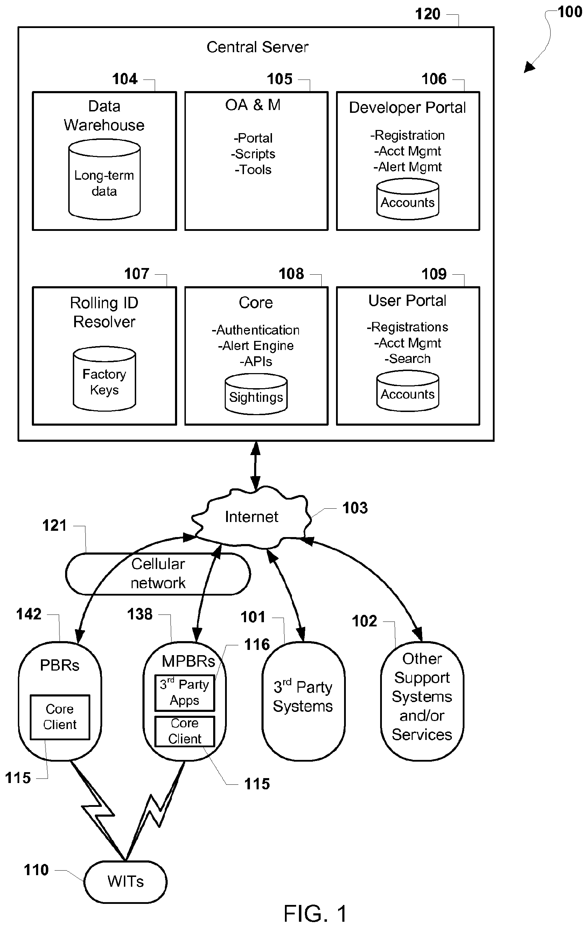

FIG. 1 illustrates an exemplary system 100 that may be used in various embodiments. In general, a central server 120 may be configured to receive, store, and otherwise process data corresponding to wireless identity transmitters 110. The central server 120 may be configured to exchange communications with various devices via the Internet 103, such as proximity broadcast receivers 142, mobile proximity broadcast receivers 138, third-party systems 101, and other support systems and/or services 102. The wireless identity transmitters 110 may broadcast messages that may be received by nearby proximity broadcast receivers 142 and/or the mobile proximity broadcast receivers 138 via short-range wireless signals. The proximity broadcast receivers 142, 138 may utilize long-range communications to relay received broadcast messages as sighting messages to the central server 120 via the Internet 103. For example, the proximity broadcast receivers 142 and mobile proximity broadcast receivers may utilize a cellular network 121 to transmit sighting messages to the central server 120. The third-party systems 101 may include merchant servers, retail store computing devices, computing devices associated with emergency services. The other support systems and/or services 102 may include computing devices associated with various technologies, such as computing devices utilized by users to provide registration information, systems that deliver user-relevant content (e.g., Qualcomm Gimbal™), and services that provide location-specific information (e.g., Qualcomm IZat™).

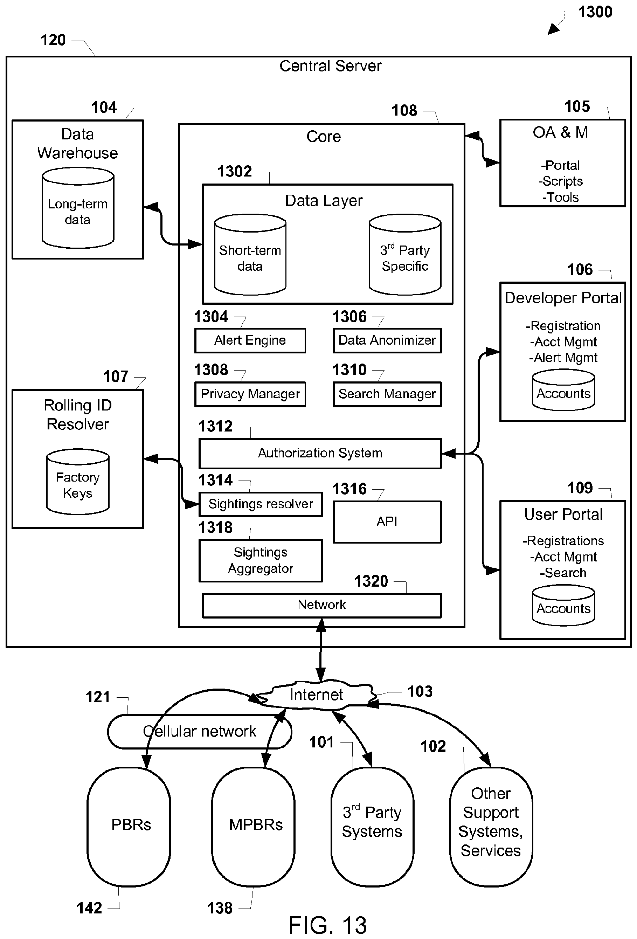

The central server 120 may include several components 104-109 to perform various operations to process data, such as received from proximity broadcast receivers 142, 138, third-party systems 101, or other support systems and/or services 102. In particular, the central server 120 may include a data warehouse component 104 that may store long-term data (e.g., archived user data, past location information, etc.). The central server 120 may also include an operations, administration and management (or OA & M) component 105 that may manage, process and/or store software associated with user portal accesses, scripts, tools (e.g., software utilities, routines, etc.), and any other elements for administering the central server 120. The central server 120 may also include a developer portal component 106 that may store developer account data and perform registration, account management, and alert (or notice) management routines associated with developers, such as vendors or merchants that register to interact with users of wireless identity transmitters 110. The central server 120 may also include a rolling identifier (or ID) resolver component 107 that may store factory keys associated with wireless identity transmitters 110 as well as perform operations, software, or routines to match encrypted, encoded, rolling, or otherwise obfuscated identification information within received sighting messages with affiliated user data. The central server 120 may also include a user portal component 109 that may store user account data and perform registration, account management, and search routines associated with users, such as persons associated with wireless identity transmitters 110. The central server 120 may also include a core component 108 that may process sighting messages, execute an alert or notice engine module, handle application programming interface (API) commands, and exchange data with other components within the central server 120. The core component 108 is described below with reference to FIG. 13.

In various embodiments, the components 104-109 may be enabled by computing devices, servers, software, and/or circuitry that is included within, connected to, or otherwise associated with the central server 120. For example, the core component 108 may be a server blade or computing unit included within the central server 120. As another example, the data warehouse component 104 may be a remote cloud storage device that the central server 120 communicates with via Internet protocols.

In an embodiment, the proximity broadcast receivers 142 and mobile proximity broadcast receivers 138 may be configured to execute a core client module 115 that may be software, instructions, routines, applications, operations, or other circuitry that enable the proximity broadcast receivers 142, 138 to process received broadcast messages from proximate wireless identity transmitters 110. The core client module 115 may also handle communications between the proximity broadcast receivers 142, 138 and the central server 120, such as transmitting sighting messages and receiving return messages from the central server 120. Further, the mobile proximity broadcast receivers 138 may be configured to execute third-party applications module 116 that may related to performing software instructions, routines, applications, or other operations provided by various third-parties (e.g., merchant apps). In an embodiment, when configured as registered services with the central server 120, the third-party applications module 116 may receive various data from the core client module 115. For example, a third-party application that is registered with the central server 120 may be configured to receive notifications from the core client module 115 when the user of the mobile proximity broadcast receiver 138 enters, remains, and/or leaves a particular place (e.g., a geofence, a retail store, etc.).

In another embodiment, the mobile proximity broadcast receivers 138 may be configured to receive and transmit broadcast messages and may also be referred to as "wireless identity transceivers." For example, a user may employ a smartphone that is configured to receive broadcast messages from nearby wireless identity transmitters 110 as well as broadcast signals that include identifying information associated with the user.

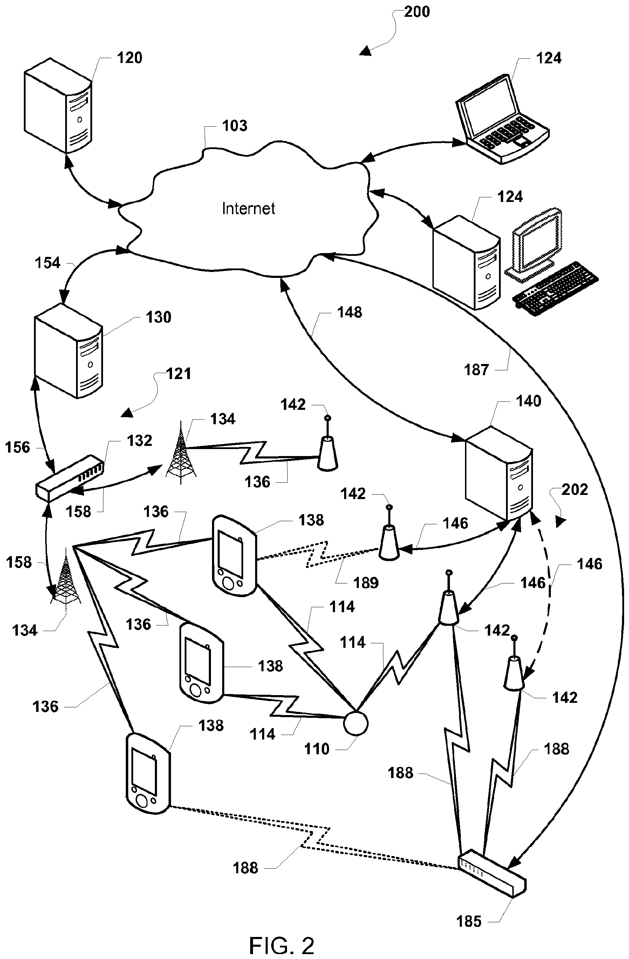

FIG. 2 illustrates an exemplary communication system 200 that may be used in various embodiments. The communication system 200 effectively enables wireless identity transmitters 110 (e.g., Bluetooth® LE transmitters) to transmit broadcast messages that include identification information to the central server 120 via a plurality of mobile proximity broadcast receivers 138 and/or stationary proximity broadcast receivers 142, without the need to negotiate a direct communication link. Such broadcast messages may be collected automatically by any proximity broadcast receiver within proximity (or broadcast range) of wireless identity transmitters. For example, a mobile proximity broadcast receiver 138 within a certain proximity may receive a broadcast message transmitted by a Bluetooth® radio within the wireless identity transmitter 110.

The communication system 200 may include a wireless identity transmitter 110. The wireless identity transmitter 110 may be coupled with various objects. For example, it may be embedded in a bracelet. The wireless identity transmitter 110 may transmit a short-range wireless signal 114, such as a broadcast message as described above. For example, this short-range wireless signal 114 may be a periodic broadcast of a packet, which includes the wireless identity transmitter's identification code. Alternately, the short-range wireless signal 114 may be an attempt to establish a wireless communication link with any of a plurality of mobile devices 138 that may be acting as proximity broadcast receivers. The short-range wireless signal 114 may be received by proximate proximity broadcast receivers, such as stationary proximity broadcast receivers 142 and/or mobile proximity broadcast receivers 138.

The short-range wireless signal 114 may be according to any of a variety of communication protocols, such as Bluetooth®, Bluetooth LE®, Wi-Fi, infrared wireless, induction wireless, ultra-wideband (UWB), wireless universal serial bus (USB), Zigbee®, Peanut ®, or other short-range wireless technologies or protocols which have or which can be modified (e.g., by restricting transmit power) to limit their effective communication range to relatively short range (e.g., within about 100 meters). In some embodiments, the wireless identity transmitter 110 may use the low energy technology standardized in the Bluetooth® 4.0 protocol (or later versions). For example, in some embodiment systems a wireless identity transmitter 110 may periodically broadcast identification packets configured as an advertiser as described in the Bluetooth® 4.0 protocol, and proximate proximity broadcast receivers 142, 138 may be configured to act as scanners according to that protocol.

The Bluetooth® protocol and Bluetooth® devices (e.g., Bluetooth LE devices) have a relatively short effective communication range, are widely used in deployed communication and computing devices, have standard advertising or pairing procedures that meets the discovery and reporting needs of various embodiments, and exhibit low power consumption, which make the protocol ideal for many applications of the various embodiments. For this reason, Bluetooth® and Bluetooth LE protocols and devices are referred to in many of the examples herein for illustrative purposes. However, the scope of the claims should not be limited to Bluetooth® or Bluetooth LE devices and protocol unless specifically recited in the claims. For example, Peanut@ transceivers may be included within wireless identity transmitters 110 and may be used to transmit two-way communications with proximity broadcast receivers 142, 138 also configured to utilize Peanut@ short-range radio transmissions.

The communication system 200 may include a plurality of stationary proximity broadcast receivers 142, which may be deployed by authorities, merchants, or various third-parties throughout a region, building, or place. Such stationary proximity broadcast receivers 142 may be designed specifically for wireless identity transmitters 110 (or include such tracking functions in addition to other primary functionality, such as traffic lights, utility transformers, etc.). Stationary proximity broadcast receivers 142 may be located in strategic locations within a locality, such as forming a perimeter about a community and/or being located in high traffic areas (e.g., major intersections and highway on-ramps). The stationary proximity broadcast receivers 142 may be in communication with a local area network 202, such as a WiFi network, that may include an Internet access server 140 that provides a connection 148 to the Internet 103. Stationary proximity broadcast receivers 142 may be connected to the local area network 202 by a wired or wireless link 146. In various embodiments, the stationary proximity broadcast receivers 142 may be contained within or located nearby the Internet access server 140. For example, the stationary proximity broadcast receivers 142 may be components within the Internet access server 140 or alternatively, may be placed on top of or to the sides of the Internet access server 140. In an embodiment, stationary proximity broadcast receivers 142 may be located in strategic places within a locality, such as forming a perimeter about a community and/or being located in high traffic areas (e.g., along aisles of a retail store, at entry ways to buildings, etc.). In an embodiment, stationary proximity broadcast receivers 142 may have additional functionality. For example, stationary proximity broadcast receivers 142 may also function as or be included within cash registers, point-of-sale devices, and/or display units within a retail store.

The communication system 200 may also include one or more mobile devices configured to act as mobile proximity broadcast receivers 138. The mobile proximity broadcast receivers 138 may be typical mobile devices or smartphones communicating with a cellular network 121 via long range wireless links 136 to one or more base stations 134 coupled to one or more network operations centers 132 by a wired or wireless connection 158. Such cellular network 121 may utilize various technologies, such as 3G, 4G, and LTE. The network operations centers 132 may manage voice calls and data traffic through the cellular network 121, and typically may include or may be connected to one or more servers 130 by a wired or wireless connection 156. The servers 130 may provide a connection 154 to the Internet 103. In the various embodiments, the mobile proximity broadcast receivers 138 may be mobile devices configured by an application or other software module to act as proximity broadcast receivers to relay reports of received broadcast messages from wireless identity transmitters 110 (i.e., sighting messages) to the central server 120 by way of the Internet 103. In an embodiment, stationary proximity broadcast receivers 142 may also communicate with the cellular network 121 via long range wireless links 136 to a base station 134.

Proximity broadcast receivers 138, 142 may be configured to report contacts (or sightings) with a wireless identity transmitter 110 to a central server 120 via the Internet 103. For example, the proximity broadcast receivers 142 may transmit a sighting message to the central server 120 that includes a rolling identifier corresponding to the identity of a user of the wireless identity transmitter 110. Each time a proximity broadcast receiver 138, 142 receives an identifier from a wireless identity transmitter 110, the identifier may be associated with the time of the connection and the location of the proximity broadcast receiver 138, 142, and this information may be transmitted to the central server 120, such as within a sighting message. In some embodiments, the identifier, the time, and the location of the contact may be stored in the memory of the proximity broadcast receiver 138, 142 (or an intermediary server 130, 140) for later reporting, such as in response to a query message broadcast or multicast by the central server 120. Also, the central server 120 may store location information reported by sighting messages in a database, which may be used for locating, tracking or otherwise monitoring movements of the wireless identity transmitter 110.

In an embodiment, mobile proximity broadcast receivers 138 may be configured to exchange short-range wireless signals 189 with stationary receiver devices 142. In other words, a mobile proximity broadcast receiver 138 may be configured to operate as a wireless identity transceiver that is capable of receiving short-range wireless signals 114 (i.e., broadcast messages) from the wireless identity transmitter 110 as well as transmitting short-range wireless signals 189 for receipt by proximity broadcast receivers 142.

In an embodiment, proximity broadcast receivers 138, 142 may transmit wireless signals 188 to a wireless router 185, such as part of the local area network 202, which may provide a connection 187 to the Internet 103. For example, the stationary proximity broadcast receivers 142 may transmit sighting messages that include data from broadcast messages transmitted by the wireless identity transmitter 110 to a WiFi wireless router 185.

The central server 120 may also be connected to the Internet 103, thereby allowing communication between proximity broadcast receivers 142, 138 and the central server 120. As described above, the central server 120 may include a plurality of components, blades, or other modules to process sighting messages and data received from proximity broadcast receivers 142, 138. Further embodiments may provide a direct connection (not shown) between the central servers 120 and any of the mobile device network components, such as the network operations centers 132, to more directly connect the proximity broadcast receivers 142, 138 and the central servers 120.

The communication system 200 may also include computing terminals 124, such as personal computers at home or work, through which users may communicate via the Internet 103 with the central server 120. Such terminals 124 may allow users, such as parents, police, fire, medical attendants, and other authorized authorities to register devices (e.g., wireless identity transmitters 110), access tracking records on the central servers 120, and/or to request that the central server 120 initiate a search for a particular wireless identity transmitter 110. In an embodiment, users may use such terminals 124 to register wireless identity transmitters 110, proximity broadcast receivers 142, 138 (e.g., smartphones configured to execute client software associated with the central server), and/or identity transceivers (not shown), such as by accessing web portals and/or user accounts associated with the central server 120. Similarly, third-parties, such as merchants, may use terminals 124 to register wireless identity transmitters 110, proximity broadcast receivers 142, 138 (e.g., stationary receivers configured to execute client software and relay broadcast to the central server), and/or identity transceivers (not shown).

Based on the location of the proximity broadcast receivers 138, 142 within a place, multiple proximity broadcast receivers 138, 142 may be within the broadcast area of the wireless identity transmitter 110 and may concurrently receive broadcast messages. The central server 120 may detect when proximity broadcast receivers 138, 142 concurrently (or within a certain time period) transmit sighting messages that indicate receipt of broadcast messages from the wireless identity transmitter. Such concurrent sighting messages may be used to determine more precise proximity information relating to the wireless identity transmitter at the time of broadcasting.

The communication system 200 may operate in a passive information gathering mode and/or an active search mode. In the passive information gathering mode, proximity broadcast receivers 138, 142 may continuously listen for broadcasts from any wireless identity transmitters 110, and report all identifier reception events via sighting messages (e.g., transmissions including identifiers, time and location) to the central server 120. When no active search is underway (i.e., no one is looking for a particular wireless identity transmitter 110), sightings of wireless identity transmitters 110 or received broadcast messages from wireless identity transmitters 110 may be stored in memory of the proximity broadcast receivers 138, 142 or the central server 120 for access at a later time. In order to protect privacy, such stored data may be stored for a limited period of time, such as a day, a week or a month, depending upon the person or asset being tracked. Then, if a person or asset is discovered to be missing, the stored data may be instantly accessed to locate and track the associated wireless identity transmitter 110, or at least determine its last reported location.

In a modification of the passive tracking mode, each proximity broadcast receiver 138, 142 may store IDs, times and locations corresponding to received broadcast messages (or contacts) from wireless identity transmitters 110 for a limited period of time. Alternatively, such information may be stored in servers 130, 140 connected to such proximity broadcast receivers 138, 142. Then, if a person or asset associated with a wireless identity transmitter 110 is discovered missing, a search can be initiated by the central server 120 querying the proximity broadcast receivers 138, 142 (or servers 130, 140) to download their stored data (e.g., databases indicating contacts with wireless identity transmitters 110) for analysis and storage in a database of the central server 120.

In an embodiment, in order to limit the demands on civilian mobile devices configured to operate as mobile proximity broadcast receivers 138, the passive tracking mode may only be implemented on the stationary proximity broadcast receivers 142. While the fewer number of such devices means the tracking of wireless identity transmitters 110 may be less effective, this embodiment may nevertheless enable receiving broadcast messages and thus the tracking of wireless identity transmitters 110 through high-traffic zones, such as intersections, highway on/off ramps, bus stations, airports, etc.

In the passive information gathering mode/embodiment, a user may use the communication system 200 to request the location of a particular wireless identity transmitter 110, such as by sending a request from a terminal 124 to the central server 120. For example, a mother may log in on her home computer terminal 124 and request the location of the wireless identity transmitter 110 in her child's backpack. The request may include a serial number, code, or other identifier corresponding to the wireless identity transmitter 110. The central server 120 may search the stored identification messages for the serial number, code, or other identifier and return any reported locations matching entered information, along with the times of such locations were reported via sighting messages. In further embodiments, the serial number or code entered by the parent may be cross-referenced with the identifier that the requested wireless identity transmitter 110 communicates in broadcast messages and that are relayed to the central server 120 in sighting messages submitted by proximity broadcast receivers 138, 142. In this manner only an authorized user (i.e., someone who knows the access code, password, or other secret code associated with a particular wireless identity transmitter 110) can obtain information regarding a given wireless identity transmitter 110 even though data is being gathered continuously.

In the active search mode/embodiment, the central server 120 may instruct proximity broadcast receivers 138, 142 to actively search for a particular wireless identity transmitter 110 (i.e., a "targeted" wireless identity transmitter). An active search may be initiated in response to a request received from a terminal 124. Such a request may include the identifier for the particular wireless identity transmitter 110, or an account number/name that is or can be crosslinked to the identifier of the wireless identity transmitter 110. The central server 120 may transmit activation messages, such as via broadcast or multicast, to proximity broadcast receivers 138, 142 that may instruct proximity broadcast receivers 138, 142 to search for a particular wireless identity transmitter 110 and that may include an identifier of the targeted wireless identity transmitter 110 (i.e., target device ID). For example, an activation message corresponding to an active search for a targeted wireless identity transmitter 110 may include a rolling identifier that the wireless identity transmitter 110 changes periodically in an unpredictable manner and that is known to the central server 120. In an embodiment, activation messages transmitted, broadcast or multicast by the central server 120 may be sent only to proximity broadcast receivers 138, 142 within particular sectors or within a given distance of a particular location. Alternatively, the activation messages may identify particular sectors or a distance from a particular location to enable the proximity broadcast receivers 138, 142 to determine whether the activation message is applicable to them based on their own known location. In this manner the search can be focused on a given area, such as a sector encompassing the last known location of the wireless identity transmitter 110 or an eye witness sighting. By focusing the search in this manner, proximity broadcast receivers 138, 142 not within the sector of search need not be activated.

In the active search mode/embodiment, in response to receiving activation messages from the central server 120 that include target device IDs and determining that they are within the identified sector of search, proximity broadcast receivers 138, 142 may configure their short-range radios (e.g., Bluetooth radio) to listen for broadcast messages having the identifiers. In other words, the proximity broadcast receivers 138, 142 may be considered activated for a search and may or pairing attempts with an identifier look for the identifiers included in the activation message (i.e., target device IDs). In embodiments that do not rely on pairing with the wireless identity transmitter, proximity broadcast receivers 138, 142 matching an identifier within a received broadcast message to a target device ID within an activation message may promptly report the event to the central server 120 via sighting messages transmitted via wired links 146 or long-range wireless links 136. In embodiments that rely on pairing or an exchange of messages between the wireless identity transmitter and proximity broadcast receivers, proximity broadcast receivers 138, 142 may listen for and only complete communication handshaking or pairing with a device that broadcasts the target device ID, and ignore other pairing attempts. In this alternative embodiment, proximity broadcast receivers 138, 142 may be protected from pairing with unauthorized devices while in the active search mode. Also, proximity broadcast receivers 138, 142 may modify the pairing process in the active search mode to terminate the communication link as soon as the device ID is received, further protecting against pairing with unauthorized devices in the active search mode. In the active search mode/embodiment, proximity broadcast receivers 138, 142 receiving the target device ID may promptly report that event to the central server 120 via a wired or wireless link to the Internet 103. As mentioned above, such a report may include the location of the proximity broadcast receiver 138, 142 and the time when the identifier was received if the report is not transmitted immediately. In the active search mode/embodiment, each sighting message received by the central server 120 may be reported to an interested person or authority, such as in the form of a webpage showing an update location indicator on a map.

Further, in the active search mode/embodiment, an authorized user, such as a police, FBI, fire/rescue or other person of authority may use the communication system 200 to activate a search for a particular wireless identity transmitter 110, such as by using a terminal 124 to provide the central server 120 with the target device ID and search location or sectors to be searched. For example, a mother discovering that her child is missing may call the police and provide them with an identifier of the wireless identity transmitter 110 concealed in her child's clothing. With the search activated, the central server 120 may transmit an alert (or message that indicates a search for a wireless identity transmitter has been activated) to proximity broadcast receivers 138, 142 within the initial targeted search sector. The central server 120 may then activate a webpage that presents a map of the search area and that may be maintained in near-real time so, that as relevant sighting messages are received, reported location information is displayed on the map. Authorized users may then access the website (or other information provided by the server) to coordinate in-person search efforts.

Of course, information gathered and stored in proximity broadcast receivers 138, 142 or in a database of the central server in the passive mode may be used upon initiation of an active search, such as to identify an initial search location or sector, track recent locations and movements, and to provide/display a history of locations reported by sighting messages that may be combined with near-real time search reports.

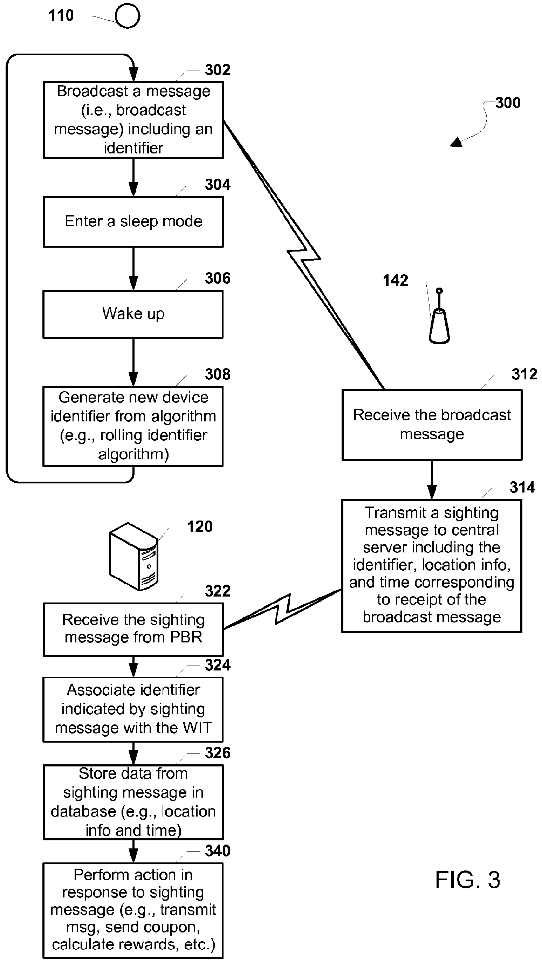

FIG. 3 illustrates an embodiment method 300 for implementation in a wireless identity transmitter 110 (referred to as "WIT" in FIG. 3), a proximity broadcast receiver 142, and a central server 120. In block 302, a wireless identity transmitter 110 may broadcast a message that includes an identifier, such as a broadcast message as described above. For example, the wireless identity transmitter 110 may broadcast a Bluetooth LE advertising packet that includes a rolling identifier as described herein. This may be accomplished in block 302 by a microcontroller within the wireless identity transmitter 110 determining that it is time to broadcast its identifier, configuring a suitable broadcast message (e.g., an advertisement packet as specified for Bluetooth LE devices in the Bluetooth®4.0 protocol), and transmitting that packet via a short-range radio.

In various embodiments, the message broadcast by the wireless identity transmitter (i.e., the broadcast message) may include an identifier segment, such as a rolling identifier. In various embodiments, the broadcast message may also include additional segments, such as a type segment. The type segment may indicate the type of wireless identity transmitter. For example, wireless identity transmitters may be marketed for various purposes, such as child safety devices, dog collars, or security tags for stores. The wireless identity transmitters may have a different type segment based on the intended purpose (e.g., one code for child safety devices, a second code for dog collars, etc.). Type segments may be static and set by manufacturers, while the remaining portion of the identifier may be unique to each device, and may roll as described below. The type segment may also be changed by a user, such as when a wireless identity transmitter is reset for a different purpose or application.

In other embodiments, a broadcast message may also include one or more static or dynamic segments with instructions or commands to be implemented by a proximity broadcast receiver. Such command segments may also be passed along to instruct a central server or other network device. Command segments may be set or static, similar to type segments, or may vary over time based on various conditions, such as pairings or data from one or more proximity broadcast receivers. Such command settings may also be configured by a user of the wireless identity transmitter. Second or additional segments may also indicate the status of the wireless identity transmitter. For example, a second segment may indicate the remaining power or estimated time left before the battery dies. Proximity broadcast receivers or a central server may interpret this status and respond accordingly.

Returning to FIG. 3, in block 304, the wireless identity transmitter 110 may enter a sleep mode. For example, after broadcasting the broadcast message having the identifier, the wireless identity transmitter 110 may be configured to enter a power conservation state that may continue for a predetermined period of time. In various embodiments, the wireless identity transmitter 110 may sleep for a predetermined time, never sleep, or sleep for varying times determined based on various inputs. In block 306, the wireless identity transmitter 110 may wake up from the sleep mode, such as after the predetermined duration expires. In block 308, the wireless identity transmitter 110 may generate a new device identifier from an algorithm, such as a rolling identifier algorithm. For example, the wireless identity transmitter 110 may generate a rolling identifier using a pseudo-random function or a streaming-like encryption algorithm (e.g., AES-CTR), as described below. The wireless identity transmitter 110 may then return to block 302 to broadcast again. In an embodiment, the broadcast message may contain timing, counter, count-down, or scheduling information indicating the availability of the wireless identity transmitter for receiving messages. For example, the broadcast message may indicate that the wireless identity transmitter will accept incoming configuration messages within a specified time window. In various embodiments, the operations in blocks 302-308 may be performed by an identity transceiver (e.g., a smartphone configured to operate as both an identity transmitter and a proximity broadcast receiver).

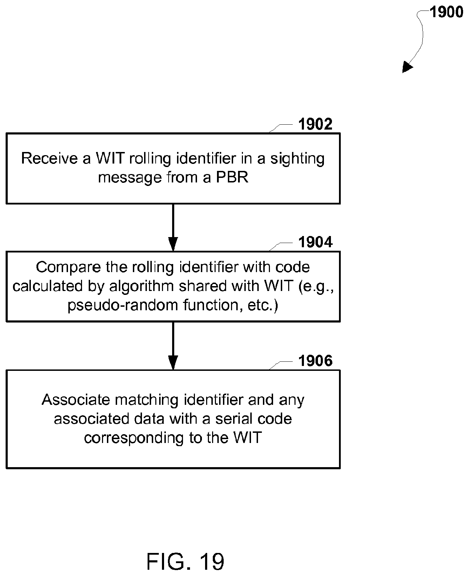

As mentioned above, the algorithm (or rolling identifier algorithm) used in block 308 may generate a rolling identifier which is very difficult to predict or recognize by a device or system that does not know either an identity of the wireless identity transmitter 110 (e.g., a MAC or Bluetooth ID), a decode key, and/or the algorithm used to generate the rolling identifier. As discussed below with reference to FIG. 19, the central server 120, configured with the algorithm (or a decoding algorithm) or a decode key, and in possession of the wireless identity transmitter 110 identities, can use the rolling identifier to determine a corresponding account or device identity. While method 300 shows the rolling identifier changing with every wake and broadcast cycle as one example, in other embodiments the identifier may be changed less frequently, such as once per minute, once per hour, etc. In such embodiments, the operation of generating a new identifier in block 308 may be performed only at the designated interval, so at other times upon waking (i.e., block 306) the wireless identity transmitter 110 may return to block 302 to broadcast the identifier. Various algorithms for generating rolling identifiers or other encoded identifiers are discussed below.

The method 300 also illustrates operations that may be implemented in the proximity broadcast receiver 142. In block 312, the proximity broadcast receiver 142 may receive the broadcast message from the wireless identity transmitter 110. The proximity broadcast receiver 142 may receive the broadcast message when within proximity of the wireless identity transmitter 110 (i.e., within communication range). When the broadcasted message with included identifier is received, the proximity broadcast receiver 142 may analyze header or metadata within the received broadcast message, as well as parse and evaluate various data within the broadcast message. In an embodiment, the broadcast message may contain encrypted and non-encrypted data that the proximity broadcast receiver 142 may or may not be configured to decrypt or otherwise access. In block 314, the proximity broadcast receiver 142 may transmit a sighting message to the central server 120 including the identifier, location information, and time corresponding to the receipt of the broadcast message. This transmission may be accomplished via a wireless wide area network, such as a cellular data network coupled to the Internet. In various embodiments, the operations in blocks 312 and 314 may be performed by a stationary proximity broadcast receiver, a mobile proximity broadcast receiver, or alternatively, an identity transceiver (e.g., a smartphone configured to operate as both a transmitter and a receiver).

In general, sighting messages may include metadata or header information that may describe received broadcast messages (e.g., message size, indicators of subject matter, etc.), the proximity broadcast receiver 142, such as the proximity broadcast receiver identification (e.g., a code, username, etc.), indications of services with which the proximity broadcast receiver 142 is affiliated regarding the server (e.g., the proximity broadcast receiver 142 participates in a tracking program for a particular vendor, merchant, area, etc.), as well as the conditions at the time of receipt of the broadcast message. For example, the sighting message may include signal strength information of the received broadcast message. In an embodiment, sighting messages may each include codes, flags, or other indicators that describe the general topic, subject matter, or reason for the sighting message. For example, the sighting message may contain a flag that indicates a relation to an active alert.

Additionally, sighting messages may include location information of the proximity broadcast receiver 142. In particular, sighting messages may indicate network-specific information that relates to a location. For example, a sighting message may indicate the cell site (e.g., cell site ID), cellular network tower (e.g., cell tower ID), or other wireless network with which a mobile proximity broadcast receiver was in communication at the time of receipt of the broadcast message. Further, sighting messages may include more refined location information based on data from global positioning systems (GPS) or chips included within the proximity broadcast receiver 142. For example, the proximity broadcast receiver 142 may determine GPS information (i.e., GPS coordinates) of the proximity broadcast receiver 142 at the time of receipt of a broadcast message, including the coordinates in the corresponding sighting message. In an embodiment, sighting messages may also include sensor data from various sensors within the proximity broadcast receiver 142, such as accelerometers, gyroscopes, magnetometers, etc.. Further, sighting messages may include authentication information that may confirm the legitimacy of the sighting message as coming from a known, registered, or otherwise valid proximity broadcast receiver 142. For example, authentication information included in a sighting message may include secret codes, certificates, or hash data that is shared between the proximity broadcast receiver and the central server 120.

In various embodiments, the proximity broadcast receiver 142 may generate sighting messages by appending data and various information to broadcast messages received from the wireless identity transmitter 110. In an embodiment, sighting messages may include the entirety of received broadcast messages or, alternatively, only portions of the received broadcast messages that the proximity broadcast receiver 142 determines to be of significance. For example, the proximity broadcast receiver 142 may extract particular header or metadata information from a broadcast message before generating a corresponding sighting message. As another example, the proximity broadcast receiver 142 may compress, abbreviate, truncate and/or summarize data within the broadcast message. In another embodiment, the proximity broadcast receiver 142 may simply redirect, relay, or retransmit received broadcast messages to the central server.

Sighting messages may be transmitted via a wireless or wired communication link, such as a wireless cellular network, a local area network configured to communicate via Internet protocols, a long-range radio communication link, or a short-range radio. For example, the proximity broadcast receiver 142 may transmit sighting messages over a cellular network via the Internet to the central server. As another example, the proximity broadcast receiver 142 may transmit sighting messages via a wired Ethernet connection.

Returning to FIG. 3, the method 300 also illustrates operations that may be implemented in the central server 120. In block 322, the central server 120 may receive the sighting message from the proximity broadcast receiver 142. In block 324, the central server 120 may associate an identifier indicated by the sighting message with the wireless identity transmitter 110. The central server 120 may associate the identifier within the sighting message with an account registered/created by a user. Associating the identifier with a particular wireless identity transmitter 110 or user account may be accomplished by comparing the identifier with a database of codes corresponding to the wireless identity transmitter 110 or user accounts to determine the database record in which information from the sighting message (e.g., location info) should be stored. Since in some embodiments the wireless identity transmitter 110 identifier changes (rolls) frequently, this process may involve comparing the identifier received in the sighting message to several possible serial codes generated by a pseudo-random number generator algorithm, or applying a reverse algorithm which uses the received identifier as an input and outputs the corresponding account number. In block 326, the central server 120 may store data from the sighting message in a database, such as location information and time data. For example, the central server 120 may determine the location of the proximity broadcast receiver 142 when the broadcast message was received based evaluating the received sighting message, and may store that data in a database linked to the wireless identity transmitter 110 or its user/owner.

In block 340, the central server 120 may perform an action in response to the sighting message, such as transmit a message to a recipient, send a coupon, and/or calculate rewards. In an embodiment, the central server 120 may transmit a return message to a recipient, such as the proximity broadcast receiver 142, that includes instructions, software, or codes indicating how the proximity broadcast receiver 142 may respond to the received broadcast message. For example, the return message may direct the proximity broadcast receiver 142 to transmit a link advertisement message. Recipients of such messages from the central server may include various devices and parties, including computing devices of registered services (e.g., merchants, emergency personnel), mobile devices of users, and proximity broadcast receivers (e.g., the proximity broadcast receiver 142 that received the broadcast message). In another embodiment, the central server 120 may use the stored data to identify when the wireless identity transmitter 110 enters, is within, and/or leaves a designated area. In other words, the central server 120 may identity when the wireless identity transmitter 110 comes within proximity, stays within proximity, or leaves proximity of a proximity broadcast receiver 142.

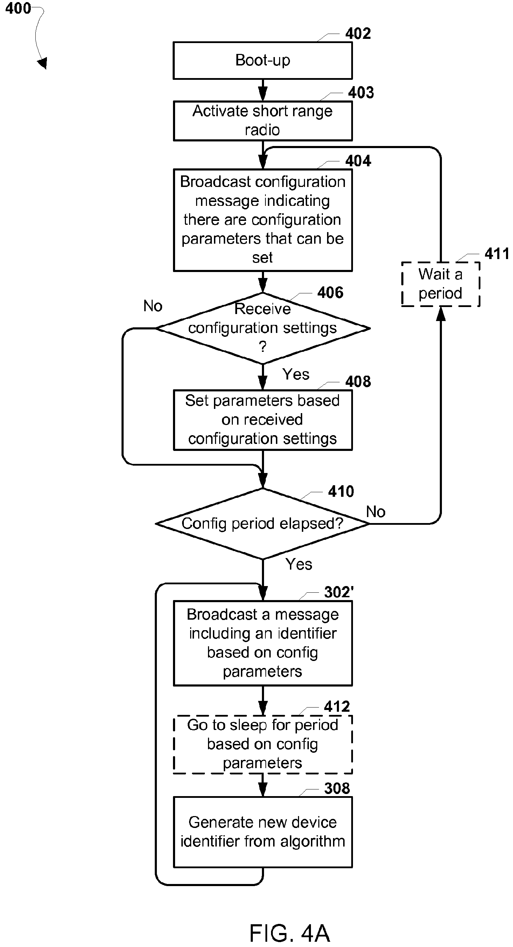

FIG. 4A illustrates an embodiment method 400 for a wireless identity transmitter (referred to as "WIT" in FIG. 4A) receiving configuration settings after performing boot-up operations. Typically, wireless identity transmitters may only perform one-way communications, broadcasting signals for receipt by proximity broadcast receivers. However, wireless identity transmitters may be configured to selectively engage in two-way communications with other devices with similar short-range wireless signaling capabilities (e.g., Bluetooth LE transceivers). In particular, upon initialization operations (or "booting-up"), a wireless identity transmitter may be configured to receive incoming short-range wireless communications from proximity broadcast receivers. For example, when a battery is replaced or inserted for the first time, the wireless identity transmitter may accept incoming Bluetooth packets for a predefined period of time, such as sixty seconds. Alternatively, the wireless identity transmitter may receive incoming messages as part of power-cycling (e.g., receive for the sixty seconds after a reboot of the wireless identity transmitter).

Such incoming short-range wireless communications may include instructions, software, firmware, commands, or other code for setting values for configuration parameters utilized by the wireless identity transmitter for performing various functions. In particular, the incoming communications may include configuration settings (or values) the wireless identity transmitter may use to set or modify established configuration parameters associated with transmitting broadcast messages that include identification information of the wireless identity transmitter. In an embodiment, incoming communications that include configuration settings may be Bluetooth signals (e.g., setters or getters) that may not require pairing operations between the sender and receiver (i.e., the wireless identity transmitter). In other words, the incoming communications may be non-pairing Bluetooth advertisements.

Configuration parameters may include the transmit interval for transmitting broadcast messages (i.e., how often the wireless identity transmitter should broadcast packets that include its identity) and the transmit power for transmitting broadcast messages (i.e., what signal strength to use when broadcasting). For example, received configuration settings may vary the intervals (i.e., broadcasting frequency) at which the wireless identity transmitter broadcasts its identifier in a manner configured to facilitate accurate tracking of the wireless identity transmitter while conserving battery power. This may be important as setting transmit power configuration parameters may affect the battery service life of the wireless identity transmitter (e.g., a longer interval may include a longer sleep mode and thus decreased power consumption). In an embodiment, configuration parameters may also include a debug parameter that may be set or modified by a manufacturer or administrative party (e.g., a central server). The debug parameter may be utilized by software or algorithms executed by the wireless identity transmitter and may indicate when the wireless identity transmitter should generate new identifiers to broadcast (e.g., an interval for generating a new rolling identifier or Bluetooth MAC address identifier). In another embodiment, incoming communications with configuration settings may include commands that instruct the wireless identity transmitter to change the data represented within broadcast messages, such as by entering/exiting an encoded mode. Alternatively, incoming communications may include instructions for the wireless identity transmitter to shorten its broadcast signal range to emulate near field communications (NFC).

In block 402, the wireless identity transmitter may boot-up. In other words, the wireless identity transmitter may be energized, initialized, and otherwise configured to operate from a hibernating, sleep, dormant, or otherwise deactivated state. In various embodiments, the boot-up operations may be performed in response to a user input (e.g., a button press), the insertion of a battery in the wireless identity transmitter, or receiving a short-range wireless signal (e.g., an activation signal). In block 403, the wireless identity transmitter's short-range radio may be activated. This activation may be accomplished by a timer or by the microcontroller determining that a duration has expired since the boot-up operations were performed or concurrently with the boot-up operations. In an embodiment, the activation of the short-range radio may be a routine within the boot-up operations in block 402.

In block 404, the wireless identity transmitter may broadcast a configuration message indicating there are configuration parameters that can be set in the wireless identity transmitter. For example, the configuration message may include the wireless identity transmitter's identity (or identifier) as well as an indication that a certain number or type of configuration parameters can be set, modified, or initialized by subsequent short-range wireless signals. In an embodiment, the configuration message may include a list of configuration parameters available to be set, such as the transmit interval.

In an alternative embodiment, the configuration message may include an indicator that the wireless identity transmitter is available to receive configuration settings. In such an embodiment, any responding devices, such as proximate proximity broadcast receivers, may transmit responses (e.g., Bluetooth LE signals) that request the list of configuration parameters. In response to receiving such a request, the mobile proximity broadcast receiver may transmit a second message that includes the list of configuration parameters.

In determination block 406, the wireless identity transmitter may determine whether configuration settings are received, such as in a short-range wireless signal from a proximate proximity broadcast receiver or identity transceiver. The wireless identity transmitter may monitor the short-range radio to determine whether a response is received from a proximate device. A response may be in the form of a simple response packet or pulse that the wireless identity transmitter microcontroller can recognize, or alternatively, an advertisement according to the Bluetooth LE protocol. If configuration settings are received (i.e., determination block 406 = "Yes"), in block 408 the wireless identity transmitter may set parameters based on the received configuration settings. For example, the wireless identity transmitter may set a value that indicates how often it transmits broadcast messages. If no configuration settings are received (i.e., determination block 406 = "No"), or if the wireless identity transmitter performs the operations in block 408, in determination block 410 the wireless identity transmitter may determine whether a configuration period has elapsed. For example, the wireless identity transmitter may evaluate a counter or timer to determine whether a predefined number of seconds (e.g., 60 seconds) have elapsed since the boot-up operations were performed. If the configuration period has not elapsed (i.e., determination block 410 = "No"), in optional block 411 the wireless identity transmitter may wait a period, such as a number of milliseconds, seconds, etc., and then may continue with the operations in block 404.

However, if the configuration period has elapsed (i.e., determination block 410 = "Yes"), in block 302' the wireless identity transmitter may broadcast a message including an identifier based on the configuration parameters. For example, the wireless identity transmitter may transmit a broadcast message at a signal strength indicated by configuration parameters set in response to receiving configuration settings (or values) from a nearby proximity broadcast receiver. In optional block 412, the wireless identity transmitter may go to sleep for a period based on the configuration parameters, such as a transmit interval configuration parameter. In block 308, the wireless identity transmitter may generate a new device identifier (e.g., rolling identifier) from an algorithm, and may continue with the operations in block 302'.

In alternate embodiments, the wireless identity transmitter may be configured to receive incoming messages from proximity broadcast receivers based on clock timing (or clock signals), detected inputs from a user (e.g., a detected button press), or information within a previously received signal (e.g., a received message from a proximity broadcast receiver may instruct the wireless identity transmitter to become available for subsequent messages at a particular future time).

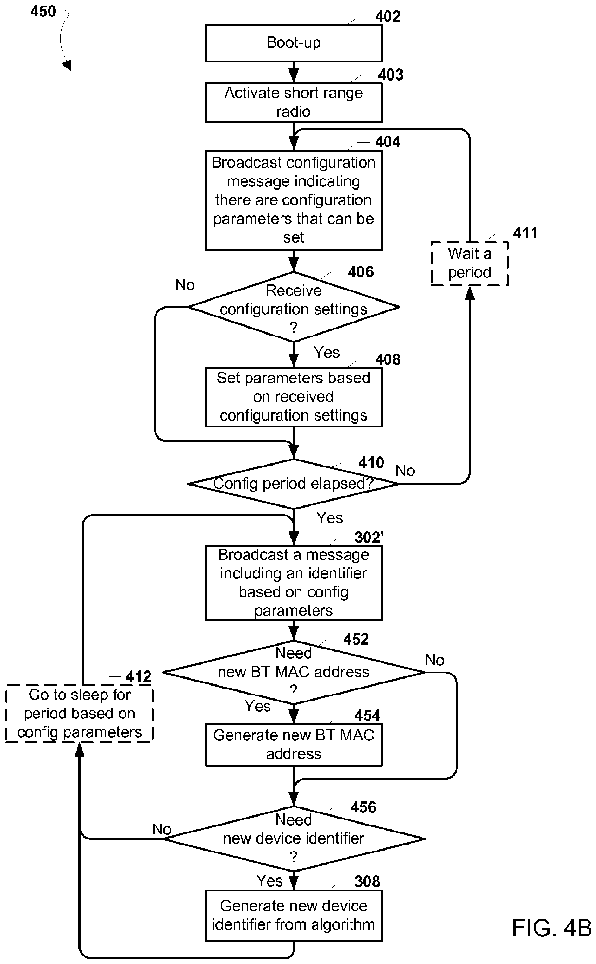

FIG. 4B illustrates an embodiment method 450 for a wireless identity transmitter (referred to as "WIT" in FIG. 4B) receiving configuration settings after performing boot-up operations and broadcasting messages based on the configuration settings. The method 450 is similar to the method 400 described above, except that the wireless identity transmitter may be configured to generate different identifiers (e.g., rolling identifiers) and/or Bluetooth machine addresses (i.e., BT MAC address) based on configuration parameters that may be set by configuration messages from proximate proximity broadcast receivers. In general, when the wireless identity transmitter is configured to transmit broadcast messages via a Bluetooth radio (e.g., Bluetooth LE, etc.), the Bluetooth signals or packets may contain information indicating the Bluetooth equipment used to transmit the signals. Based on debug set values received from proximate proximity broadcast receivers, the wireless identity transmitter may be configured to change the identifiers and/or Bluetooth MAC addresses indicated within broadcast messages at varying intervals.

In block 402, the wireless identity transmitter may boot-up. In block 403, the wireless identity transmitter's short-range radio may be activated. In block 404, the wireless identity transmitter may broadcast a configuration message indicating there are configuration parameters that can be set in the wireless identity transmitter. In determination block 406, the wireless identity transmitter may determine whether configuration settings are received, such as in a short-range wireless signal from a proximate proximity broadcast receiver or identity transceiver. If configuration settings are received (i.e., determination block 406 = "Yes"), in block 408 the wireless identity transmitter may set parameters based on the received configuration settings. If no configuration settings are received (i.e., determination block 406 = "No"), or if the wireless identity transmitter performs the operations in block 408, in determination block 410 the wireless identity transmitter may determine whether a configuration period has elapsed. If the configuration period has not elapsed (i.e., determination block 410 = "No"), in optional block 411 the wireless identity transmitter may wait a period, such as a number of milliseconds, seconds, etc., and then may continue with the operations in block 404. However, if the configuration period has elapsed (i.e., determination block 410 = "Yes"), in block 302' the wireless identity transmitter may broadcast a message including an identifier based on the configuration parameters.

In determination block 452, the wireless identity transmitter may determine whether it needs a new Bluetooth MAC address. In other words, the wireless identity transmitter may evaluate configuration parameters to determine the frequency it must generate a new Bluetooth MAC address for use with broadcast messages that use a Bluetooth LE protocol. The wireless identity transmitter may thus be configured to utilize rolling Bluetooth MAC addresses. In an embodiment, the wireless identity transmitter may compare stored information that indicates the elapsed time (or number of broadcasts) since the last generated Bluetooth MAC address. Alternatively, the wireless identity transmitter may generate a new Bluetooth MAC address for each broadcast. If a new Bluetooth MAC address is needed (i.e., determination block 452 = "Yes"), in block 454 the wireless identity transmitter may generate a new Bluetooth MAC address. In an embodiment the wireless identity transmitter may utilize a command provided within Bluetooth protocols (e.g., an API call or command) to generate the new Bluetooth MAC address. Additionally, the new Bluetooth MAC address may be non-resolveable, random, or otherwise lacking information any receiving device may use to contact the wireless identity transmitter. For example, the Bluetooth MAC address when indicated in a broadcast message may not be used by a proximity broadcast receiver to direct a response transmission or pair with the wireless identity transmitter.

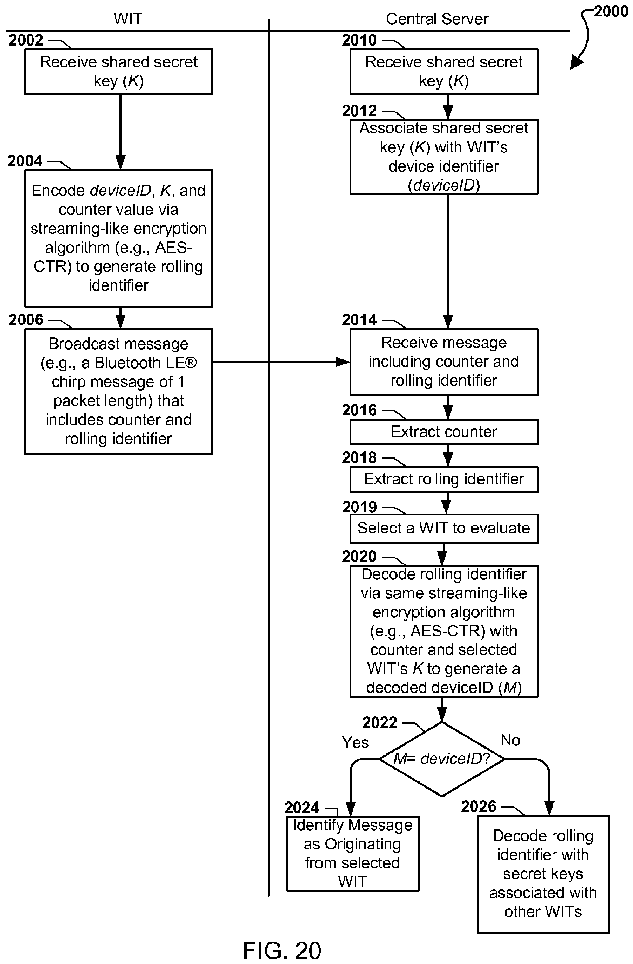

In another embodiment, to accommodate pairing communications between proximity broadcast receivers and the wireless identity transmitter (e.g., via a Bluetooth pairing), the new Bluetooth MAC address may be generated by an algorithm such that recipient proximity broadcast receivers receiving broadcast messages may determine the actual Bluetooth MAC address of the wireless identity transmitter. In other words, the new Bluetooth MAC address may be generated using a known algorithm, secret key, encryption, or other technique known to the wireless identity transmitter and authorized or associated proximity broadcast receivers authorized to establish paired communications with the wireless identity transmitter. In various embodiments, the methods described below with reference to FIGS. 20-24B may be performed by wireless identity transmitters and proximity broadcast receivers to decode obfuscated Bluetooth MAC addresses indicated in broadcast messages in similar ways as wireless identity transmitters and a central server may decode rolling identifiers.

If a new Bluetooth MAC address is not needed (i.e., determination block 452 = "No"), or a new Bluetooth MAC address is generated in block 454, in determination block 456 the wireless identity transmitter device may determine whether a new device identifier (e.g., a rolling identifier) is needed. Similar to the new Bluetooth MAC address, the wireless identity transmitter may evaluate configuration parameters to determine when to generate a new rolling identifier. For example, stored configuration parameters may indicate that a new device rolling identifier is needed every second, minute, or after an hour. If a new identifier is needed (i.e., determination block 456 = "Yes"), in block 308, the wireless identity transmitter may generate a new device identifier (e.g., rolling identifier) from an algorithm. If no new device identifier is needed (i.e., determination block 456 = "No"), or if a new device identifier was generated from the algorithm in block 308, in optional block 412, the wireless identity transmitter may go to sleep for a period based on the configuration parameters and may continue with the operations in block 302'.

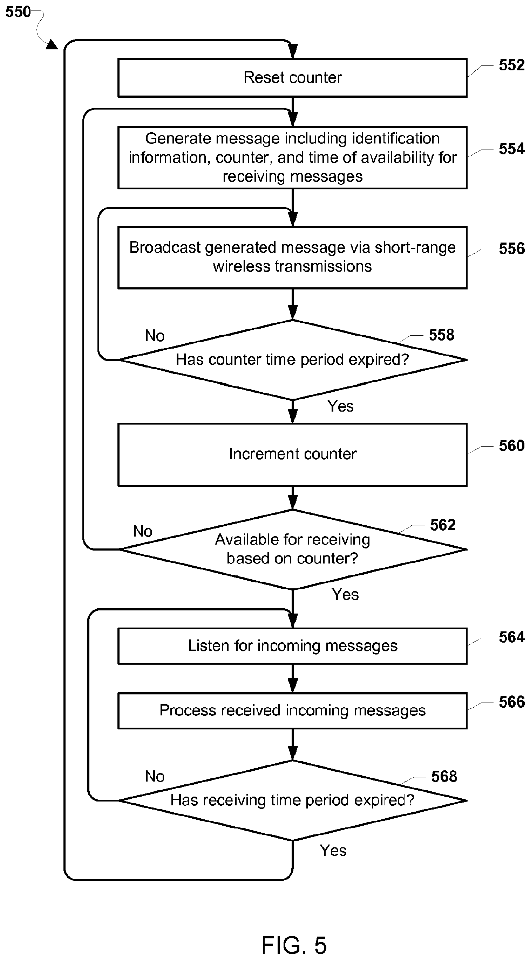

FIG. 5 illustrates an embodiment method 550 for a wireless identity transmitter performing two-way wireless communications with a proximity broadcast receiver. As described above, wireless identity transmitters may typically be used for one-way signaling, such as transmitting broadcast messages for receipt, use, and relay by proximity broadcast receivers. However, wireless identity transmitters may be configured to conduct two-way communications in order to receive firmware, software instructions or trigger signals directing the transmitter to perform certain operations (e.g., activate sensors), configuration data, and other information the wireless identity transmitter may use to transmit broadcast messages. Such two-way communications may be available to wireless identity transmitters that include short-range radio transceivers, such as Bluetooth® radios. However, wireless identity transmitters may be configured to selectively engage in two-way communications with proximity broadcast receivers to minimize power consumption and maximize battery service life. In an embodiment, the wireless identity transmitter may broadcast messages indicating to proximity broadcast receivers a period of time when the wireless identity transmitter may be available for receiving messages from proximity broadcast receivers, and may receive messages for a limited or predefined period of time.

In block 552, the wireless identity transmitter may reset a counter, such as a counter variable to indicate the beginning (or initialization) of a period during which the wireless identity transmitter may not receive messages. The counter may be reset to a zero value and may be incremented up to a predefined number during the operations of the method 550. Alternatively, the counter may be reset or initialized at a predefined number and decremented down to a zero value. The use of a counter variable is merely a non-limiting example technique for the wireless identity transmitter determining when to configure itself for receiving messages. In alternate embodiments, the wireless identity transmitter may instead determine when to be available for receiving incoming messages based on clock timing (or clock signals), detected inputs from a user (e.g., a detected button press), information within a previously received signal (e.g., a received message from a proximity broadcast receiver may instruct the wireless identity transmitter to become available for subsequent messages at a particular future time), or power-cycling (e.g., one such time might be for the sixty seconds after initial boot-up or reboot of the wireless identity transmitter).

In an embodiment, the wireless identity transmitter may be roughly in clock synchronization with or maintain a nonce or counter variable that it is known and roughly tracked by various proximity broadcast receivers (e.g., smartphones, listening radios throughout a place, etc.) and/or a central server. For example, when the wireless identity transmitter is activated (e.g., turned on, initialized by inserting a battery, etc.), a user may register the wireless identity transmitter with a central server that stores the wireless identity transmitter identification along with information that enables the central server to estimate a nonce or counter value or clock timing within the wireless identity transmitter. In an embodiment, such a nonce or counter variable or clock synchronization may be used to disambiguate wireless identity transmitter identities and/or be used as a decryption key for obfuscated or encoded messages. Such registration and synchronization operations are described further below.

In block 554, the wireless identity transmitter may generate a message including identification information, counter, and time of availability for receiving messages. The generated message may include information about the wireless identity transmitter's identity (e.g., a serial code/number, a username, or a rolling identifier). In an embodiment, the generated message may be encrypted, encoded, or otherwise obscured to prevent proximity broadcast receivers from determining the identity of the wireless identity transmitter and/or the user thereof. For example, the generated message may employ a rolling identifier or code known only to the wireless identity transmitter and a central server but not proximity broadcast receivers.

The generated message may also include information indicating a time or condition when the wireless identity transmitter may be available for accepting communications for proximity broadcast receivers. For example, the message may describe the current value of the counter or indicate a count-down timer showing when the wireless identity transmitter may be available. In another embodiment, the generated message may include instructions for proximity broadcast receivers to enable successful transmissions to the wireless identity transmitter. For example, the generated message may contain specifications (e.g., required codes, content, delivery time, etc.) for any messages transmitted by proximity broadcast receivers to the wireless identity transmitter.

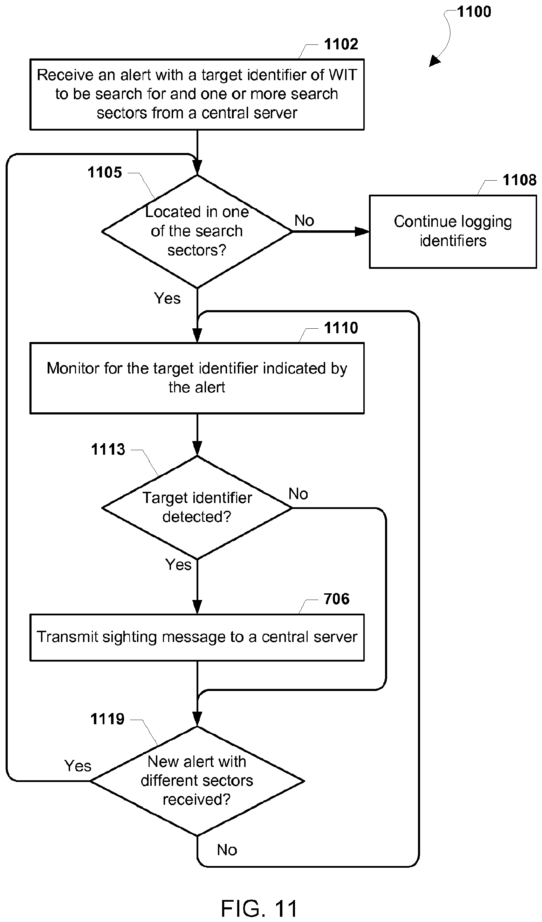

In block 556, the transmitter may broadcast the generated message via short-range wireless transmissions, such as Bluetooth LE packets. If within the range of the short-range broadcasts, a proximity broadcast receiver may receive and process the broadcasts as described below with reference to FIG. 11.

The wireless identity transmitter may periodically broadcast the same generated message multiple times for each counter time period. In other words, the wireless identity transmitter may broadcast the generated message more than once before modifying the counter variable value. In determination block 558, the wireless identity transmitter may determine whether the predetermined counter time period has expired. If the counter time period has not expired (i.e., determination block 558 = "No"), the wireless identity transmitter may continue to broadcast the generated message periodically in block 556.

If the counter time period has expired (i.e., determination block 558 = "Yes"), in block 560 the wireless identity transmitter may increment the counter and, in determination block 562, determine whether the wireless identity transmitter has become available for receiving messages based on the counter value. For example, the wireless identity transmitter may compare the current counter variable value to a predefined maximum (or minimum) counter value. As stated above, in various other embodiments, the wireless identity transmitter may determine availability for receiving messages based on other evaluations of time or instructions stored within the wireless identity transmitter.

If it is not available to receive messages (i.e., determination block 562 = "No"), the wireless identity transmitter may continue with the operations in block 554 to generate a new message to broadcast. If the wireless identity transmitter is available to receive messages (i.e., determination block 562 = "Yes"), in block 564 the wireless identity transmitter may listen for incoming messages, such as by monitoring a receiver circuit for incoming short-range radio transmissions, and in block 566 the wireless identity transmitter may process any received incoming messages, such as with software or operations running on a processor or wireless modem within the wireless identity transmitter.

In determination block 568, the wireless identity transmitter may determine whether the receiving time period has expired. In other words, the wireless identity transmitter may determine whether incoming messages may still be received. The time period for receiving incoming messages may be based on a counter variable maintained by the wireless identity transmitter, a clock signal indication, or information within a received message. If the receiving time period has not expired (i.e., determination block 568 = "No"), the wireless identity transmitter may continue to listen for incoming messages in block 564. However, if the receiving time period has expired (i.e., determination block 568 = "Yes"), the wireless identity transmitter may repeat the process by returning to block 552.

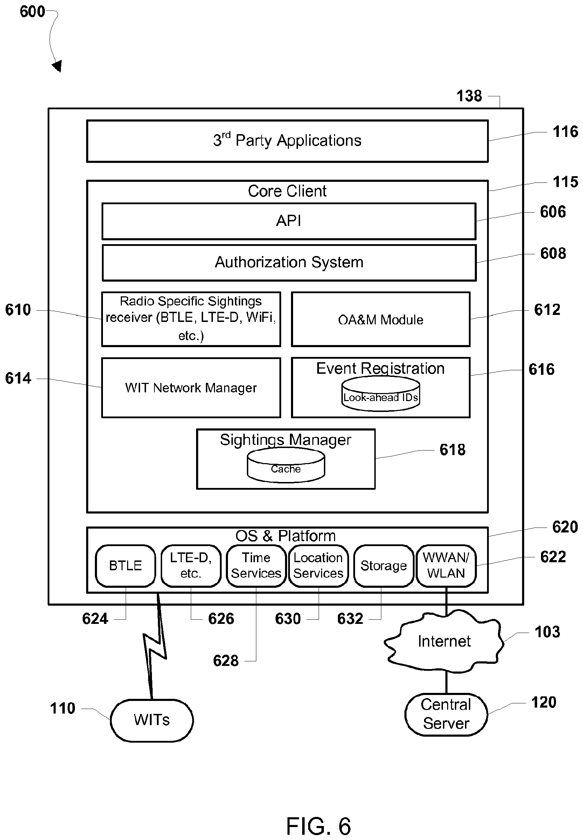

FIG. 6 illustrates a diagram 600 of various modules within a mobile proximity broadcast receiver 138. As described above, proximity broadcast receivers may include stationary proximity broadcast receivers, such as dedicated devices placed around a building, and mobile proximity broadcast receivers 138, such as mobile devices that are configured to perform operations to receive broadcast messages from wireless identity transmitters 110 and transmit sighting messages over the Internet 103 to a central server 120 via long-range communications (e.g., via WiFi or a cellular network). The various modules and components are described below in the context of elements within a mobile proximity broadcast receiver 138, however in various embodiments, any proximity broadcast receiver, such as a stationary proximity broadcast receiver, may include similar modules and/or components.

The mobile proximity broadcast receiver 138 may include a core client module 115 that may be software, instructions, routines, applications, operations, or other circuitry utilized to process received broadcast messages from proximate wireless identity transmitters 110. The core client module 115 may also handle communications between the proximity broadcast receivers 142, 138 and the central server 120, such as transmitting sighting messages and receiving return messages from the central server 120. For example, the core client module 115 may operate as a background service that performs operations, such as uploading or transmitting sighting messages, without interaction from a user.

The core client module 115 may include an API component 606 that corresponds to application programming interface data, code, or other commands related to broadcast messages and/or sighting messages. For example, the API component 606 may be utilized by a proximity broadcast receiver when listening for Bluetooth LE advertising packets received from the wireless identity transmitter 110. As another example, the API component 606 may be utilized to register the mobile proximity broadcast receiver 138 to receive notifications, alerts, or other communications corresponding to wireless identity transmitters 110. The core client module 115 may also include an authorization system component 608 for processing received broadcast messages. For example, the mobile proximity broadcast receiver 138 may support oAuth for authorization requests and xAuth for approved communication partners. The core client module 115 may also include a radio specific sightings receiver component 610 (e.g., a component for handling Bluetooth LE, LTE-D, WiFi, and other communications), an operations, administration, and management (or OA&M) module 612, a wireless identity transmitter network manager component 614, an event registration component 616 that relates to stored look-ahead identifiers, and a sightings manager component 618. In an embodiment, the event registration component 616 may store numerous rolling identifiers downloaded from the central server 120 and corresponding to a particular wireless identity transmitter 110, such as a set of rolling identifiers that may match possible rolling identifiers broadcast by the wireless identity transmitter 110 during a certain time window.

Like many modern mobile devices, the mobile proximity broadcast receiver 138 may be configured to execute third-party applications (or "apps"), and thus may include a third-party applications module 116 that may execute, manage, and otherwise perform software instructions and routines related to applications provided by various third-parties (e.g., merchants). For example, the third-party applications module 116 may receive various data from the core client module 115 to be used by various third-party applications. For illustration purposes, a third-party application related to a department store that is registered with the central server 120 may be configured to receive notifications from the core client module 115 when the user of the mobile proximity broadcast receiver 138 enters, remains, and/or leaves the department store (e.g., a geofence of the store). In an embodiment, for optimization purposes, applications or apps executing via the third-party applications module 116 may register or otherwise be configured to received notifications from the core client module 115 when particular wireless identity transmitters are within proximity, or alternatively, leave proximity. For example, applications may register in advance with the core client module 115 to receive event notifications that indicate whether a particular wireless identity transmitter enters proximity, stays within proximity (e.g., standing nearby and not moving), or leaves proximity.

The mobile proximity broadcast receiver 138 may also include an operating system and platform module 620 for performing various operations and managing circuitry, such as short-range signal receiver circuitry. In particular, the operating system and platform module 620 may include a Bluetooth Low Energy module 624 for processing communications utilizing Bluetooth LE protocols, a cellular network module 626 for processing communications corresponding to various cellular and similar long-range wireless networks (e.g., LTE-D, etc.). The operating system and platform module 620 may also include a time services component 628 that may track time and generate timestamp data, a location services component 630 that may maintain low-precision location data or alternatively more precise GPS (or A-GPS) location data, a storage component 632, and a wireless wide area network/ wireless local area network component 622 for enabling communications via WiFi or other wireless networks.

In an embodiment, the core client module 115 may request from the central server sets of wireless identity transmitter identifiers (e.g., rolling identifiers of all transmitters on an interested list, identifiers for all transmitters owned by a user, etc.). Such sets may correspond to wireless identity transmitters that are currently in use and are expected to be in use for some period of time.

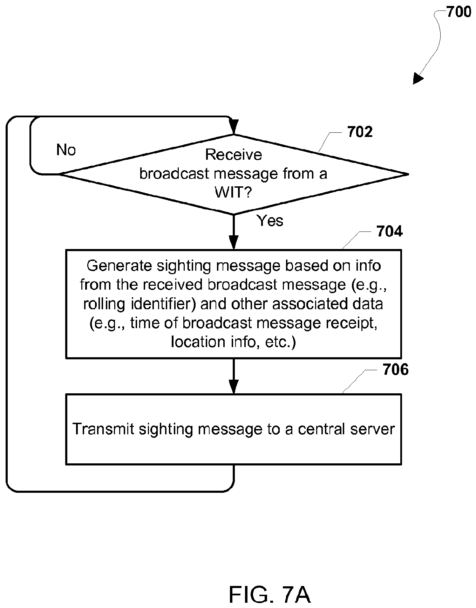

FIG. 7A illustrates an embodiment method 700 that may be implemented on a proximity broadcast receiver, such as a stationary proximity broadcast receiver or a mobile proximity broadcast receiver. In determination block 702, the proximity broadcast receiver may determine whether a broadcast message is received. For example, the proximity broadcast receiver may begin listening for broadcast advertisement packets or pairing attempts by wireless identity transmitters. As discussed above, in the passive mode/embodiment, the proximity broadcast receiver may continuously be in a monitoring mode, or begin listening for particular identifiers in response to an alert (or search activation message) received from a central server. In embodiments in which pairing takes place, the pairing may be established automatically if the proximity broadcast receiver is set to pair with any wireless identity transmitter without using a key, by using a key saved from a previous pairing with the wireless identity transmitter, or by using a key received from a central server. If the proximity broadcast receiver does not receive a broadcast message (i.e., determination block 702 = "No"), the proximity broadcast receiver may continue with the operations in determination block 702.

If the proximity broadcast receiver receives a broadcast message (i.e., determination block 702 = "Yes"), in block 704 the proximity broadcast receiver may generate a sighting message based on information from the received broadcast message and other associated data. In particular, the sighting message may include an identifier specific to the wireless identity transmitter that transmitted the received broadcast message, such as a rolling identifier (i.e., an encoded device identifier), MAC address, or other unique code that may be used to identify the particular wireless identity transmitter. In alternate embodiments, the wireless identity transmitter's identifier may be received as part of a pairing process. The other associated data may include various information related to the receipt of the broadcast message, such as the time the proximity broadcast receiver received the broadcast message, location information, the proximity broadcast receiver's identification information, related services (e.g., associated merchants), and signal strength information. In other words, the proximity broadcast receiver may associate data about present conditions (e.g., a timestamp, GPS coordinates, Cell ID of the closest base station, etc.) with the broadcast message and/or the wireless identity transmitter's identifier. This data may be stored in any of various types of data structures, such as an array with one or more identifiers associated with timestamps and GPS coordinates from when the sighting corresponding to each identifier occurred. In an embodiment, the sighting message may include authentication data, such as a digital certificate or code, that may be used by a central server to confirm the identity of the proximity broadcast receiver. For example, within the metadata of the sighting message, the proximity broadcast receiver may include a special hash code known only to the proximity broadcast receiver and the central server.

In block 706, the proximity broadcast receiver may transmit the sighting message to a central server, such as via a cellular (e.g., an LTE, 3G, or 4G network) or other network and the Internet as discussed above with reference to FIGS. 2A-2B. Upon reporting a contact event by transmitting the sighting message, the proximity broadcast receiver may promptly return to perform the operations in determination block 702 and await further broadcasts from wireless identity transmitters. This enables the proximity broadcast receiver to continuously report contact events to the central server.

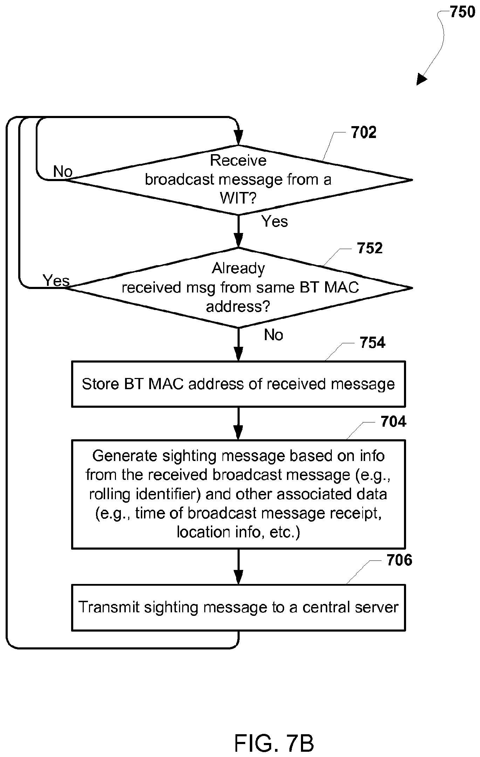

FIG. 7B illustrates an embodiment method 750 that may be implemented on a proximity broadcast receiver, such as a stationary proximity broadcast receiver or a mobile proximity broadcast receiver. The method 750 may be similar to the method 700, except that the proximity broadcast receiver may perform method 750 to ignore received broadcast messages that indicate being broadcast by a Bluetooth machine (MAC) address the proximity broadcast receiver has already encountered. In an embodiment, the method 750 may be performed in response to receiving broadcast messages transmitted by wireless identity transmitters that perform the method 450 described above. By performing the method 750, proximity broadcast receivers may avoid relaying overly redundant information to a central server via sighting messages, which may increase battery efficiency of proximity broadcast receivers configured to utilize internal batteries as well as decreasing unnecessary central server workloads.

In determination block 702, the proximity broadcast receiver may determine whether a broadcast message is received. If the proximity broadcast receiver does not receive a broadcast message (i.e., determination block 702 = "No"), the proximity broadcast receiver may continue with the operations in determination block 702. If the proximity broadcast receiver receives a broadcast message (i.e., determination block 702 = "Yes"), in determination block 752 the proximity broadcast receiver may determine whether it has already received a message from the same Bluetooth MAC address. The proximity broadcast receiver may compare a Bluetooth MAC address indicated within the received message to a list of stored Bluetooth MAC addresses corresponding to previously received Bluetooth MAC addresses. In an embodiment, the proximity broadcast receiver may compare the received MAC address to other received addresses over a period of time (e.g., a minute, an hour, etc.) or alternatively may compare the received MAC address to any/all addresses previously received.

If the proximity broadcast receiver has already received a message from the same Bluetooth MAC address (i.e., determination block 752 = "Yes"), the proximity broadcast receiver may continue with the operations in determination block 702. However, if the proximity broadcast receiver has not already received a message from the same Bluetooth MAC address (i.e., determination block 752 = "No"), in block 754, the proximity broadcast receiver may store the Bluetooth MAC address of the received message. For example, the proximity broadcast receiver may store the Bluetooth MAC address in a data table that may also contain the time of receipt, as well as other information regarding the received broadcast message. In block 704 the proximity broadcast receiver may generate a sighting message based on information from the received broadcast message and other associated data. In block 706, the proximity broadcast receiver may transmit the sighting message to a central server. Upon reporting a contact event by transmitting the sighting message, the proximity broadcast receiver may promptly return to perform the operations in determination block 702 and await further broadcasts from wireless identity transmitters.

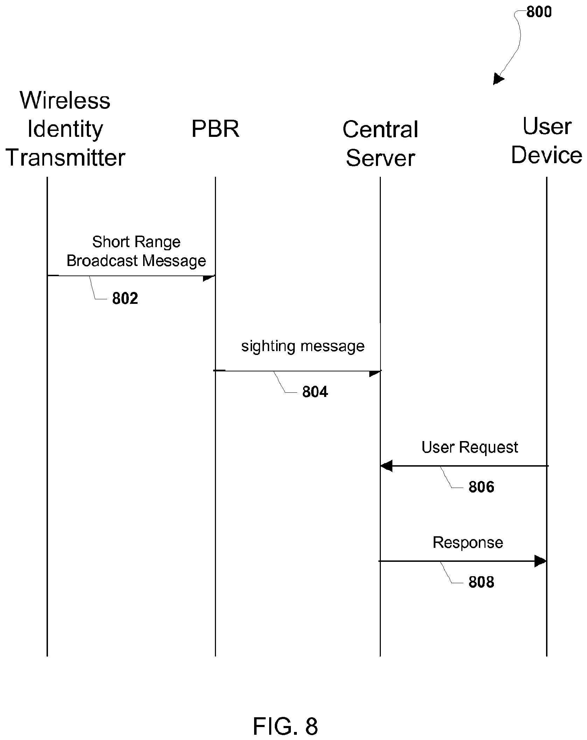

FIG. 8 is a call flow diagram 800 illustrating communications during various embodiments. A wireless identity transmitter 110 may transmit a short range broadcast message 802 (e.g., a Bluetooth LE signal) to a proximity broadcast receiver, such as a mobile proximity broadcast receiver (e.g., a mobile device, cellular phone, etc.) or various other proximity broadcast receivers as discussed above. The broadcast message 802 may contain an identifier for the wireless identity transmitter. The proximity broadcast receiver may transmit (or upload) the wireless identity transmitter's identifier along with any associated data (e.g., timestamp, GPS coordinates, Cell ID, etc.) as a sighting message 804 to a central server 120. The central server 120 may receive the sighting message 804 and store many different identifiers from one or more proximity broadcast receivers.

In some embodiments, identifiers and the associated data may be transmitted (or uploaded) to the central server without any of a user's personal data to protect privacy. In the various embodiments attempting to leverage personal mobile phones, the phone users may opt-in as mobile proximity broadcast receivers. However, these phone users may refuse to opt-in if they fear that personally identifiable data will also be transmitted to the central server. Therefore, an application for uploading received identifiers installed on these personal mobile devices (i.e., mobile proximity broadcast receivers) may prohibit transmission of personal data or other data that may identify the mobile proximity broadcast receivers.

The central server 120 may receive a user request 806 from a user device, such as a terminal 124 or a mobile device, requesting the location of a wireless identity transmitter. This request may be sent by a user after logging into an account associated with a particular wireless identity transmitter. For example, each wireless identity transmitter may be registered with an authenticated user such that a request 806 for the registered wireless identity transmitter's location can only be transmitted after the authenticated user logs into a secure account.

After receiving a user request 806, the central server 120 may search through the previously reported wireless identity transmitter identifiers that are received via sighting messages to find any matches with the identifier of the requested wireless identity transmitter. Any matches could be reported to the user in a response 808. The response 808 may also include associated data (e.g. timestamp, GPS coordinates, Cell ID) within the sighting message 804. A user may use this associated data to help locate or track the wireless identity transmitter (e.g., a mother could look for a lost child at the latest location reported for the child's wireless identity transmitter).

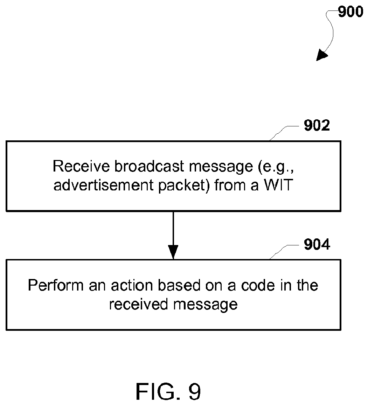

FIG. 9 illustrates an embodiment method 900 for including a type or command segment. In block 902, a proximity broadcast receiver may receive a broadcast message, such as a broadcast advertising packet, from a wireless identity transmitter (referred to as "WIT" in FIG. 9). In alternate embodiments, this message may be sent over a connection established by pairing or as part of the pairing procedure. The broadcast message may contain an identifier segment, as well as an additional segment or code, such as a type segment or command segment. The proximity broadcast receiver may perform an action based on this code in the received broadcast message in block 904. In various embodiments, this action may include any operation the proximity broadcast receiver is capable of performing. For example, the proximity broadcast receiver may assign different levels of priority to messages or identifiers based on a type segment or command segment (e.g., child safety devices have higher priority than security tags from stores). Received messages or identifiers with higher priority may be transmitted to a central server first or deleted last from a proximity broadcast receiver's local log.

EP 2 817 937 B1

A proximity broadcast receiver may handle the broadcast message or identifier differently based on a type or command segment. For example, the message may be stored locally for a certain time (e.g., various times depending on the value of the segment) prior to being transmitted to a central server. Alternatively, the message or identifier, along with any associated data such as timestamps and GPS coordinates, may be transmitted to multiple locations.

As another example, a proximity broadcast receiver may initiate various communications based on the type and/or command segments. The proximity broadcast receiver may report to particular URLs, transmit an SMS message, initiate a phone call, or establish new network connections. In various embodiments, some of these actions may be optionally disabled to protect user privacy.

In further embodiments, the proximity broadcast receiver may be configured to transmit the additional segment or other message to another network device for the other network device to take some action. For example, the proximity broadcast receiver may forward the message along with associated data to the central server. The central server may perform an action based on the additional segment in the message, such as automatically sending a message to a user without waiting for a user request.

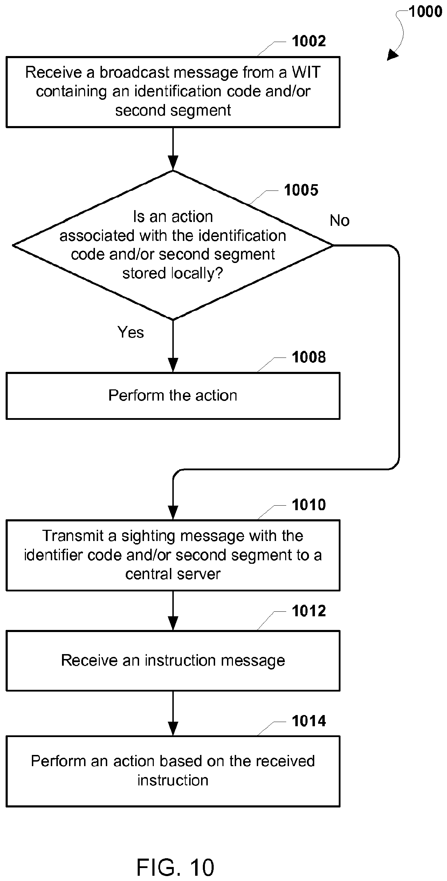

FIG. 10 illustrates an embodiment method 1000 for providing content based on proximity to a wireless identity transmitter. A proximity broadcast receiver may receive a broadcast message from a wireless identity transmitter (referred to as "WIT" in FIG. 10) containing an identification code and/or second segment in block 1002. The proximity broadcast receiver may determine whether an action associated with the identification code and/or second segment is stored locally (e.g., in the proximity broadcast receiver's memory) in determination block 1005. If an associated action is found locally (i.e., determination block 1005 = Yes), the action may be performed by the proximity broadcast receiver in block 1008.

If an associated action is not found locally (i.e., determination block 1005 = No), the proximity broadcast receiver may transmit a sighting message with the identifier and/or second segment to a central server in block 1010. In an embodiment, the proximity broadcast receiver may transmit a message to another device, such as a user device. The proximity broadcast receiver may receive an instruction message in block 1012. This instruction may be sent by the central server or other device in response to the sighting message with the identifier and/or second segment. In block 1014, the proximity broadcast receiver may perform an action based on the received instruction message, such as access content by going to a web page or other online resource. In alternate embodiments, the proximity broadcast receiver may skip the determination block 1005 and automatically proceed to either transmit a sighting message in block 1010 or attempt to perform an action stored locally.

A proximity-based content publishing system may be used for a wide range of activities. For example, teens may carry a wireless identity transmitter with them that they point to their social networking pages (e.g., Facebook®). When they are proximate to friends, the pages can be quickly accessed on proximity broadcast receivers (i.e., mobile phones configured to operate as mobile proximity broadcast receivers). Realtors may setup a web page for a home and affix to the home's signpost a wireless identity transmitter pointing to the web page so that anyone driving by the home can access that information. Stores may include wireless identity transmitters with products to provide dynamic displays such as links to coupons, consumer reports, or additional nutritional information. If a lost dog has a wireless identity transmitter on its collar, instead of trying to wrestle the dog for access to his collar, a proximity broadcast receiver may simply access the wireless identity transmitter and send a message or call the owner.

The various features and alternative actions may enable the system to have flexible and extensible functionality. The functionality could be added later as the actions taken are controlled by applications that may be updated in proximity broadcast receivers over time.

FIG. 11 illustrates an embodiment method 1100 for a proximity broadcast receiver actively searching for a wireless identity transmitter. In block 1102, the proximity broadcast receiver may receive an alert (or search activation message) with a target identifier of the wireless identity transmitter (referred to as "WIT" in FIG. 11) to be searched for and one or more search sectors from a central server. The search sectors indicated in the alert may correspond to one or more sectors to be searched. The proximity broadcast receiver may determine whether it is located within one of the search sectors in determination block 1105. For example, the proximity broadcast receiver may compare the search sectors from the alert to its current GPS coordinates or Cell ID.

If the proximity broadcast receiver is not located in one of the search sectors (i.e., determination block 1105 = No), in block 1108 the proximity broadcast receiver may continue logging identifiers, such as storing identifiers within received broadcast messages in relation to corresponding locations and times. In an embodiment, the proximity broadcast receiver may maintain a log of previous wireless identity transmitter sightings. In this embodiment, rather than storing all of the data from previous sightings on one or more remote servers (e.g., the central server), the data may remain distributed on the proximity broadcast receiver until a search or alert is active. In various embodiments, the proximity broadcast receiver may store data from previous sightings, such as the wireless identity transmitter's identifier and the location and time of the sighting (as well as any other associated data). In response to an alert, the proximity broadcast receiver may search its database for any recorded sightings for which the stored device ID matches with the target device ID provided in the alert or activation message. If a match is present, a response may be transmitted to the central server that provides data corresponding to that target device ID as described below.

24

If the mobile proximity broadcast receiver is located in one of the search sectors (i.e., determination block 1105 = Yes), the proximity broadcast receiver may monitor for the target identifier indicated by the alert in block 1110, such as by comparing the target identifier with any identifiers received in broadcast messages from proximate wireless identity transmitters. In determination block 1113, the proximity broadcast receiver may determine whether the target identifier is detected. If the target identifier is not detected (i.e., determination block 1113 = No), the proximity broadcast receiver may proceed to determination block 1119 discussed below.

If the target identifier is detected (i.e., determination block 1113 = Yes), the proximity broadcast receiver may immediately transmit a sighting message to a central server in block 706, such as by transmitting a sighting message including the target identifier, a time, and location information (e.g., GPS coordinates). The proximity broadcast receiver may determine whether a new alert with different sectors from the previous alert has been received in determination block 1119. If a new alert is received (i.e., determination block 1119 = Yes), the proximity broadcast receiver may determine whether it is located in one of the new sectors by performing the operations in determination block 1105. If no new alert is received (i.e., determination block 1119 = No), the proximity broadcast receiver may continue monitoring for the target identifier in block 1110.

In further embodiments, the proximity broadcast receiver may determine the search sectors for which it is responsible. For example, a cell phone that has opted in may install a tracking application for finding wireless identity transmitters. This application may develop a list of sectors in which a search should be conducted by monitoring the cell phone's location over time. The application may then search for wireless identity transmitters based on alert messages that list the search sectors. Thus, in this embodiment, the alerts (or search activation message) may be broadcast or multicast by a central server to all proximity broadcast receivers identifying the sectors being searched, and the receivers themselves may determine whether they should enter the active search mode based upon their current location.

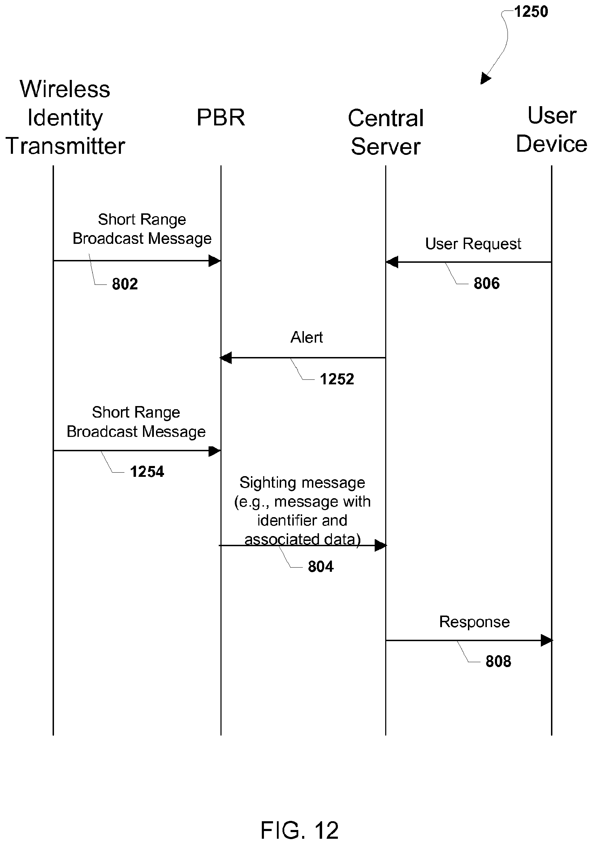

FIG. 12 is a call flow diagram 1250 illustrating communications related to an alert 1252 during various embodiments. In general, an alert 1252 may be related to an active search as described above. A user request 806 may be sent to a central server from a user device, such as a terminal or mobile device. The user request 806 may request the location of a wireless identity transmitter and may include a code or identifier associated with the wireless identity transmitter. The central server may transmit an alert 1252 (or search activation message) to one or more proximity broadcast receivers. The alert 1252 may contain a representation of the identifier of the requested wireless identity transmitter. For example, the alert 1252 may contain a rolling identifier that is secure and does not provide the identity of the wireless identity transmitter or its user. The alert 1252 may also contain pairing data (e.g., a shared secret or link key) that may be used to pair with the requested wireless identity transmitter.

As mentioned above, in an embodiment the central server may transmit the alert to a certain subsets of proximity broadcast receivers, such as proximity broadcast receivers located within a particular geographic sector where the requested wireless identity transmitter is likely or suspected to be. For example, the user request 806 may specify the last known location of the requested wireless identity transmitter, and the central server may transmit the alert 1252 to proximity broadcast receivers in sectors near that location.

Proximity broadcast receivers receiving the alert 1252 may monitor for broadcast messages 802 (e.g., broadcast advertisements) with the identifier of the requested wireless identity transmitter. Alternately, the proximity broadcast receiver may attempt to pair with or remain receptive to pairing by the targeted wireless identity transmitter. If a proximity broadcast receiver comes within range of the wireless identity transmitter's radio, the devices may pair. As part of the pairing process the wireless identity transmitter may transmit a short-range radio message 1254 including the device's identifier information. The proximity broadcast receiver may then transmit a sighting message 804 to the central server. In other words, the proximity broadcast receiver may upload associated data, such as timestamp, GPS coordinates, proximity broadcast receiver identification, and/or Cell ID, that is associated with the wireless identity transmitter or its identifier. The central server may transmit a response 808 to the user device informing the user of the associated data from the proximity broadcast receiver's contact with the searched for wireless identity transmitter.

Various embodiments may combine the active searching method illustrated in FIG. 12 with the passive searching model discussed above. For example, the proximity broadcast receiver may have previously received a short range broadcast message 802 (e.g., a Bluetooth LE radio signal) from the wireless identity transmitter. This message 802 and any associated data (e.g., timestamp, GPS coordinates, Cell ID, etc.) may be stored locally on the proximity broadcast receiver or forwarded to the central server performing tracking services. When a user request 806 is received, the central server or proximity broadcast receiver may search a database corresponding to prior received broadcast messages 802 from wireless identity transmitters (e.g., broadcast messages, messages containing pairing reports, etc.) and associated data in addition to initiating an active search by transmitting the alert 1252. The response 808 may include all data resulting from the active search and associated with any prior messages 802.

In other embodiments, proximity broadcast receivers may be configured to transmit sighting messages for all broadcast messages received, regardless of having received an alert message. In other words, proximity broadcast receivers may transmit sighting messages for the central server to detect whether a target identifier is included and therefore the wireless identity transmitter targeted by an active search has been sighted.

FIG. 13 illustrates a diagram 1300 of various modules within a central server 120. The various modules and components are described below in the context of modules, components, and/or elements within a central server 120. However, in various embodiments, the central server 120 may include or be connected to individual computing devices, server blades, or other units that may perform the operations associated with the various modules and/or components described below.

As described above with reference to FIG. 1, the central server 120 may be configured to receive, store, and otherwise process data corresponding to wireless identity transmitters. For example, the central server 120 may be configured to exchange communications with various devices via the Internet 103, such as proximity broadcast receivers 142, mobile proximity broadcast receivers 138, third-party systems 101, and other support systems and/or services 102.

The central server 120 may include several components 104-109 to perform various operations to process data, such as received from proximity broadcast receivers 142, 138, third-party systems 101, or other support systems and/or services 102. In particular, the central server 120 may include a core component 108 that may process sighting messages, execute an alert or notice engine module, handle application programming interface (API) commands, and exchange data with other components within the central server 120. The core component 108 may include a data layer module 1302 that may include units for storing short-term data and third-party specific data. The core component 108 may also include an alert engine module 1304 for generating alert messages for transmissions to proximity broadcast receivers and initiating searches of various target wireless identity transmitters. The core component 108 may further include a data anonimizer module 1306 that may generate generic, anonymous, or otherwise processed data based on privacy policies or profile preferences of users. For example, the data anonimizer module 1306 may strip personal information from return messages transmitted to a proximity broadcast receiver associated with a store so that a consumer user of a wireless identity transmitter is not identified to the store, but the fact that the user is within the store is still reported to the store. The core component 108 may also include a privacy manager module 1308 that may maintain privacy permission information for various users. For example, the privacy manager module 1308 may include a database of privacy parameters provided by users at registration.

The core component 108 may also include a search manager module 1310 for assisting in organizing and administering searches and an authorization system module 1312. The core component 108 may further include a sightings resolver module 1314 that may be utilized by the central server 120 for identifying wireless identity transmitters associated with broadcast messages reported within received sighting messages from proximity broadcast receivers 142, 138. The core component 108 may include an API module 1316 that may include functions and interfaces for initiating operations, a sightings aggregator module 1318 for compounding various sighting messages over a period for transmissions in consolidated form to merchants, third-parties, and other services. The core component 108 may also include a network module 1320 for transmitting and receiving various communications with devices, such as proximity broadcast receivers 142, 138 and third-party systems 101 via the Internet.

The central server 120 may also include a data warehouse component 104 that may store long-term data (e.g., archived user data, past location information, etc.). The data warehouse component 104 may include various databases for storing information pertinent to users of wireless identity transmitters, such as profile information provided by users via registration websites. The data warehouse component 104 may be configured to exchange data with the data layer module 1302 of the core component 108. The central server 120 may also include an operations, administration, and management (or OA & M) component 105 that may process and/or store software associated with user portal accesses, scripts, and tools (e.g., software utilities, routines, etc.). The OA & M component 105 may be configured to exchange data with the core component 108.

The central server 120 may also include a developer portal component 106 that may store developer account data and perform registration, account management, and alert (or notice) management routines associated with developers, such as vendors or merchants that register to interact with users of wireless identity transmitters 110. The central server 120 may also include a user portal component 109 that may store user account data and perform registration, account management, and search routines associated with users, such as persons associated with wireless identity transmitters. The user portal component 109 and developer portal component 106 may be configured to exchange data with the authorization system module 1312 of the core component 108. The central server 120 may also include a rolling identifier (or ID) resolver component 107 that may store factory keys associated with wireless identity transmitters 110 as well as perform operations, software, or routines to match encrypted, encoded, rolling, or otherwise obfuscated identification information within received sighting messages with affiliated user data. The rolling identifier (or ID) resolver component 107 may be configured to exchange data with the sightings resolver module 1314 of the core component 108.

In various embodiments, the modules and components described with reference to FIG. 13, such as the rolling ID resolver component 107, may be performed or otherwise enabled by software instructions, applications, routines, threads, circuitry, or hardware units.

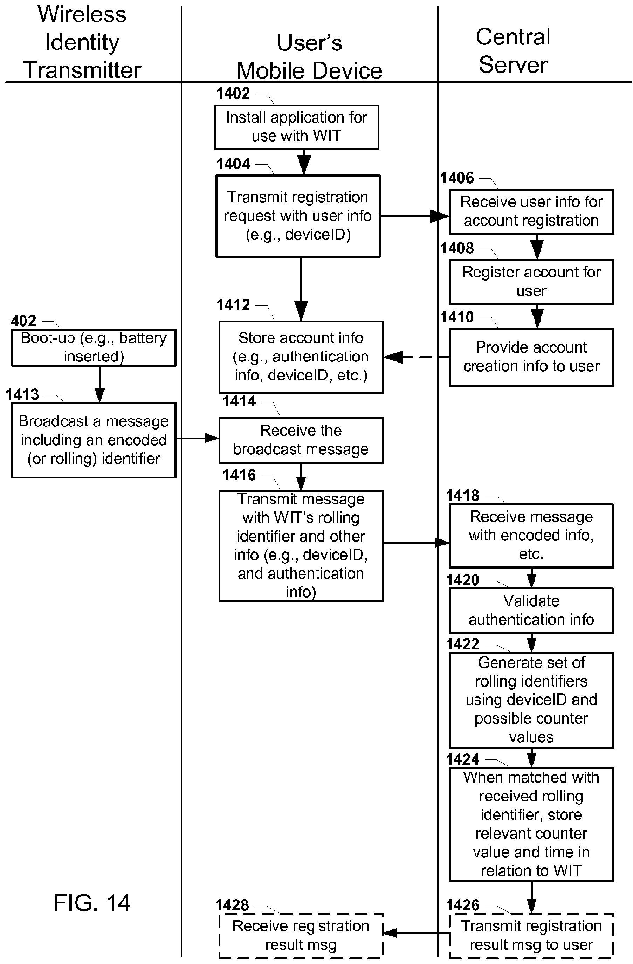

FIG. 14 illustrates a wireless identity transmitter registration process for use in various embodiments. In general, before broadcast messages may be processed by a central server, the central server may require that wireless identity transmitters and their users be registered with the central server. For example, before any tracking, searching, or other location-based activities related to a wireless identity transmitter can be initiated, the central server must be able to determine the users associated with the various wireless identity transmitters circulating in the world. Registration may create links between identifiers transmitted by wireless identity transmitters in broadcast messages, the wireless identity transmitters, and their users. For example, in order to transmit a notification to a missing child's parents that the child has been found, relayed obfuscated (or encoded) identifiers must be matched to account information that indicates the parents' cell phone numbers as stored in relation to a registered user account.

In particular, through registration, a timing mechanism may be synchronized between each wireless identity transmitter and the central server (i.e., a counter). With such a counter, a wireless identity transmitter and the central server may encode (or roll) and decode identifiers respectively, keeping the identity associated with the wireless identity transmitter (and its users) concealed and private. The most appropriate time to synchronize such a timing mechanism or counter may be during a device registration and/or account creation process as described below. For the purpose of FIG. 14, a mobile device, such as a smartphone, is described as being used by a user to perform account creation and registration operations (e.g., the mobile device accesses a web portal to register with the central server, etc.). However, any computing device connected to the Internet and capable of exchanging communications with the central server via a registration web portal or website may be relevant.

In block 1402, a user's mobile device (e.g., an iPhone, Android, tablet device, etc.) may install an application for use with wireless identity transmitters. Such an application (or "app") may execute on the mobile device's processor as a background service or alternatively may be activated for selective use by the user. As described throughout this disclosure, such an application may enable the mobile device to process short-range broadcast messages from proximate wireless identity transmitters, such as by identifying received signals as broadcast messages and relaying sighting messages having location information to the central server in response. In block 1404, the mobile device may transmit a registration request with user information (e.g., a device identity or "deviceID"). The registration request may be sent to the central server via Internet communications with a web portal, web site, or web server controlled or otherwise accessible by the central server. In other words, the mobile device may invoke the registration process or by providing user information (e.g., device ID) through the installed app by providing the device ID (deviceID) and other information the central server may utilize to bind the registration request to an account. For example, the user's mobile device may access a registration website, receive inputs from the user, and transmit the user input as data to the registration website for use by the central server as described above with reference to FIG. 13. In an embodiment, the user information may include personal information about the user, such as name, address, contact information (e.g., social network sites, cell phone number, email address, telephone number, etc.) age, and other demographic information, as well as identifying information about wireless identity transmitters and/or proximity broadcast receivers that may be associated with the user's account. For example, the user information transmitted to the central server may include the serial number on a wireless identity transmitter and/or a confirmation code produced by the mobile device in response to installing the application with the operations in block 1402. The user information may also include preference information, such as the user's preferred retails stores, product lines, and areas to eat or consume. The user information may further include privacy permissions that indicate how personal information may be distributed or used by the central server. In an embodiment, users may register as anonymous users, such that the central server does not store any identifying information about the users. For example, an account may be registered that is linked to a non-descript post office box, a disposable cellular telephone number, or other contact information that does not directly identify the user or the holder of the account. This may be important for those who may choose to utilize services provided by the central server, but who are concerned about leaked private or identifying information. In block 1412, the user's mobile device may store account information, such as authentication information (e.g., codes, messages) from the central server or device ID associated with an owned wireless identity transmitter.

In block 1406, the central server may receive the user information for account registration. In block 1408, the central server may register an account for the user. For example, the central server may store the user's information, including provided device identifications, in a database of all registered users. In block 1410 the central server may provide account creation information to the user. The account creation information may include an authentication code or other information the user's mobile device may store for future use. For example, the central server may display confirmation of account creation on a website accessible by the user's mobile device or alternatively may transmit a confirmation signal, text message, email, or other communication to the user's mobile device.

In block 402, the wireless identity transmitter boots-up, such as in response to the user inserting a battery. When the wireless identity transmitter boots, a nonce or counter value may be initialized. For example, the wireless identity transmitter may begin to increment a value that represents the passage of time, starting from a zero value. In block 1413, the wireless identity transmitter may broadcast a message (i.e., a broadcast message) that includes an encoded (or rolling) identifier. For example, the wireless identity transmitter may begin transmitting broadcast messages every few seconds. The wireless identity transmitter may generate rolling identifiers with the embodiment methods described below. In general, the broadcast message may include a payload that includes data generated by performing a pseudo-random function. For example, the wireless identity transmitter may perform a pseudo-random function to generate encoded data based on input values of the wireless identity transmitter's device ID, a nonce or counter value, and a secret key, seed, or other value known only to the wireless identity transmitter and the central server. In an embodiment, the pseudo-random function may be a polynomial time computable function that may utilize a randomly selected seed value only known to the wireless identity transmitter and the central server, such that the pseudo-random function may be computationally indistinguishable from a random function defined on the same domain with output to the same range as the pseudo-random function. In an embodiment, the keyed-hash Message Authentication Code (HMAC) or the cipher-based Message authentication Code (CMAC) may be used as the pseudo-random function.

In an embodiment, the wireless identity transmitter may be required to be activated within a predefined number of seconds within the time the mobile device begins the registration process with the operations in block 1404. In other words, once the wireless identity transmitter begins incrementing its nonce or counter value, the user must register with the central server within a certain period. This enables the central server to try at only a certain number of values when trying to determine the nonce or counter value at the wireless identity transmitter during registration.

In an embodiment, the wireless identity transmitter may indicate an initial broadcast by adjusting data within a broadcast message's payload. For example, the wireless identity transmitter may change a bit within a broadcast message that the central server may recognize as indicating an initialization time period for the wireless identity transmitter. If there are initialization indicators within payloads, the central server may expedite comparisons between received payloads and stored payloads by avoiding comparisons to payloads corresponding to already registered (or recognized) wireless identity transmitters within a central server lookup data table.

In block 1414, the user's mobile device may receive the broadcast message. In other words, based on the installed application (or app), the mobile device may function as a mobile proximity broadcast receiver. An installed application may, such as the app installed with the operations in block 1402, may be waiting to receive such a broadcast message in response to initiating registration operations with the central server via the registration request. In block 1416, the mobile device may transmit the wireless identity transmitter's rolling identifier and other information, such as the stored device ID and authentication information. In an embodiment, the mobile device may extract encoded information from the received broadcast message, such as by using text comparison and/or parsing operations. For example, the mobile device may perform a most-significant bit operation.

In block 1418, the central server may receive the message with the encoded information, as well as the authentication information and the device ID. In block 1420, the central server may validate authentication information, such as in the received message from the mobile device. In particular, the central server may compare the authentication information to information generated in the operations in blocks 1408-1410. In block 1422, the central server may generate a set of rolling identifiers using the device ID and possible nonce or counter values. The central server may compare the encoded identifiers of the set with the rolling identifier received from the mobile device. In an embodiment, the central server may compute a set of encoded data by using a pseudo-random function, such as described above, along with the device ID and a number of nonce or counter values. For example, the central server may execute the pseudo-random function with a seed shared with wireless identity transmitters, the device ID indicated by the mobile device, and many nonce or counter values, starting with 0. In block 1424, when the central server matches the received rolling identifier to one of the rolling identifiers in the generated set, the central server may store relevant nonce or counter value and time in relation to the WIT. The central server may use the nonce or counter value used to generate the matching rolling identifier to sync with the nonce or counter running on the wireless identity transmitter. In an embodiment, the central server may store an indicator that describes the wireless identity transmitter as having been successfully registered and/or synced. In optional block 1426, the central server may then transmit a registration result message to the user, such as by transmitting a message to the mobile device. The registration result message may indicate whether or not the central server was able to match the received encoded identifier with a generated identifier. In optional block 1428, the mobile device may receive the registration result message. In an embodiment, the registration result message indicates that the registration process failed (e.g., the received broadcast message received by the mobile device did not correspond to the user's wireless identity transmitter), the mobile device may re-attempt the registration by receiving and relaying another broadcast message.

The operations described above, particularly within blocks 1413-1424, assume that message processing operations performed by the various devices, as well as any propagation delay, may be much smaller than the time required to increment (or update) the nonce or counter value at the wireless identity transmitter. This ensures that the nonce or counter values at the wireless identity transmitter and central server do not differ by more than 1.

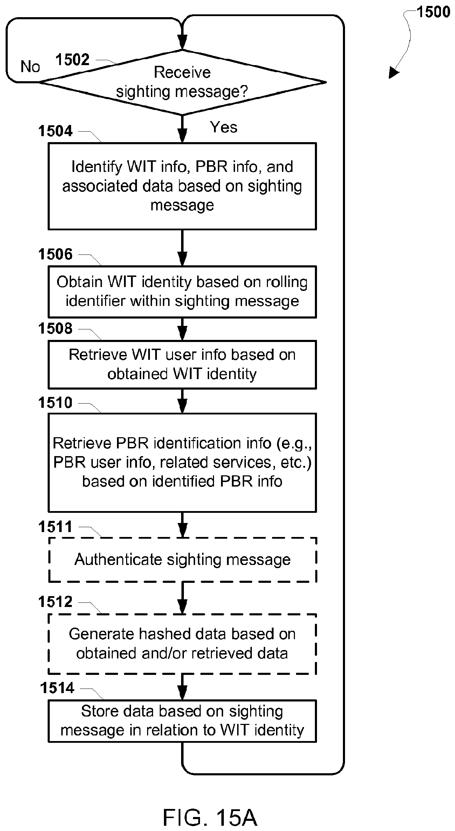

FIG. 15A illustrates an embodiment method 1500 for a central server to process sighting messages received from proximity broadcast receivers. As described above, the central server may be configured to utilize various modules, components, circuitry, and software to process sighting messages. In determination block 1502, the central server may determine whether a sighting message is received. The central server may evaluate a receiving circuit, buffer, queue or other indicator to determine when messages are received from various devices, such as proximity broadcast receivers. In an embodiment, the central server may utilize a network module as described above to determine whether a sighting message is received. In general, sighting messages may be received via long-range communications, such as packets transmitted via a cellular network over the Internet. If the central server does not receive a sighting message (i.e., determination block 1502 = "No"), the central server may continue with the operations in determination block 1502.

If the central server receives a sighting message (i.e., determination block 1502 = "Yes"), in block 1504 the central server may identify wireless identity transmitter information, proximity broadcast receiver information, and associated data based on the sighting message. The central server may evaluate, parse, and otherwise make accessible various data and information segments within the received sighting message. For example, the central server may parse the sighting message to identify an included broadcast message from the wireless identity transmitter. As another example, the central server may identify encoded data corresponding to a wireless identity transmitter identity (i.e., rolling identifier), proximity broadcast receiver identification information (e.g., a receiver ID), location information, timestamp information, sensor data (e.g., accelerometer sensor data, etc.), identifiers of applications (or apps) associated with a proximity broadcast receiver (e.g., a list of installed applications, an identifier for a relevant app executing on the proximity broadcast receiver, etc.). In an embodiment, the central server may perform the operations of block 1504 with a sightings resolver module as described above.

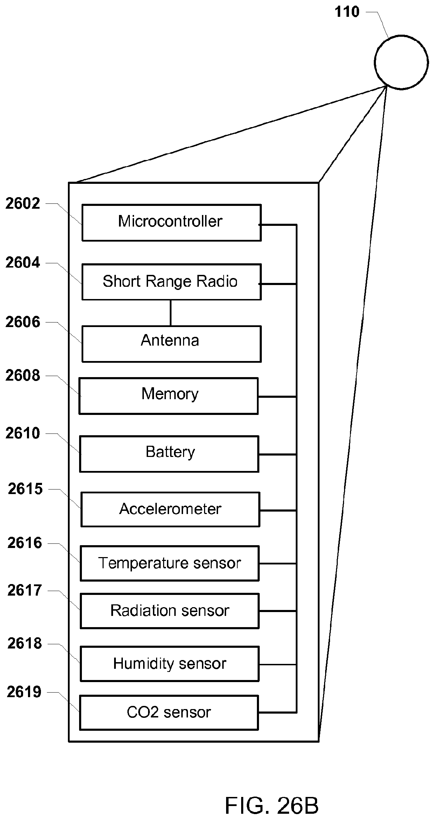

In block 1506, the central server may obtain the wireless identity transmitter identity based on the rolling identifier within the sighting message. The central server may perform operations to decode, descramble, decrypt, or otherwise make accessible the rolling identifier. For example, the central server may perform operations to apply a secret key or decoding algorithm to obtain the identity of the wireless identity transmitter. In an embodiment, the operations of block 1506 may be performed by the central server by way of a rolling ID resolver component as described above. For example, the central server may cause a sightings resolver module to exchange data with the rolling ID resolver component to obtain a decoded wireless identity transmitter identifier. Embodiment operations to identify the wireless identity transmitter based on a sighting message that includes a rolling identifier are described below with reference to FIG. 26.

In block 1508, the central server may retrieve the wireless identity transmitter user information based on the obtained wireless identity transmitter identity. For example, the central server may retrieve user account information related to the wireless identity transmitter, such as demographics information, stored data indicating previous behaviors (e.g., travel paths, location history, etc.). In an embodiment, the operations of block 1508 may be performed by the central server by way of an authorization system module as described above. For example, the central server may cause the authorization system module to exchange wireless identity transmitter identity information with a user portal component to obtain user information as saved within user registration databases.

In block 1510, the central server may retrieve proximity broadcast receiver identification information, such as proximity broadcast receiver user information and related services, based on the identified proximity broadcast receiver information. For example, the central server may retrieve the merchant identity associated with the proximity broadcast receiver that transmitted the received sighting message, the tracking services the proximity broadcast receiver is registered to participate in, as well as any other relevant information to the proximity broadcast receiver. The central server may retrieve email addresses, MAC addresses, phone numbers, and other contact information related to a user of related proximity broadcast receiver based on the information within the sighting message. For example, the central server may determine the user contact information associated with a proximity broadcast receiver that may be used for subsequent transmissions from the central server, such as emails or SMS text messages that indicate proximity to an item of interest. In an embodiment, the central server may determine the identity of a user of a smartphone that is configured to perform operations of a mobile proximity broadcast receiver. In an embodiment, the operations of block 1510 may be performed by the central server by way of an authorization system module as described above. For example, the central server may cause the authorization system module to exchange proximity broadcast receiver information with a developer (or user) portal component to obtain information about related registered services (e.g., merchants, stores, vendors, services, etc.) as saved within developer registration databases.

In optional block 1511, the central server may authenticate the sighting message. Based on authentication information within the received sighting message, the central server may perform authentication operations that confirm the legitimacy of the sighting message as coming from a known or otherwise valid proximity broadcast receiver. As described above, sighting messages may include data, such as secret codes, certificates, or hash data, that can be used to confirm the identities of valid proximity broadcast receivers. As third-parties may attempt to spoof proximity broadcast receivers associated with registered services (e.g., a nefarious spammer may attempt to imitate a merchant's store proximity broadcast receiver by sending a fraudulent sighting message), the central server may check for authentication information that confirms the information within the sighting message is useful and related to a registered service (e.g., a registered merchant, a valid developer, or other party that deploys legitimate proximity broadcast receivers). For example, the central server may detect obscured header information within the sighting message that relates to a merchant established within the central server as a registered developer. When the sighting message does not include authentication information expected by the central server, such as a special code that all proximity broadcast receivers within a certain building possess, or does include authentication information that does not match information stored in the central server, the central server may disregard the sighting message and all included information. For example, a sighting message with out-of-date or incomplete authentication information may be disregarded by the central server, or alternatively stored in a list for potentially fraudulent proximity broadcast receivers.

In optional block 1512, the central server may generate hashed data based on the obtained and/or retrieve data. In an embodiment, the operations of optional block 1512 may be performed by the central server by way of a data anonimizer module as described above. In block 1514, the central server may store data based on the sighting message in relation to the wireless identity transmitter identity. For example, the central server may store identified associated data from the sighting message in a database in relation to the wireless identity transmitter's decoded identity. In an embodiment, the operations of block 1514 may be performed by the central server by way of a data layer module as described above.

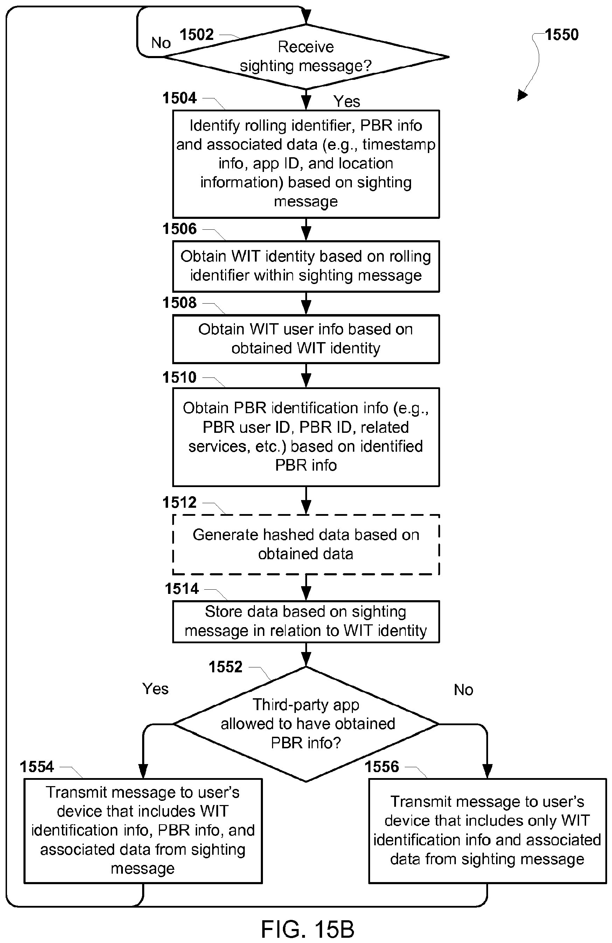

FIG. 15B illustrates an embodiment method 1550 for a central server to process sighting messages received from proximity broadcast receivers. The method 1550 is similar to the method 1500 described above, except that the central server may perform the method 1550 to transmit messages for use by a third-party application executing on mobile device carried by a user. As described above, various messages, such as return messages, alerts (or search activation messages), may be transmitted by the central server to various recipients, such as mobile devices associated with a user. For example, the central server may transmit messages to a user's tablet, smartphone, wireless receiver device, or other computing device. A recipient may also include an application or app executing on a mobile device. In an embodiment, the central server may also transmit messages to other third-party recipients or devices, such registered services that may include EMT, fire, local police, retail store, merchant computing devices, and ad servers.

Messages transmitted by the central server in response to receiving sighting messages may be transmitted to inform devices, such as a mobile phone or mobile proximity broadcast receiver carried by a user, of the location of proximity of known wireless identity transmitters. For example, when a proximity broadcast receiver, such as a stationary proximity broadcast receiver within a retail store, relays a broadcast message from a wireless identity transmitter associated with a user, the central server may respond by transmitting a message back to a mobile device of the user indicating the user is near the store's receiver device. Further, a third-party application running on the user's device may use information within the message. For example, a retail store app running on a user's smartphone may receive a notice that the user has moved within proximity of a display area within proximity of a retail store building. In various other embodiments, the third-party applications may be utilized to track owned items associated with wireless identity transmitters. For example, a particular third-party application may perform a ring tone when the user is within proximity of a searched for missing child.

In determination block 1502, the central server may determine whether a sighting message is received. If the central server does not receive a sighting message (i.e., determination block 1502 = "No"), the central server may continue with the operations in determination block 1502. If the central server receives a sighting message (i.e., determination block 1502 = "Yes"), in block 1504 the central server may identify wireless identity transmitter information, proximity broadcast receiver information, and associated data based on the sighting message. In block 1506, the central server may obtain the wireless identity transmitter identity based on the rolling identifier within the sighting message. In block 1508, the central server may retrieve the wireless identity transmitter user information based on the obtained wireless identity transmitter identity. In block 1510, the central server may retrieve proximity broadcast receiver identification information, such as proximity broadcast receiver user information and related services, based on the identified proximity broadcast receiver information. In optional block 1512, the central server may generate hashed data based on the obtained and/or retrieve data. In block 1514, the central server may store data based on the sighting message in relation to the wireless identity transmitter identity.

In determination block 1552, the central server may determine whether a third-party application (or app) is allowed to have obtained proximity broadcast receiver information. In other words, based on data stored in the central server that is associated with the user of the wireless identity transmitter, the central server may detect any registered services or third-party applications that are associated with the user's devices. For example, the central server may evaluate database information to identify the user has installed a third-party application on his/her smartphone that corresponds to a retail store. The proximity broadcast receiver information may include proximity broadcast receiver identification (e.g., an ID code or identifier) and the user identity of the proximity broadcast receiver. In an embodiment, the central server may identify whether third-party applications are allowed such information based on the third-party's developer rights, such as indicated when the third-party registered as a developer or registered service, or alternatively based on the user's permission settings stored within the user's profile within the central server. In an embodiment, the central server may use application identification information provided within the received sighting message to determine whether the third-party applications on the user's device may receive proximity broadcast receiver information. For example, the sighting message may contain indicators of applications (e.g., app IDs) that correspond to the sighting message and thus are allowed to receive any proximity broadcast receiver information from the central server.

If the third-party app is not allowed to have the obtained proximity broadcast receiver information (i.e., determination block 1552 = "No"), in block 1556 the central server may transmit a message to the user's device that includes only wireless identity transmitter identification information and associated data from the sighting message. For example, the message transmitted by the central server may include the obtained wireless identity transmitter identity, user information, timestamp data, and location information from the sighting message. If the third-party app is allowed to have the obtained proximity broadcast receiver information (i.e., determination block 1552 = "Yes"), in block 1554 the central server may transmit a message to the user's device that includes wireless identity transmitter identification information, proximity broadcast receiver information, and associated data from the sighting message. For example, the message transmitted by the central server to the user's smartphone may include indicators of the obtained proximity broadcast receiver identification (e.g., serial code, group affiliation, merchant category, etc.). The central server may then continue with the operations in determination block 1502. In an embodiment, the central server may utilize an alert engine module, such as described above with reference to FIG. 13, to transmit and/or generate messages for transmission to various devices.

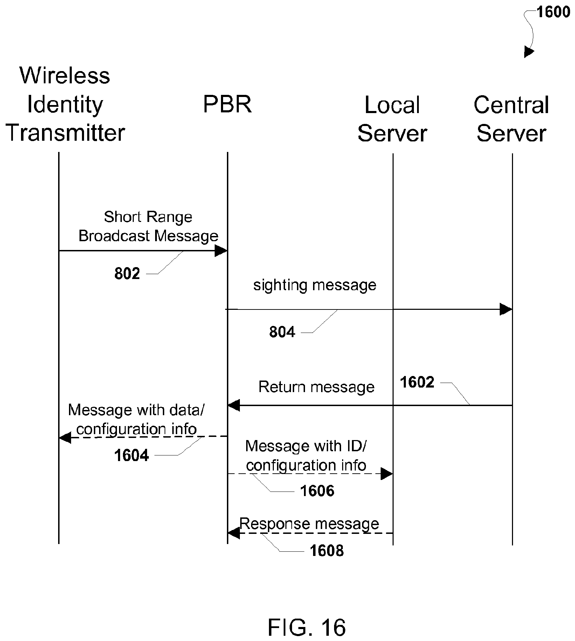

FIG. 16 illustrates an embodiment call flow diagram 1600 illustrating communications between a wireless identity transmitter, a proximity broadcast receiver, and a central server. As described above, the wireless identity transmitter may periodically transmit a short-range broadcast message 802 via a short-range radio. When within signal range of the broadcast message 802, the proximity broadcast receiver may receive the broadcast message 802 using a similar short-range radio. The broadcast message 802 may be processed by the proximity broadcast receiver and related data may be relayed to the central server as a sighting message 804. In an embodiment, the sighting message 804 may include the broadcast message, identification information of the proximity broadcast receiver and/or the wireless identity transmitter, encrypted information the proximity broadcast receiver is incapable of decoding, and other information related to the reception of the broadcast message 802. In an embodiment, the sighting message 804 may be transmitted over various wireless or wired networks that may be configured to communicate via Internet protocols.

The central server may receive and process the sighting message 804. When the central server determines that the sighting message 804 requires a response based on the information in the sighting messages (e.g., metadata requesting a response, the sighting message relates to a wireless identity transmitter that needs to receive upgraded firmware, etc.), the central server may generate and transmit a return message 1602 to the proximity broadcast receiver. In various embodiments, the return message 1602 may contain configuration information, identification information describing the wireless identity transmitter, or other data as described above. The proximity broadcast receiver may receive and process the return message 1602. Based on the data within the return message 1602, the proximity broadcast receiver may optionally transmit a message 1604 to the wireless identity transmitter that may contain configuration information and other data from the central server. The wireless identity transmitter may selectively accept transmissions such as the message 1604 using operations as described above with reference to FIGs. 4.

As another option, the proximity broadcast receiver may transmit a message 1606 to a local server based on the return message 1602. The message 1606 may contain wireless identity transmitter identification information, configuration information, software routines, and various other data from the return message 1602 for storage, processing, and otherwise additional use by the local server. Based on the message 1606, the local server may in turn transmit an optional response message 1608 to the proximity broadcast receiver that may include software instructions, configuration data, or other data generated in response to receiving the message 1606.

In an embodiment, the central server may also transmit messages directly to the local server (not shown) that include configuration information and other data. For example, the sighting message 804 from the proximity broadcast receiver may provide the contact information for the local server which the central server may utilize for subsequent communications.

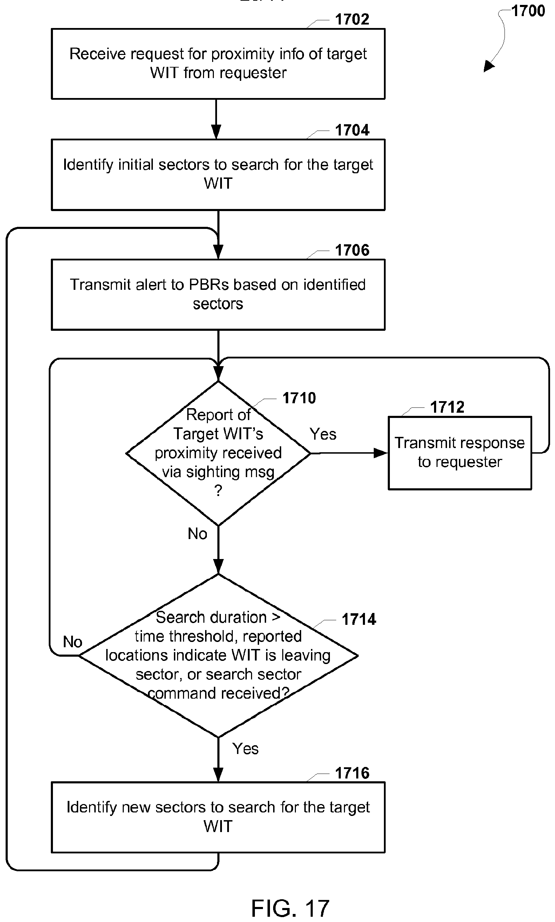

FIG. 17 illustrates an embodiment method 1700 for a central server activating a search by sending activation messages to proximity broadcast receivers in particular sectors. In block 1702, the central server may receive a request, such as a user request described above, for proximity information of a particular wireless identity transmitter (i.e., the target wireless identity transmitter). In other words, the requester may want to locate the target wireless identity transmitter. The central server may identify one or more initial sectors to search for the target wireless identity transmitter in block 1704. The initial sectors may be identified in various ways. For example, the request may include a location (e.g., the last known location of the target wireless identity transmitter) and the central server may identify the sectors around the location. Alternatively, the target wireless identity transmitter may have sectors associated with it based on prior tracking attempts or data (e.g., GPS coordinates, Cell ID) received from proximity broadcast receivers based on prior sightings.

The central server may transmit an alert to proximity broadcast receivers based on the identified sectors in block 1706. For example, the central server may transmit the alert to proximity broadcast receivers that are currently located in the identified sectors, that frequently travel in the sectors (e.g., mobile proximity broadcast receivers known to go into the sectors), that are near or have ever previously been near the sectors, and/or that are predicted to be in the sectors in the future. In various embodiments, the alert may indicate that the central server has initiated or activated a search. In alternate embodiments, the alert message may be available on a separate server or other network location and the proximity broadcast receivers may periodically query a URL where the alert may be maintained. For example, cellular phones often periodically check in for a variety of data, such as clock and other network settings, so proximity broadcast receivers may be configured to also check for alerts the same way or on the same connection used for these other data checks. In an embodiment, the central server may transmit such alert messages such that the recipient proximity broadcast receivers may not be able to identify the target wireless identity transmitter. For example, the alert message may include an encoded, encrypted, or otherwise obscured identifier for the target wireless identity transmitter that only the central server can access, thus keeping the search anonymous to all proximity broadcast receivers and other devices, except for the requester. In another embodiment, the operations in block 1706 may be optional when mobile proximity broadcast receivers are configured to automatically relay broadcast messages received from the target wireless identity transmitter, regardless of whether the mobile proximity broadcast receivers have received any alert or search activation message. For example, mobile proximity broadcast receivers may transmit sighting messages to the central server that include any broadcast messages received from wireless identity transmitters within proximity.

Upon transmitting the alert, in determination block 1710 the central server may determine whether a report of the target wireless identity transmitter's proximity is received via a sighting message. In other words, the central server may stand by to receive sighting messages that indicate the target or searched for wireless identity transmitter has been within proximity of a proximity broadcast receiver and thus has been located. The central server may decode, decrypt, or otherwise access a rolling identifier within the received sighting message and determine whether it matches the identity of the target wireless identity transmitter. If a report of the target wireless identity transmitter proximity is received (i.e., determination block 1710 = "Yes"), then the central server may transmit a response to the requester with any data received from proximity broadcast receiver(s) in block 1712. The process of standing by and receiving sighting messages (or other location reports) from proximity broadcast receiver(s) in determination block 1710 and transmitting responses to one or more requesters in block 1712 may continue so long as the alert remains in effect (e.g., until the child is found and the alert is cancelled by the requesting authority), or until the central server stops receiving proximity reports of the target wireless identity transmitter (i.e., determination block 1710 = No).

In determination block 1714 and block 1716 the central server may be configured to adjust the search sector to expand the search area, shift the search area from sector to sector to follow a moving target wireless identity transmitter, and respond to commands to move, expand or focus the search received from the requester or an authority. In this manner the central server can actively adjust the search sectors by notifying proximity broadcast receivers in order to increase the likelihood that a device may be located and tracked. In determination block 1714, the central server may determine whether the search duration exceeds a time threshold, whether there are reported locations indicating the target wireless identity transmitter is leaving the sector, or whether a search sector command is received. So long as the search duration or duration since a last report is less than the predetermined time threshold, the target wireless identity transmitter does not move out of the search sector and/or the central server is not commanded to adjust the search area (i.e., determination block 1714 = No), the central server may continue standing by for and receiving proximity reports via sighting messages in determination block 1710.

In an embodiment, if the central server fails to receive or stops receiving proximity reports via sighting messages (e.g., indications that the requested wireless identity transmitter has been paired with or was within proximity of a proximity broadcast receiver) regarding the target wireless identity transmitter (i.e., determination block 1710 = No), the central server may determine whether the time since the search began or the last received report exceeds a predetermined threshold in determination block 1714. This predetermined threshold may be set by the requester or an authority at the time the search was activated, such as depending upon a suspected mode of transportation. For example, the search may be activated in a sector surrounding a last known location of a child, but be configured to expand within 15 minutes if the abductor is suspected to be traveling on foot or expand within five minutes if the abductor is suspected to be traveling by car. In this manner, the central server may expand the search area automatically. If the central server determines that the preset duration since the search was initiated or a last location report was received has expired (i.e., determination block 1714 = Yes), the central server may identify new sectors to search for the target wireless identity transmitter in block 1716, and a new alert within the new sectors may be transmitted or otherwise made available to proximity broadcast receivers in block 1706. In this manner, a search may expand to encompass a larger area to accommodate a potentially moving abductor.

In another embodiment, a search may be expanded based on movement of the target wireless identity transmitter. For example, in an ongoing search, the central server may have received sighting messages from one or more proximity broadcast receivers. Based on the times and locations in these messages, the central server may assume that the target wireless identity transmitter is moving in a particular direction, such as down a highway and add sectors in the direction of travel to anticipate the target wireless identity transmitter's future location. Thus, in determination block 1714 the central server may determine when received reported locations (or proximities) indicate the target wireless identity transmitter is leaving the sector. This may be accomplished by comparing a sequence of locations or proximities received in determination block 1710 to a digital map to estimate a direction and speed of travel. When the central server determines that location or proximity reports have ceased being received and the target wireless identity transmitter was moving out of the current search sector (i.e., determination block 1714 = Yes), the central server may identify new sectors to search in block 1716, and a new alert with the new sectors may be transmitted or otherwise made available to proximity broadcast receivers in block 1706. In block 1716 the identified new sector(s) may be the sector or sectors along the direction of motion estimated by the central server. In this manner, a search maybe shifted from sector to sector in sequence in order to track a moving wireless identity transmitter.

In another embodiment, the central server may be configured to receive commands to expand, shift or focus the search area, which may be received in determination block 1714. When the central server receives a command to expand the search (i.e., determination block 1714 = Yes), the central server may identify new sectors to search for the target wireless identity transmitter in block 1716 consistent with the received command, and then a new alert with the new sectors may be transmitted or otherwise made available to proximity broadcast receivers in block 1706. In this manner, a requestor or search authority may adjust the search dynamically via the central server such as to investigate tips and eye witness reports.

Alternatively, a search may be expanded gradually. The central server may identify one or just a few sectors initially, and if the target wireless identity transmitter is not located, the central server may identify additional sectors to alert. For example, if a child goes missing after school, the alert may be sent to proximity broadcast receivers in the school's sector, then to devices in neighboring sectors, then to devices in the rest of town, and then even to devices in neighboring towns and beyond if necessary.

Searching by sectors may conserve network resources and allow more efficient responses. Cell phones users that have opted in as proximity broadcast receivers may not have to worry about unproductive searches in other cities or states, such as California phones searching for a wireless identity transmitter missing in Atlanta. A child in Atlanta missing after school for only a few hours could not have possibly made it across the country to California. However, as the search progresses and time passes, sectors may be added and the search scope expanded as appropriate.

Various embodiments may include one or more features to protect the privacy of each party involved. In various embodiments, the proximity broadcast receiver may not report to the proximity broadcast receiver's user anything about a search (e.g. a cell phone may not reveal to a user the identifier of a target wireless identity transmitter, the identity of the requester, whether a target wireless identity transmitter has been found, or even that a search is under way). In various embodiments, the personal information of any proximity broadcast receiver may be protected by excluding any such information from any data sent to the central server.

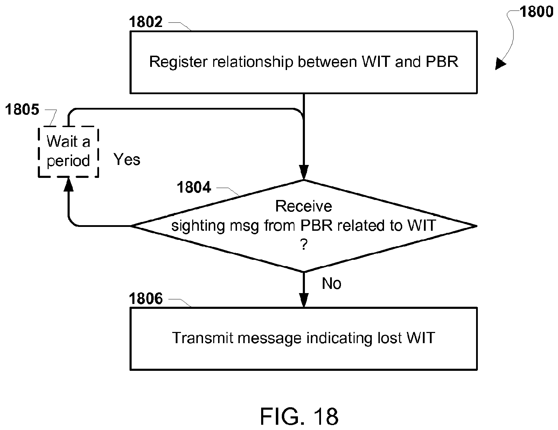

FIG. 18 illustrates an embodiment method 1800 for a central server determining whether a proximity broadcast receiver has lost a wireless identity transmitter. In the central server, the proximity broadcast receiver may be associated with the wireless identity transmitter. For example, the proximity broadcast receiver may be a user's smartphone that is associated with the wireless identity transmitter within an asset (e.g., wallet, purse, luggage, medicine bag, clothing, etc.). In response to failing to receive sighting messages from a proximity broadcast receiver associated with a particular wireless identity transmitter, the central server may be configured to transmit messages, such as warnings, indicating that the wireless identity transmitter (and the object it is connected to) is lost, absent, forgotten, or otherwise non-proximate to the proximity broadcast receiver. This embodiment method 1800 may be useful for leashing certain assets, such as possessions, pets, and children. For example, when a child runs from a parent, broadcast messages from the child's wireless identity transmitter may no longer be received by the parent's proximity broadcast receiver. As a result, the parent's proximity broadcast receiver may not transmit sighting messages to the central server and the central server may determine the child has been lost or run away.

In block 1802, the central server may register a relationship between the proximity broadcast receiver and the wireless identity transmitter, such as by storing information within a database. In various embodiments, each proximity broadcast receiver and wireless identity transmitter may be involved in numerous relationships. Additionally, the relationship information may be stored based on user input data to the central server via a registration web portal (e.g., the user may access a website and indicate all of his/her wireless identity transmitters). During such a registration, the central server may prompt the user to provide conditions under which the central server should transmit messages when wireless identity transmitters are lost or otherwise outside of the proximity of the proximity broadcast receiver. For example, the user may enter configuration data stored by the central server that indicates that if the proximity broadcast receiver does not receive broadcast messages from the wireless identity transmitter between certain hours of the day, the central server should transmit a warning message.

In determination block 1804, the central server may determine whether a sighting message has been received from the proximity broadcast receiver related to the wireless identity transmitter. In other words, based on whether or not such a sighting message is received, the central server may detect if the wireless identity transmitter is close to the proximity broadcast receiver. The central server may also evaluate sighting messages received over a period to determine whether the wireless identity transmitter is (or has recently been) within proximity of the proximity broadcast receiver. In an embodiment, the central server may determine whether it receives a sighting message for each wireless identity transmitter registered in the relationship. For example, if the registered relationship includes multiple wireless identity transmitters, the central server may expect to receive sighting messages from the proximity broadcast receiver regarding all the wireless identity transmitters. If the central server receives a sighting message related to the wireless identity transmitter (i.e., determination block 1804 = "Yes"), in optional block 1805 the central server may wait a period and may continue with the operations in determination block 1804. In various embodiments, the central server may perform the operations in determination block 1804 periodically, such as every few seconds, minutes, or hours.

If the central server does not receive a sighting message related to the wireless identity transmitter (i.e., determination block 1804 = "No"), in block 1806 the central server may transmit a message indicating the wireless identity transmitter is lost. In various embodiments, the central server may transmit such a message to the proximity broadcast receiver, other devices associated with the user of the proximity broadcast receiver (e.g., a smartphone, tablet), and/or any other device relevant to the wireless identity transmitter. For example, the central server may transmit a warning message to a police server when the wireless identity transmitter is lost and associated with a child.

FIG. 19 illustrates an embodiment method 1900 that may be implemented within a central server. The method 1900 may be performed by the central server in response to receiving a sighting message from a proximity broadcast receiver that includes encoded, rolling, or otherwise protected data originally broadcast by a wireless identity transmitter. Privacy of users of wireless identity transmitters may be protected by using a rolling or randomly varying identifier for each wireless identity transmitter so the identifier changes with time. New identifiers may be generated periodically or based on certain events, such when a wireless identity transmitter broadcasts an identifier a certain number of times or for a certain time period (e.g., an hour), or after one or more pairings. This rolling of identifiers may be coordinated with the central server so that the wireless identity transmitter may still be tracked. For example, the wireless identity transmitter and the central server may each have a cryptographically secure pseudo-random number generator algorithm that is used to generate identifiers on a common time scale so that any given moment, the central server can calculate the identifier being transmitted by a particular wireless identity transmitter.

Generating rolling identifiers, or other methods of obfuscating identifiers, is important in that it may prevent sniffing attacks from a third party. For example, if the identifier was static, a third party could sniff the identifier, such as by impersonating a proximity broadcast receiver, and then use the identifier to track the wireless identity transmitter. A rolling identifier may hinder such an attack impossible if the third party lacks the pseudo-random number generator or other means of generating the latest rolling identifiers.

In block 1902, the central server may receive a wireless identity transmitter's rolling identifier in a sighting message from a proximity broadcast receiver. In block 1904, the central server may compare the rolling identifier with code calculated by an algorithm shared with the wireless identity transmitter, such as a pseudo-random function or an encryption algorithm with shared secret keys. The algorithm may be software instructions, routines, algorithms, circuitry, or modules that are utilized by the central server to calculate codes that are expected to align with rolling identifiers generated and broadcast by the wireless identity transmitter over a period. In various embodiments, the central server may compare the received identifier with the next several codes in case some identifiers were missed. If the received identifier matches any codes generated or expected by the central server, in block 1906 the central server may associate the matching identifier and any associated data with a serial code corresponding to the wireless identity transmitter. This way, if the central server later receives a user request with the wireless identity transmitter's serial code, such as a request from a parent to locate the wireless identity transmitter carried by a child, then the central server can find all the prior matches and any associated data without having to search for every previous rolling identifier.

In an embodiment, when initiating a search for a target wireless identity transmitter, the central server may use the shared algorithm and information (e.g., key) to generate a target device ID that is transmitted in an alert message. In this embodiment, alert messages may be retransmitted with an updated target device ID whenever the target wireless identity transmitter is scheduled to roll its identifier. Various algorithms for generating rolling identifiers or other encoded identifiers, as well as other decoding algorithms, are discussed below.

FIGS. 20-23B illustrate various embodiment methods for synchronizing a nonce or counter between a wireless identity transmitter and a central server to enable transmitting and receiving obscured information. The wireless identity transmitter may perform various methods for broadcasting messages that include obscured identifiers and data (i.e., payloads) that identify the wireless identity transmitter to the central server and provide a relative reading on the wireless identity transmitter clock. Likewise, the central server may perform various methods for processing obscured information within received messages corresponding to the wireless identity transmitter. As described above, the broadcast messages from the wireless identity transmitter may be sent to the central server directly or through intermediary devices, such as proximity broadcast receivers transmitting sighting messages.

Due to privacy concerns regarding unintended tracking of devices described above, the wireless identity transmitter may obscure information within the transmitted messages through obfuscation measures (e.g., encryption or pseudo-random data generation) known only to the central server and wireless identity transmitter. In an embodiment, the wireless identity transmitter may maintain a clock or timer mechanism that is represented by a nonce or counter value and that may begin once the device is operational (e.g., activated through the insertion of a battery). The clock may be relatively low-quality and therefore may drift unlike more accurate clocks, such as in the central server (e.g., clocks calibrated by periodic atomic clock readings). The counter or nonce may be a non-repeating number generated by the wireless identity transmitter, and may be changed each time wireless identity transmitter encodes its identifier for broadcasting, such as once every hour or even once every broadcast message. In various embodiments, nonces or counters (or counter values) may be encrypted or encoded using pseudo-random functions or other encryptions algorithms (e.g., AES). For example, a wireless identity transmitter may encode a nonce or counter value with an AES-CTR block cipher to create a nonce for use in generating the payload including a rolling identifier of a broadcast message. As another example, a nonce may be generated by applying a linear feedback shift register (LFSR) to a nonce or counter value.

As described throughout the disclosure, the wireless identity transmitter may also store a unique device identification code or number (i.e., a device identifier or '*deviceID*') and be pre-provisioned with a per-device shared secret key (or K) which is associated with the unique identifier at the central server. For example, the central server may store the unique device identifier and the secret key in a database and may maintain a table of *deviceID* and *K* pairs for all wireless identity transmitters registered with the central server. The central server may use the device identifier and secret key, along with other information such as reported nonce or counter values, to identify, decrypt and otherwise process obscured messages from the wireless identity transmitter. In an embodiment, the device identifier (or *deviceID*) may be generated sequentially or randomly.

FIG. 20 illustrates a method 2000 according to the invention for a central server to identify a wireless identity transmitter indicated by encrypted data within a message broadcast by the wireless identity transmitter. In block 2002, the wireless identity transmitter may receive a shared secret key (i.e., "K"). In other words, the wireless identity transmitter may be pre-provisioned with a per-device shared secret key (*K*), such as during manufacturing. In another embodiment, the wireless identity transmitter may receive the secret key in a messages broadcast from a proximate proximity broadcast receiver, such as described above with reference to FIG. 4A. The secret key is associated with the wireless identity transmitter's unique device identifier (i.e., *deviceID*) at the central server. In an embodiment, the secret key may be a 128 bit secret key.

In block 2004, the wireless identity transmitter encodes the device identifier (*deviceID*), secret key (*K*), and a nonce or counter value via a streaming-like encryption algorithm (e.g., AES-CTR encryption) to generate a rolling identifier. "AES-CTR" is one of the confidentiality modes recommended by the National Institute of Standards and Technology for implementations of the Advanced Encryption Standard (AES). In an embodiment, the wireless identity transmitter may include an AES coprocessor that is configured to support the "CTR" mode. In an embodiment, the rolling identifier may be represented by the following equation:

$$\text{Rolling identifier} = (\textit{deviceID} \parallel \textit{data}) \text{ XOR } (\text{MSB\_N}(\text{ AES\_K}(t)))$$

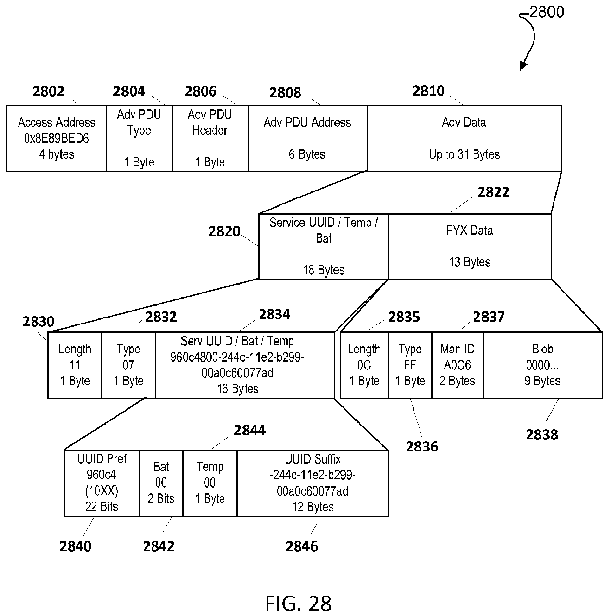

where $t$ is the value of the wireless identity transmitter's nonce or counter (e.g., a 20 bit value), 'XOR' denotes the bitwise exclusive-or operation, 'AES_K()' is the AES block cipher with key '*K*', and 'MSB_N()' means the 'N' most significant bits (e.g., 60 bits). This rolling identifier may then be included in the broadcast message that is regularly transmitted by the wireless transmitter device. An example of how the rolling identifier may be included in a Bluetooth LE broadcast package is described below with reference to FIG. 28. As described in more detail below, other device data (e.g., battery level, temperature, etc.) may be transmitted along with the rolling identifier in a broadcast packet.

In a further embodiment, other information may be included within the rolling identifier. Thus, in addition to providing an obscured identifier for the wireless identity transmitter, the rolling identifier field may include obscured data that only the central server can recover. One method for accomplishing this is to concatenate the additional information, such as a few bits to indicate the battery status (*bat_stat*) to the device identifier (*deviceID*) and applying the XOR function to the concatenation. The amount of additional information (i.e., number of bits of information) that can be included within (i.e., obscured within the same data field of) the rolling identifier is limited by the length N of significant bits within the rolling identifier field. Thus, if more bits are available in the data portion carrying the rolling identifier, more such data may be included within the encrypted rolling identifier. Since the data that is included within the rolling identifier is likely to change over time, this approach may further obscure the device's identity.

If more data is desired to be transmitted in broadcast messages, some of that data may be carried in the clear or encrypted with the data. There are a number of approaches for including data (e.g., battery state, temperature, etc.) within broadcast messages. In addition to including the data within the rolling identifier as described above, the data may be added by concatenating the data to the end of the rolling identifier as part of the manufacturer specific data payload, either before or after the rolling identifier, as sensor data in the clear. Thus, if there are more bits available in the manufacturer specific data payload they may be used to convey the data in the clear. Alternatively, the data may be encoded using the same key as used to generate the rolling identifier or an alternate key that is known to the server to be associated with the wireless identity transmitter or such data fields. In this alternative, the information in the rolling identifier enables the server to both determine the device's true identifier and the encryption key used to encrypt the other data included in the message. In yet a further embodiment, these options for carrying other data may be combined, such that some of it is included within the rolling identifier, some is carried in the clear and/or some data may be encrypted and included within the broadcast message.

In block 2006, the wireless identity transmitter then broadcasts a message that includes the nonce and the rolling identifier, or simply the rolling identifier (i.e., without a nonce) as described below with reference to FIG. 28. In an embodiment, the broadcast message may be a single packet length Bluetooth LE® chirp message. In various embodiments, the nonce included in the broadcast message may be 20 bits and the rolling identifier may be 60 bits, so that the entire broadcast message is 80 bits.

As an example embodiment in which the battery status is included within the rolling identifier, the broadcast message (or the payload of the broadcast message) may be represented by the following equation:

$$\text{Payload} = t \parallel (deviceID \parallel bat\_stat) \text{ XOR } (\text{MSB\_N}(\text{ AES\_K}(t)))$$

where $t$ is the value of the wireless identity transmitter's nonce, which may just be the nonce or counter (e.g., a 20 bit value), '$bat\_stat$' is the battery status information of the device (e.g., a 4-bit code), '$\parallel$' means concatenation, 'XOR' denotes the bitwise exclusive-or operation, 'AES\_K()' is the AES block cipher with key '$K$', and 'MSB\_N()' means the 'N' most significant bits (e.g., 60 bits). In other words, the embodiment broadcast message may include the nonce in the clear (i.e., not encrypted) in addition to a rolling identifier that includes a battery level indicator. In another embodiment, the battery level indicator (i.e., $bat\_stat$) may not be encrypted, and may be included in another field of the broadcast message, such as within the service universally unique identifier (UUID) portion of a message as described below with reference to FIG. 28

In block 2010, the central server may receive the shared secret key ($K$), such as during the account creation operations described above with reference to FIG. 14. For example, the central server may generate the secret key in response to receiving account registration information from the user of the wireless identity transmitter (e.g., $deviceID$ and registration request information). In block 2012, the central server associates the shared secret key (i.e., $K$) with the wireless identity transmitter's device identifier (i.e., $deviceID$). For example, the central server may store the $deviceID$ and K in a data table of registered devices.

In block 2014, the central server receives a message including the nonce or counter and the rolling identifier. For example, the received message may be a sighting message from a proximity broadcast receiver that includes the information broadcast by the wireless identity transmitter with the operations in block 2006. In block 2016, the central server extracts the nonce or counter from the received message, and in block 2018 extracts the rolling identifier. In block 2019, the central server may select a wireless identity transmitter (i.e., selected wireless identity transmitter) to evaluate. In other words, the central server may obtain a stored $deviceID$, $K$, and nonce or counter for a registered wireless identity transmitter known to the central server, such as from the database or data table storing such information for all registered wireless identity transmitters. In block 2020, the central server decodes the rolling identifier via the same streaming-like encryption algorithm (e.g., AES-CTR) with the nonce or counter and the selected wireless identity transmitter's secret key $(K)$ to generate a decoded device identifier (or $M$). For example, the central server may perform a decoding operation based on the AES-CTR algorithm that uses the rolling identifier as input along with the selected wireless identity transmitter's secret key (K) and the nonce or counter indicated in the received message.

In an embodiment, the decoded device identifier ($M$) may be represented by the following equation:

$$M = (\text{rolling identifier}) \text{ XOR } (\text{MSB\_\{N-}a\}(\text{ AES\_K}(t) )),$$

where $t$ is the value of the wireless identity transmitter's nonce or counter (e.g., a 20 bit value), 'XOR' denotes the bitwise exclusive-or operation, 'AES\_K()' is the AES block cipher with key '$K$', and 'MSB\_\{N-$a$\}' means the 'N-$a$' most significant bits (e.g., 56 bits when $a$ is 4 bits and N is 60 bits).

In determination block 2022, the central server determines whether the decoded device identifier ($M$) and the $deviceID$ match. In other words, the central server compares the decoded device identifier ($M$) to the $deviceID$ for the selected wireless identity transmitter whose secret key ($K$) was used with the AES-CTR algorithm operations to obtain the decoded device identifier ($M$). If $M$ and the $deviceID$ do match (i.e., determination block 2022 = "Yes"), in block 2024, the central server identifies the broadcast message as originating from the selected wireless identity transmitter. If $M$ and the $deviceID$ do not match (i.e., determination block 2022 = "No"), in block 2026 the central server may decode the rolling identifier with secret keys associated with other wireless identity transmitters. For example, the central server may select the next registered wireless identity transmitter and use the corresponding stored pair of a secret key ($K$) and corresponding $deviceID.$ In this manner, all $K$ and $deviceID$ pairs stored for all registered wireless identity transmitters and/or users of the system may be tried by the central server until a match is found that identifies the originator of the broadcast message.

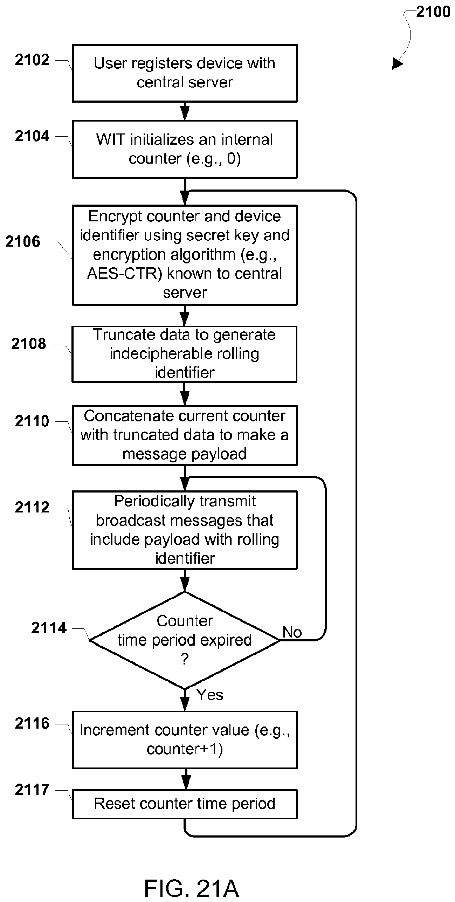

FIG. 21A illustrates the embodiment method 2100 for a wireless identity transmitter generating and broadcasting an encrypted message (i.e., a rolling identifier) for receipt/use by a central server.

In block 2102, a user of the wireless identity transmitter may register the device with the central server. The services the wireless identity transmitter utilizes may require registrations of all active devices employed by users (e.g., consumers, proprietors, etc.). The registration process may include an initial synchronization with the central server by the user of the wireless identity transmitter. For example, the user of the wireless identity transmitter may register the device with the central server through a Web application, in a mobile device or a PC able to receive wireless identity transmitter messages and operated by the user. The wireless identity transmitter may be required to be registered with the central server within a certain time period from activation of the device. For example, the wireless identity transmitter may be required to be registered within the first 24 hours after the device is initiated (e.g., a battery is placed within the wireless identity transmitter). Registration operations are further described above with reference to FIG. 14.

In block 2104, the wireless identity transmitter may initialize an internal nonce or counter, such as by setting the nonce or counter to a zero value. The nonce or counter initialization may occur due to a triggering event, such as the placement of a battery or power source within the wireless identity transmitter. For example, the nonce or counter may begin incrementing once the wireless identity transmitter is activated or powered on. Alternatively, the initialization may occur in response to registration operations described above. The nonce or counter may begin with '0' (or any other starting value, such as '1') and may be incremented periodically by the wireless identity transmitter. In an embodiment, when the battery of the wireless identity transmitter is replaced (e.g., due to battery failure) or the wireless identity transmitter is otherwise reset/ restarted/ rebooted, the nonce or counter may return to the initial value (e.g., '0'). The nonce or counter may not repeat the value it represents unless the wireless identity transmitter is reset/ restarted/ rebooted. In an alternative embodiment, during initialization of the nonce or counter, the wireless identity transmitter may read from flash memory a predefined initial nonce or counter value. For example, the wireless identity transmitter may initialize the nonce or counter with a value set at a factory or updated by an installed application.

In an embodiment, the counter or nonce may be initialized and adjusted in a random or pseudo-random fashion using methods well known in the art. The nonce or counter may be a pseudo-randomly generated value that can be replicated in both the wireless identity transmitter and the central server. In another embodiment, the nonce or counter may be generated by the wireless identity transmitter using a linear feedback shift register (LFSR) with a proper period configured to create nonce or counter values that do not repeat during the lifetime of the device. Such nonces or counters derived from the LFSR may also be pseudo-random.

In block 2106, the wireless identity transmitter may encrypt the concatenated data using a secret key and encryption algorithm known to the central server. For example, the wireless identity transmitter may encode the nonce or counter and/or the device identifier (i.e., *deviceID*) using an AES-CTR block cipher. The encryption algorithm may utilize the secret key for encryption and decryption purposes, as the secret key is known by both the central server and wireless identity transmitter. The encryption algorithm may result in encrypted (or encoded) data of a certain size. For example, using the AES-CTR cipher, the wireless identity transmitter may generate encoded data of 128-bits. In an embodiment, the wireless identity transmitter may generate encrypted data represented by the following equation:

$$( \textit{deviceID} \parallel \textit{bat\_stat}) \text{ XOR } (\text{MSB\_N}( \text{ AES\_K}(t))),$$

where *t* is the value of the wireless identity transmitter's nonce or counter (e.g., a 20 bit value), '*bat_stat*' is the battery status information of the wireless identity transmitter (e.g., a 4-bit code), '∥' means concatenation, 'XOR' denotes the bitwise exclusive-or operation, 'AES_K()' is the AES block cipher with key '*K*', and 'MSB_N()' means the 'N' most significant bits (e.g., 60 bits). In other words, the embodiment broadcast message may include the nonce or counter in the clear (i.e., not encrypted) in addition to a rolling identifier that includes a battery level indicator. In another embodiment, the encrypted data may be represented by the following equation:

$$(\textit{deviceID}) \text{ XOR } (\text{AES\_K}(t)),$$

where *deviceID* is a unique device identifier, *t* is the value of the wireless identity transmitter's nonce or counter (e.g., a 20 bit value), 'XOR' denotes the bitwise exclusive-or operation, 'AES_K()' is the AES block cipher with key '*K*', and 'MSB_N()' means the 'N' most significant bits (e.g., 60 bits).

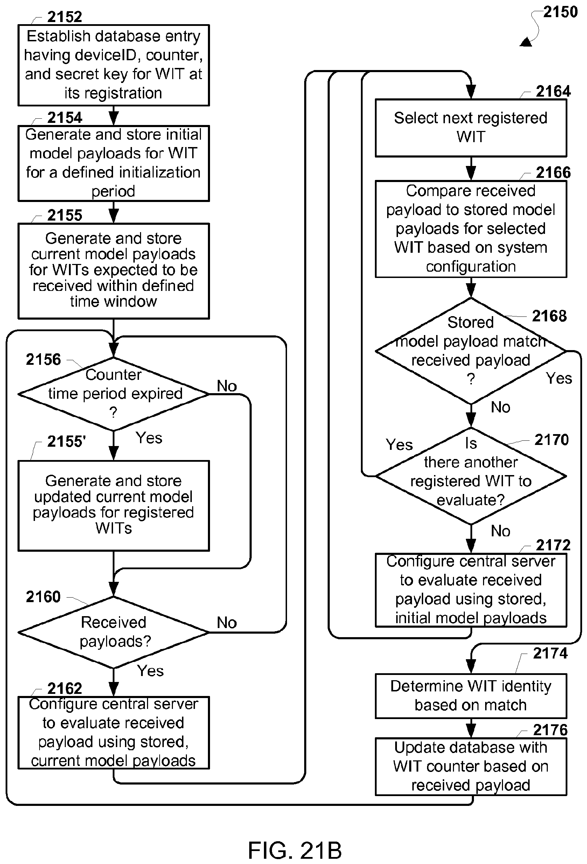

Due to the limited communication capabilities of the wireless identity transmitter, the payload of broadcast messages (e.g., the payloads supported by Bluetooth LE broadcast packets) may not be able to contain the entire encrypted message, but instead only include a portion of an encrypted piece of data. Accordingly, in block 2108, the wireless identity transmitter may truncate data to generate an indecipherable rolling identifier. In other words, by truncating the encrypted data, the wireless identity transmitter may create an identifier to be put in a broadcast message (or payload) such that the identifier's size may be supported by the utilized communication format, such as Bluetooth LE. For example, the wireless identity transmitter may truncate the encrypted data to fit within an 80-bit payload maximum size. When encrypted data is truncated, the decryption of that data within the central server may be impossible. However, the incomplete encrypted data may still be used by the central server as described below with reference to FIG. 21B. In an embodiment, truncation may be accomplished with a function, such as a most-significant-bit operation. In another embodiment, the truncated data may be represented by the following equation:

$$\text{TRUNC}\ (deviceID\ \text{XOR}\ \text{AES\_K}(t)),$$

where $t$ is the value of the wireless identity transmitter's nonce or counter (e.g., a 20 bit value), 'XOR' denotes the bitwise exclusive-or operation, 'AES_K()' is the AES block cipher with key '$K$', and 'TRUNC ()' denotes a truncation operations that may create a certain number of bits or bytes (e.g., 56 bits or 7 bytes).

In block 2110, the wireless identity transmitter may concatenate the current nonce or counter with the truncated data to make a message payload. For example, the wireless identity transmitter may combine the current wireless identity transmitter system clock value (e.g., 20 bits long) with the unique identification code of the wireless identity transmitter truncated to be 60 bits long. In an embodiment, the payload may include both encrypted data and unencrypted data (or "in the clear" data). For example, the payload may contain many bits representing the encrypted and/or truncated data and several other bits that represent the battery status of the wireless identity transmitter or a nonce or counter value.

In block 2112, the wireless identity transmitter may periodically transmit broadcast messages that include the payload with the rolling identifier, such as by broadcasting via short-range wireless communication techniques as described above. The frequency of transmissions of the broadcast messages may vary dependent upon system configurations, user settings, or any other source of scheduling and timing relevant for wireless identity transmitters communicating via radio signals. For example, the wireless identity transmitter may broadcast the rolling identifier every few seconds.

In determination block 2114, the wireless identity transmitter may determine whether a predefined nonce or counter time period has expired. This nonce or counter time period may be set in a similar manner as the broadcast frequency periodicity as described above. For example, the manufacturer or may establish the nonce or counter time period using various techniques, such as hard-coding variables within the wireless identity transmitter's processor circuitry.

If the nonce or counter time period has not expired (i.e., determination block 2114 = "No"), the wireless identity transmitter may continue with the operations in block 2112. For example, the wireless identity transmitter may broadcast the payload via short-range radio transmissions at a frequency of a few seconds for a time period of many minutes.

If the device determines the nonce or counter time period has expired (i.e., determination block 2114 = "Yes"), in block 2116 the wireless identity transmitter may increment the nonce or counter value, such as by adding 1. In block 2117, the wireless identity transmitter may reset the nonce or counter time period. For example, after a nonce or counter time period has expired, the wireless identity transmitter may increase the nonce or counter by a value of 1 and reset the nonce or counter time period to 0. The wireless identity transmitter may continue with the operations in block 2106 (e.g., the wireless identity transmitter may create a new payload and broadcast it for another nonce or counter time period).

FIG. 21B illustrates an embodiment method 2150 for a central server receiving messages and syncing timing nonce or counters based on payload information. In block 2152, the central server may establish a database entry having the device identifier (i.e., deviceID), nonce or counter, and secret key data for the wireless identity transmitter at its registration. The central server may maintain a database containing data records for each wireless identity transmitter associated with the central server and/or the central server's affiliated services. The database may be populated with information obtained via registration operations described above. Thus, there may be a data record for each wireless identity transmitter associated with the central server, and each record may contain information that represents a particular device's identification, its current nonce or counter (e.g., clock value), and a secret key associated with the wireless identity transmitter. In an embodiment, the secret key may be unique to each wireless identity transmitter registered with the central server. In an embodiment, the central server may also store the initial nonce or counter value for each wireless identity transmitter registered with the central server.

In various embodiments, when a wireless identity transmitter is registered, the central server may store the initial nonce or counter value for the wireless identity transmitter. Dependent upon the time between the activation of the wireless identity transmitter (e.g., when the battery was inserted and the device became operational) and the registration of the device, the initial nonce or counter for the wireless identity transmitter may or may not be 0. For example, if the registration of the wireless identity transmitter with the central server occurred several hours after a user inserted a battery in the wireless identity transmitter, the initial nonce or counter may not be 0. In an embodiment, the central server may also indicate the registration status of the wireless identity transmitter by setting a registration flag or other indicator and may store information describing wireless identity transmitters that have yet to be registered in the database. In an embodiment, the central server may maintain a database with initial values provided for all known wireless identity transmitter whether or not they have been registered. For example, based on manufacturing records, the central server may contain a database having information about every wireless identity transmitter created.

The central server may generate and store model payloads using operations similar to those described above with reference to blocks 2106-2110. Model payloads may be payloads the central server expects to receive from the wireless identity transmitter based on stored secret key, device identifier (deviceID), and nonce or counter information. For example, for each registered wireless identity transmitter, the central server may create a model payload by concatenating the device's *deviceID* to a nonce or counter value, encrypting the concatenated data using an encryption protocol that employs the secret key for the wireless identity transmitter, and truncating the encrypted data. Each model payload may be stored in a central server data table (or lookup table) in relation to the corresponding *deviceID* and nonce or counter values used to generate the respective model payloads. For example, for each model payload for each wireless identity transmitter, the central server may store in the data table the model payload, a time offset value (e.g., -2, -1, 1, 2, etc.), and the nonce or counter, all in relation to the *deviceID* of the wireless identity transmitter.

In block 2154, the central server may generate and store initial model payloads for the wireless identity transmitter for a defined initialization period. For example, starting at the initial nonce or counter value (e.g., 0 or a pseudo-random value known to the device and the central server), the central server may generate model payloads using nonce or counter values that are the same, lower, and/or higher than the actual initial nonce or counter of a wireless identity transmitter such that these model nonces or counters cover the initialization period. In an embodiment, the initialization period may be an hour, several hours, days, etc.). The central server may store the initial model payloads for use in the event of a registration/reset/reboot of a wireless identity transmitter.

In block 2155, the central server may also generate and store current model payloads for wireless identity transmitters expected to be received within a defined time window. To account for possible clock drift in wireless identity transmitters, the central server may generate and store model payloads for the defined time window (or time period) by using multiple derivative nonce or counter values that represent a range of possible nonces or counters. In other words, derivative nonce or counter values may be offsets to the current nonce or counter value stored for a wireless identity transmitter. For example, the central server may generate model payloads for derivative nonce or counter values that are lower and higher than the currently stored nonce or counter value in the database. A derivative nonce or counter value may be the result of an offset value (e.g., -2, -1, 1, 2, etc.) added to the stored nonce or counter value for a wireless identity transmitter. The central server may generate model payloads to represent the stored nonce or counter value and derivative nonce or counter values that incrementally represent the window time period. For example, the model payloads may represent nonces or counters increasing by a small time value, such as an hour, and covering a large period of time, such as multiple hours. As another example, the central server may store a payload corresponding to the current nonce or counter value stored for a wireless identity transmitter, a payload corresponding to the previous nonce or counter value for the device, and a payload corresponding to the next nonce or counter value for the device.

In an embodiment, the first generated current model payloads for a given wireless identity transmitter may be identical to the initial model payloads for the wireless identity transmitter as both sets of payloads may be generated by the central server based on the same initial nonce or counter values. In an embodiment, the initialization period may coincide with the defined time window. For example, the initialization period may involve a similar number of days, hours, minutes, etc. as the defined time window.

In determination block 2156, the central server may determine whether a nonce or counter time period has expired. The central server may initialize the evaluation of a nonce or counter time period at an arbitrary time or, alternatively, upon the receipt of a wireless identity transmitter registration. The nonce or counter time period may be the same period of time used by the wireless identity transmitters as described above with reference to determination block 2114.

If the nonce or counter time period has expired (i.e., determination block 2156 = "Yes"), in block 2155' the central server may generate and store updated current model payloads for registered wireless identity transmitters. The updated current model payloads may replace the previous current model payloads and may be based on the stored nonce or counter value in each respective wireless identity transmitter's database record.

If the nonce or counter time period has not expired (i.e., determination block 2156 = "No") or if the nonce or counter time period has expired and the central server has generated updated current model payloads, in determination block 2160, the central server may determine whether any payloads have been received. In an embodiment, payloads may be delivered directly from wireless identity transmitters or alternatively indirectly from proximity broadcast receivers via sighting messages which include (or relay) rolling identifier payloads from proximate wireless identity transmitters to the central server. If no payloads have been received (i.e., determination block 2160 = "No"), the central server may continue with the operations in determination block 2156.

If a payload has been received (i.e., determination block 2160 = "Yes"), in block 2162, the central server may be configured to evaluate the received payload using stored, current model payloads, such as the current model payloads stored for each registered wireless identity transmitter. As described above, the central server may maintain two sets of stored model payloads for each registered wireless identity transmitter, an initial model payload set that may include model payloads based on the initial nonce or counter and derivative nonce or counter values that span the initialization period, and a current model payload set that is based on the current nonce or counter value stored within the database record for each wireless identity transmitter. In an embodiment, the central server may set a system variable indicating the central server should compare the received payload to stored, current model payloads. The system variable may be set to direct the central server to evaluate either the current or initial model payloads for wireless identity transmitters.

In blocks 2164-2172, the central server may perform an operational loop in which the central server compares the received payload (i.e., data broadcast by the wireless identity transmitter) to stored model payloads for all registered wireless identity transmitters until a match is found. In block 2164, the central server may select a next registered wireless identity transmitter. The central server may determine the next registered device based on the database of registered wireless identity transmitters and may sequentially iterate through each device during the operations in blocks 2164-2172. In block 2166, the central server may compare the received payload to the stored model payloads for the selected wireless identity transmitter based on the system configuration, such as the configuration set in the operations in block 2162. For example, based on the system variable set to 'current' with the operations in block 2162, the central server may compare the received payload to stored current model payloads for the selected wireless identity transmitter. Based on the form of the encrypted data of the received payload, the comparison may be a pattern-matching routine in which the central server compares the data of the model payloads against the received payload. For example, the central server may compare the bit values for the stored and received payloads.

In determination block 2168, the central server may determine whether any of the stored model payloads match the received payload. If none of the stored model payloads match the received payload (i.e., determination block 2168 = "No"), in determination block 2170, the central server may determine whether there is another registered wireless identity transmitter to evaluate. In other words, the central server may determine whether the stored model payloads of all registered wireless identity transmitters have been evaluated. If there is another registered wireless identity transmitter to evaluate (i.e., determination block 2170 = "Yes"), the central server may continue by selecting the next registered wireless identity transmitter with the operations in block 2164.

If the central server has evaluated the stored model payloads of all registered wireless identity transmitters (i.e., determination block 2170 = "No"), in block 2172, the central server may be configured to evaluate the received payload using stored, initial model payloads, such as the initial model payloads stored for each registered wireless identity transmitter at the time of the devices' registration. For example, the central server may set a system variable indicating the central server should compare the received payload to stored, initial model payloads for evaluated registered wireless identity transmitters (e.g., the system variable may be set to 'initial'). The operational loop may then continue with the operations in blocks 2164-2168 wherein the central server may select each registered wireless identity transmitter and compare the initial model payloads of that selected device to the received payload.

If the central server does find a match between the received payload and any of the stored model payloads (current or initial) of a registered wireless identity transmitter (i.e., determination block 2168 = "Yes"), in block 2174, the central server may determine a wireless identity transmitter identity based on the match. In other words, the central server may identify the wireless identity transmitter corresponding to the received payload based on the identification information (e.g., *deviceID*) stored in relation to the matching stored model payload. In block 2176, the central server may update the database with the identified wireless identity transmitter's nonce or counter based on the received payload. Based on the database record corresponding to the matching stored model payload, the central server may determine the derivative nonce or counter value corresponding to the received payload and may update the stored nonce or counter value to represent the derivative nonce or counter value, thus syncing the identified wireless identity transmitter's nonce or counter and the central server nonce or counter. In an embodiment, the central server may also store in the database the central server nonce or counter (or time) at which the central server received the received payload.

In an embodiment, the central server may maintain a list (or data table) of recently received messages and the corresponding wireless identity transmitter identification. For example, the central server may record within a data table the *deviceID* and payload information for messages received within a certain period. The central server may compare any subsequently received payload to the data table to determine whether the subsequently received payload is redundant based on recently received payloads from the same wireless identity transmitter. For example, a subsequently received payload may represent a certain nonce or counter value from a particular wireless identity transmitter that was already received and processed by the central server a few minutes ago. This may expedite the method 2150 process and decrease search times for the operations in blocks 2164-2172. In an embodiment, the central server may expunge (or clear) the data table of recently identified payloads and wireless identity transmitters and may schedule the clearing operations similarly as described in block 2176 (e.g., the recent data table may be cleaned every time the nonce or counter time period is determined to be expired).

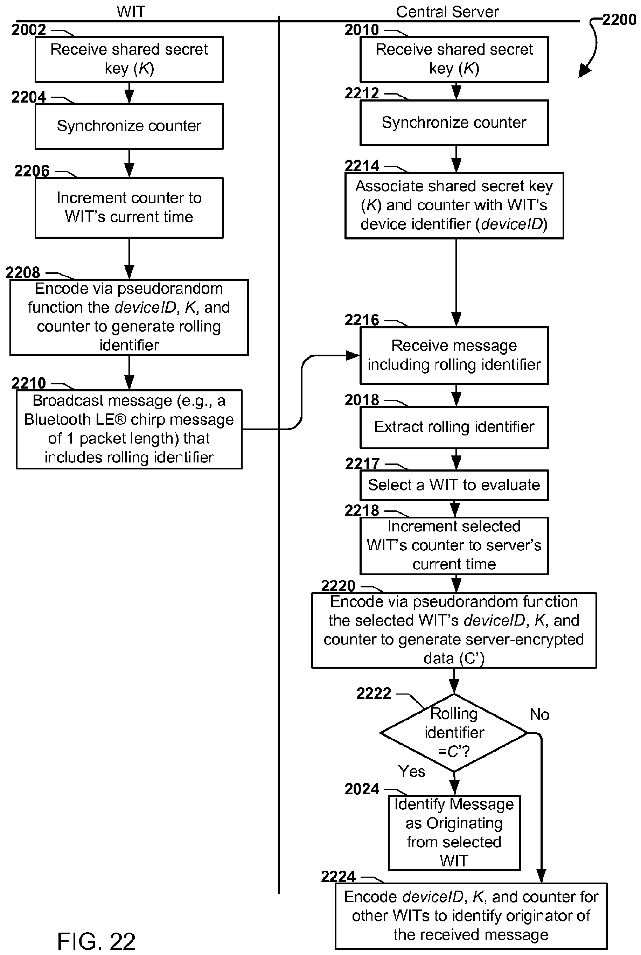

FIG. 22 illustrates another embodiment method 2200 for a central server to identify a wireless identity transmitter indicated by encrypted data within a message broadcast by the wireless identity transmitter. In the operations of the method 2200, nonce or counter values may never be included in broadcast messages to increase the security with which wireless identity transmitters transmit their identities. For example, as nonce or counter values may differ among different wireless identity transmitters, an attacker with the ability to capture a broadcast message may be able to easily predict values within future broadcast messages from the wireless identity transmitter. However, without nonce or counter data transmitted in the clear, nefarious snoopers may be better thwarted from following broadcasts from a particular wireless identity transmitter.

In block 2002, the wireless identity transmitter may receive a shared secret key (i.e., "*K*"). For example, each wireless identity transmitter may be pre-provisioned with a per-device shared secret key which is associated with the wireless identity transmitter's unique device identifier (or *deviceID*) at the central server. In block 2204, the wireless identity transmitter may synchronize a nonce or counter. The nonce or counter may be synchronized with the central server upon registration of the wireless identity transmitter at the central server. The synchronized nonce or counter value may also be associated with the *deviceID* and *K* in a data table stored in the central server (e.g., a table with stored pairs of IDs and *K* values).

In block 2206, the wireless identity transmitter may increment the nonce or counter to the wireless identity transmitter's current device time. For example, the nonce or counter may be incremented after a predefined number of seconds (e.g., one second, one hour, etc.). As another example, every 3600 seconds the wireless identity transmitter may increment the nonce or counter by one value. In this manner, the nonce or counter value may change to the current time as counted by the oscillator on the wireless identity transmitter. In block 2208, the wireless identity transmitter may encode via a pseudo-random function the device identifier (i.e., *deviceID*), the shared secret key (i.e., *K*), and the nonce or counter to generate a rolling identifier. In this manner, the rolling identifier may be generated as the nonce or counter value changes. In an embodiment, the pseudo-random function may be a polynomial time computable function with a seed ('*s*') and input variable ('*x*'), such that when the seed is randomly selected and not known to observers, the pseudo-random function (e.g., PRF($s$, $x$)) may be computationally indistinguishable from a random function defined on the same domain with output to the same range. For example, the Keyed-Hash Message Authentication Code (HMAC) or the Cipher-Based Message Authentication Code (CMAC) may be used as the pseudo-random function.

In block 2210, the wireless identity transmitter may broadcast a message (e.g., a Bluetooth LE chrp message of 1 packet length) that includes the rolling identifier. In an embodiment, the broadcast message (or the payload of the broadcast message) may be represented by the following equation:

$$\text{Payload} = \text{MSB\_N}(\text{PRF}(\ K, (deviceID \parallel t)))$$

where $t$ is the value of the wireless identity transmitter's nonce or counter, 'II' means concatenation, 'PRF ()' is the pseudo-random function, and 'MSB_N()' means the 'N' most significant bits (e.g., 80 bits). In other words, the wireless identity transmitter may intentionally obscure (or skew) the device identifier and the nonce or counter information, thus the broadcast message's payload may not include either the device identifier or the nonce or counter information in the clear.

In block 2010, the central server may receive the shared secret key (K). In block 2212, the central server may synchronize a nonce or counter. For example, the nonce or counter may be set to represent a value included in a previous message related to the wireless identity transmitter, such as a registration message. In block 2214, the central server may associate the shared secret key (i.e., *K*) and nonce or counter with the wireless identity transmitter's device identifier (i.e., *deviceID*). For example, the central server may store the *deviceID, K,* and nonce or counter in a data table of registered devices (e.g., in a tuple record of a database). In an embodiment, the central server may also store an indicator or flag indicating whether each wireless identity transmitter has been registered or activated.

In block 2216, the central server may receive a message including the rolling identifier. For example, the received message may be a sighting message from a proximity broadcast receiver that includes the rolling identifier broadcast by the wireless identity transmitter with the operations in block 2210. In block 2018, the central server may extract the rolling identifier, such as by parsing the received message to identify the payload of the rolling identifier.

In block 2019, the central server may select a wireless identity transmitter (i.e., selected wireless identity transmitter) to evaluate. In other words, the central server may obtain a stored *deviceID, K,* and nonce or counter for a registered wireless identity transmitter known to the central server, such as from the database or data table storing such information for all registered wireless identity transmitters. In block 2218, the central server may increment the selected wireless identity transmitter's nonce or counter to the server's current time. In an embodiment, the central server may then increment the stored nonce or counter value to account for the time that has elapsed since the stored nonce or counter value was synchronized. As an example, the central server may compare the time of receipt of the message with the operations in block 2216 to the central server's current time (e.g., via a central server clock or time mechanism).

Based on a known periodicity that wireless identity transmitters may increment their individual nonces or counters (e.g., once every hour), the central server may increment the selected nonce or counter value to account for the time difference.

In an embodiment, the central server may only increment the selected nonce or counter an amount that represents the time between broadcasts by a wireless identity transmitter. In other words, the central server may not increment the selected nonce or counter to include the time between receiving the message within the operations in block 2216 and the time a proximity broadcast receiver received the broadcast message. For example, the proximity broadcast receiver may have buffered broadcast messages before relaying sighting messages to the central server. The central server may calculate this time difference based on metadata within the message received with the operations in block 2216. For example, a sighting message from a proximity broadcast receiver may indicate when a broadcast message was received. Thus, the amount the selected nonce or counter is incremented may be based on when the proximity broadcast receiver actually received the broadcast message and not when the message from the proximity broadcast receiver was received by the central server.

In block 2220, the central server may encode via a pseudo-random function the selected wireless identity transmitter's device identifier, secret key, and nonce or counter to generate a server-encrypted data (i.e., *C'*). The pseudo-random function may be the same pseudo-random function utilized in the operations in block 2208. In an embodiment, the generated server-encrypted data may be represented by the following equation:

$$C' = \text{MSB\_N(PRF(}\ sel\_K,\ (sel\_deviceID\ \|\ sel\_t)))),$$

where *sel_K* is the value of the selected wireless identity transmitter's secret key, *sel_deviceID* is the value of the selected wireless identity transmitter's unique device identifier, *sel_t* is the value of the selected wireless identity transmitter's nonce or counter, '∥' means concatenation, 'PRF ()' is the pseudo-random function, and 'MSB_N()' means the 'N' most significant bits (e.g., 60 bits, 74 bits, 80 bits, etc.).

In determination block 2222, the central server may determine whether the generated server-encrypted data (C') is the same as the received rolling identifier. In other words, the central server may compare the received rolling identifier to the generated server-encrypted data to determine whether they match. If the rolling identifier and the generated server-encrypted data match (i.e., determination block 2222 = "Yes"), in block 2024 the central server may identify the received message as originating from the selected wireless identity transmitter (e.g., corresponding to the selected wireless identity transmitter's unique identifier).

If the rolling identifier and the generated data do not match (i.e., determination block 2222 = "No"), in block 2224 the central server may encode device identifiers, secret keys, and nonces or counters for other wireless identity transmitters to identify the originator of the received message. In other words, the central server may select the next stored *deviceID,* nonce or counter, and K group from the database, increment that selected nonce or counter value, encode the selected *deviceID,* nonce or counter, and K, and compare the generated encoded data to the received rolling identifier until a match is found and the identity of the originator of the rolling identifier in the received message is known.

In an embodiment, when the wireless identity transmitter's battery has been removed and re-installed, the latest nonce or counter value may be persisted in the non-volatile memory of the wireless identity transmitter, so that the nonce or counter value can be read back from the non-volatile memory of the wireless identity transmitter when the battery is removed and then put back in. Alternatively, if no non-volatile memory is available or is not used, the wireless identity transmitter may fall back to the initial nonce or counter value after a battery re-installation. The central server may be required to be modified slightly to accommodate such a "counter synchronization". More specifically, in addition to trying values greater than the largest nonce or counter value for the pre-computed counter or nonce list, the central server may also try values, such as (counter+*i*) where *i*=0, ..., *n,* when a "counter synchronization" is performed. In this case, a wireless identity transmitter user may need to be informed that the battery needs to be re-installed when "counter synchronization" fails multiple times.

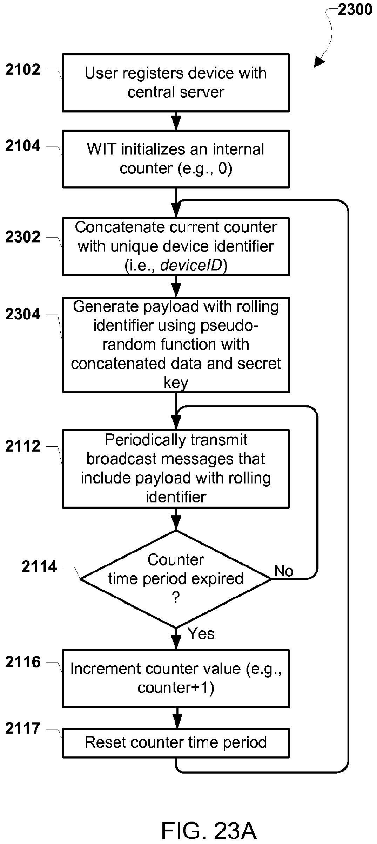

FIG. 23A illustrates an embodiment method 2300 for a wireless identity transmitter employing a pseudo-random function to generate a rolling identifier for broadcasting. The operations in the method 2300 may be similar to the embodiment method 2100 described above. However, instead of encrypting data, such as a nonce or counter value, with an AES-CTR encryption algorithm, the method 2300 may generate payloads based on the application of a pseudo-random function. As described above, the pseudo-random function and secret keys for each wireless identity transmitter may be known to both the corresponding wireless identity transmitter and a central server so that both may generate similar payloads based on similar data.

In block 2102, a user of the wireless identity transmitter may register the device with the central server. In block 2104, the wireless identity transmitter may initialize an internal nonce or counter, such as by setting the nonce or counter to a zero value. In block 2302, the wireless identity transmitter may concatenate the current nonce or counter with the wireless identity transmitter's unique device identifier (i.e., *deviceID*). In block 2304, the wireless identity transmitter may generate a payload with a rolling identifier using pseudo-random function with the concatenated data and the secret key. For example, the pseudo-random function may take as inputs the concatenated data (i.e., the *deviceID* + nonce/counter) and may use the secret key for the wireless identity transmitter as a randomness seed variable. The payload with the rolling identifier may include the output data from the pseudo-random function. In an embodiment, the payload with the rolling identifier may also include in-the-clear information regarding other aspects of the wireless identity transmitter. For example, the wireless identity transmitter may append to the payload several bits (e.g., 4 bits) of information which describe the battery status of the wireless identity transmitter. In an embodiment, the pseudo-random function may be a polynomial time computable function that is computationally indistinguishable from a random function defined on the same domain with output to the same range as the pseudo-random function. For example, the keyed hash Message Authentication Code (HMAC) or the Cipher-based Message Authentication Code (CMAC) may be used as the pseudo-random function. In an embodiment, the wireless identity transmitter may or may not perform a truncation operation to the generated rolling identifier payload. For example, the payload with the rolling identifier may be the result of performing a most-significant-bit operation on the results of the pseudo-random function.

In block 2112, the wireless identity transmitter may periodically transmit broadcast messages that include the payload with the rolling identifier, such as by broadcasting via short-range wireless communication techniques as described above. In determination block 2114, the wireless identity transmitter may determine whether a predefined nonce or counter time period has expired. If the nonce or counter time period has not expired (i.e., determination block 2114 = "No"), the wireless identity transmitter may continue with the operations in block 2112. If the device determines the nonce or counter time period has expired (i.e., determination block 2114 = "Yes"), in block 2116 the wireless identity transmitter may increment the nonce or counter value, such as by adding 1. In block 2117, the wireless identity transmitter may reset the nonce or counter time period, and may continue with the operations in block 2302.

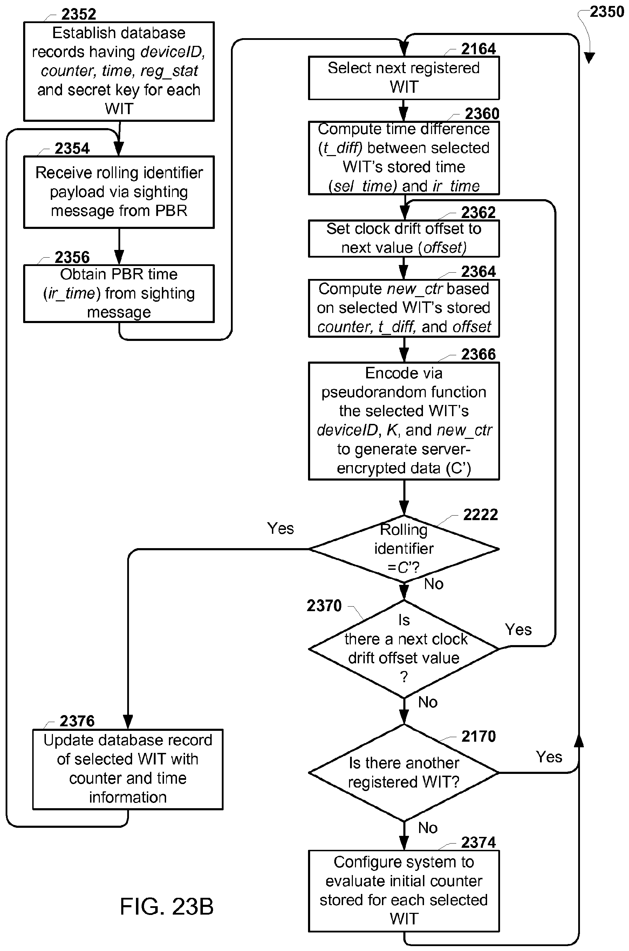

FIG. 23B illustrates an embodiment method 2350 for a central server responding to received messages containing pseudo-random function rolling identifiers. The embodiment method 2350 operations may be similar to the operations described above with reference to FIG. 21B, with the exception that the central server may compare outputs of a pseudo-random function with time-synchronized information stored in the central server to match payloads in messages received from wireless identity transmitters.

In block 2352, the central server may establish database records having device identifier (i.e., *deviceID),* nonce or counter, time, registration status (i.e., *'reg_stat'),* and secret key (i.e., *'K'*) information for each wireless identity transmitter in a system. The time may indicate the last time the central server received a message corresponding to a particular wireless identity transmitter (e.g., a sighting message relaying a broadcast message), or in other words, the central server clock value at the moment when the nonce or counter value for a wireless identity transmitter was received/recorded in the database. It may be assumed that the period between when a wireless identity transmitter broadcasts a message with a rolling identifier (or rolling identifier payload) and when the central server receives the rolling identifier is very short. Thus, the stored nonce or counter and time values may be assumed to create a roughly accurate clock status of a wireless identity transmitter.

Additionally, once a wireless identity transmitter transmits registration information, the central server may indicate a valid registration by setting a registration flag in the database for the wireless identity transmitter (e.g. *'reg_stat'*). The central server may query the database for all wireless identity transmitter records where the *reg_stat* indicates a valid registration has been conducted and may create data tables that include only registered wireless identity transmitters based on the *reg_stat* values.

In block 2354, the central server may receive a rolling identifier payload via a sighting message from a proximity broadcast receiver. The sighting message may have time information appended to the payload that describes the time at which the proximity broadcast receiver encountered the payload via a broadcast message from the respective wireless identity transmitter. For example, a payload may be received by a smartphone proximity broadcast receiver which in turn may append its own system clock reading to the payload information and transmit the data to the central server as a sighting message. The time measurement provided by the proximity broadcast receiver may be approximately synchronized with the central server system time. In an embodiment, the proximity broadcast receiver may append other additional information to the sighting message, such as location information (e.g., GPS coordinates) of the proximity broadcast receiver. In block 2356, the central server may obtain a proximity broadcast receiver time (i.e., *'ir_time'*) from the sighting message, such as indicated within the sighting message. For example, the central server may parse the sighting message and extract a time value indicating when the proximity broadcast receiver received a broadcast message that corresponds to the rolling identifier payload.

In blocks 2164-2374, the central server may perform an operational loop in which the central server may evaluate all registered wireless identity transmitters stored within the central server's database to find a device record that matches the received rolling identifier payload. In block 2164, the central server may select a next registered wireless identity transmitter. For example, the central server may iteratively select the next wireless identity transmitter represented in a data table of all wireless identity transmitters that have the *reg_stat* variable set to indicate registration occurred. The central server may sequentially iterate through such a data table or list for each device during the operations in blocks 2164-2374. In an embodiment, the central server may access a stored database record corresponding to the selected registered wireless identity transmitter that contains the current values for the information established with registration operations in block 2352.

In block 2360, the central server may compute the time difference (i.e., 't_diff') between the time indicated in the sighting message (ir_time) and the time stored within the database record of the selected registered wireless identity transmitter (i.e., 'sel_time'). For example, the t_diff value may be a non-zero or a zero value. This time difference may be a measure of the expected elapsed time between instances of the central server receiving payloads from the selected wireless identity transmitter.

In block 2362, the central server may set a clock drift offset (i.e., 'offset') to a next value. In general, the central server may account for possible wireless identity transmitter clock drift (e.g., inaccurate device system clock readings) by setting the clock drift offset value. The clock drift offset values may represent offsets that, when applied to nonce or counter values, may represent nonces or counters lower, the same, or higher than an expected nonce or counter value. In other words, the clock drift offsets may represent time before, during, or after the time represented by the current nonce or counter for the selected registered device. The clock drift offset value may be one of a sequence of clock drift offset values. In an embodiment, the clock drift offset value may be 0. In an embodiment, possible clock drift offset values may include numbers within a set {-N, ..., -1, 0, 1, ... , N}, where N is an arbitrary number.

In block 2364, the central server may compute an expected nonce or counter value (i.e., 'new_ctr') using the selected wireless identity transmitter's stored nonce or counter value, the computed time difference (i.e., t_diff) and the set offset value (i.e., offset). As described above, the nonce or counter may be stored within the selected registered wireless identity transmitter database record. For example, the central server may calculate new_ctr by adding the clock drift offset value to the sum of the t_diff value and the stored nonce or counter value.

In determination block 2366, the central server may encode via a pseudo-random function the selected wireless identity transmitter's device identifier, secret key, and computed nonce or counter (i.e., new_ctr) to generate a server-encrypted data (i.e., C'). The pseudo-random function may be the same pseudo-random function utilized by a wireless identity transmitter as described above with reference to FIG. 23A.

In determination block 2222, the central server may determine whether the generated server-encrypted data (C') is the same as the received rolling identifier. In other words, the central server may compare the received rolling identifier to the generated server-encrypted data to determine whether they match. If the rolling identifier and the generated server-encrypted data match (i.e., determination block 2222 = "Yes"), the central server may identify the received message as originating from the selected wireless identity transmitter (e.g., corresponding to the selected wireless identity transmitter's unique identifier). In an embodiment, the secret key (K) may be the seed value of the pseudo-random function. In an embodiment, the central server may concatenate the selected wireless identity transmitter's deviceID and the computed new_ctr value and provide that concatenated data to the pseudo-random function. The pseudo-random function may return (or output) encrypted data having a similar structure as received rolling identifier payload.

If the rolling identifier, such as received in the sighting message, and the generated server-encrypted data (i.e., C') match (i.e., determination block 2222 = "Yes"), in block 1276 the central server may update the database record of the selected wireless identity transmitter with the nonce or counter and time information, such as the new_ctr and the ir_time. For example, the central server may update the database record's time value to represent the time of receipt of the payload within the proximity broadcast receiver (e.g., ir_time) and may also update the stored nonce or counter value to represent the new_ctr value. The central server may continue with the operations in block 2354.

If the rolling identifier, such as received in the sighting message, and the generated server-encrypted data (i.e., C') do not match (i.e., determination block 2222 = "No"), the central server may determine whether there is a next clock drift offset value in determination block 2370. In other words, the central server may determine whether new_ctr values have been computed using all possible clock drift offset values (e.g., -1, 0, 1, etc.). If there is a next clock drift offset value (i.e., determination block 2370 = "Yes"), the central server may continue with the operations in block 2362. However, if there is not a next clock drift offset value (i.e., determination block 2370 = "No"), in determination block 2170, the central server may determine whether there is another registered wireless identity transmitter to evaluate. If there is another registered wireless identity transmitter to evaluate (i.e., determination block 2170 = "Yes"), the central server may continue with the operations in block 2164. However, if there is no other registered wireless identity transmitter (i.e., determination block 2170 = "No"), in block 2374 the central server may configure the system to evaluate initial nonce or counter values stored for each registered wireless identity transmitter. In an embodiment, the registration database described above may further include data that represents the initial nonce or counter value corresponding to each registered wireless identity transmitter. This initial nonce or counter value may be used if/when the various wireless identity transmitters are rebooted or otherwise reset their counters. For example, a wireless identity transmitter may operate and deliver payloads describing non-initial nonces or counters for a period of time before resetting its internal nonce or counter due to battery replacement. In such a scenario, the wireless identity transmitter may broadcast messages that include rolling identifier payloads based on reset nonce or counter information.

In another embodiment, the operations in block 2374 may be performed for individual registered selected devices during the operational loop in blocks 2362-2370, wherein the stored nonce or counter value in block 2364 may be replaced with the initial stored nonce or counter value. For example, once the central server determines a selected registered wireless identity transmitter's stored nonce or counter value with the various clock drift offset values cannot be used to generate encrypted data that matches the received rolling identifier payload, the central server may evaluate the initial stored nonce or counter value of the selected wireless identity transmitter before selecting the next registered wireless identity transmitter.

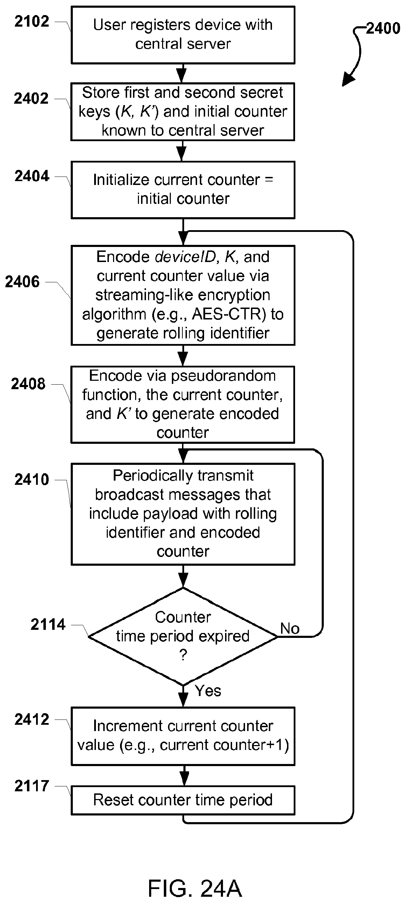

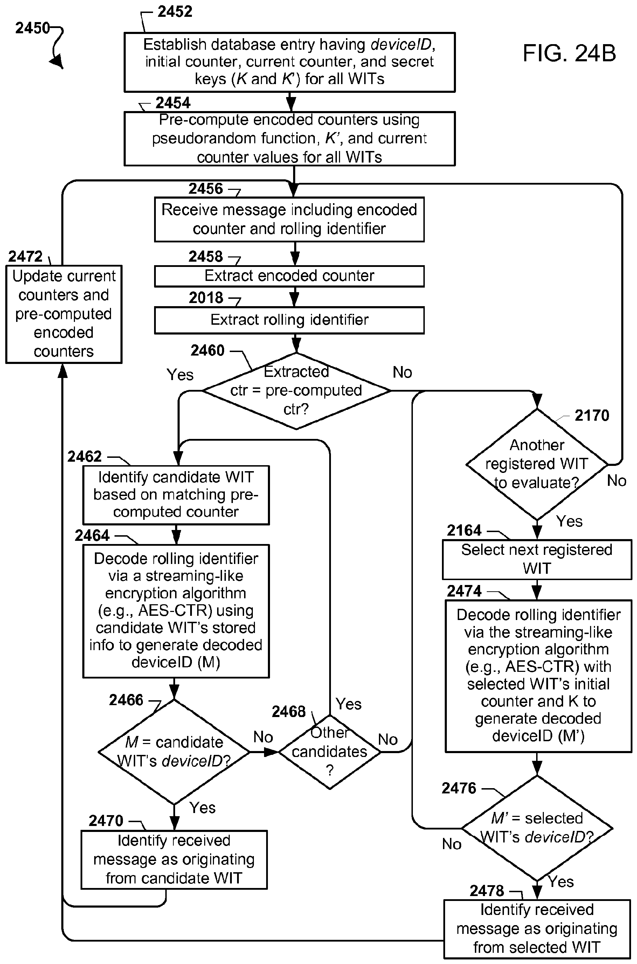

FIG. 24A illustrates an embodiment method 2400 for a wireless identity transmitter generating and broadcasting messages with rolling identifiers and encoded nonces or counters. The method 2400 may have operations performed by a wireless identity transmitter that are similar to those described above with reference to FIGS. 20, 21A, 22, and 23A. However, the method 2400 may involve broadcasting messages that include a rolling identifier (i.e., an encoded device identifier) as well as an encoded nonce or counter that may be evaluated separately by the central server with the operations described below with reference to FIG. 24B. In this manner, the wireless identity transmitter's nonce or counter value (or nonce) may not be sent in the clear in the payload of the broadcast message.

In block 2102, a user of the wireless identity transmitter may register the device with the central server. For example, the wireless identity transmitter may provide the unique device identifier (i.e., *deviceID*) to a central server for storage in a database of registered wireless identity transmitters. In block 2402, the wireless identity transmitter may store a first secret key (K) and a second secret key (K') and an initial nonce or counter that are known to the central server. For example, these values may be shared between the central server and the wireless identity transmitter during registration operations described in this disclosure. In block 2404, the wireless identity transmitter may initialize a current nonce or counter by setting it to the value of the initial nonce or counter value.

Similar to as described above with reference to FIG. 20, in block 2406, the wireless identity transmitter may encode the device identifier (*deviceID*), the first secret key (*K*), and the current nonce or counter via a streaming-like encryption algorithm (e.g., AES-CTR) to generate a rolling identifier. In block 2408, the wireless identity transmitter may encode via a pseudo-random function, the current nonce or counter, and the second secret key (*K'*) to generate an encoded counter or nonce. In an embodiment, the encoded nonce or counter may be represented by the following equation:

$$\text{Encoded nonce/counter} = \text{MSB\_M}(\text{PRF}(K', t)),$$

where '*K*'' is a per-device second secret key (usually different from the first per-device secret key *K*), '*t'* is the current nonce or counter, PRF ()' is the pseudo-random function, and 'MSB_M()' means the 'M' most significant bits (e.g., 20 bits).

In block 2410, the wireless identity transmitter may periodically transmit broadcast messages that include the payload with the rolling identifier and the encoded nonce or counter. In determination block 2114, the wireless identity transmitter may determine whether a predefined nonce or counter time period has expired. If the nonce or counter time period has not expired (i.e., determination block 2114 = "No"), the wireless identity transmitter may continue with the operations in block 2410. If the device determines the nonce or counter time period has expired (i.e., determination block 2114 = "Yes"), in block 2412 the wireless identity transmitter may increment the current nonce or counter value, such as by adding 1. In block 2117, the wireless identity transmitter may reset the nonce or counter time period and may continue with the operations in block 2406.

FIG. 24B illustrates an embodiment method 2450 for a central server receiving and handling messages including rolling identifiers and encoded nonces or counters. The central server may perform the operations of method 2450 in combination or response to a wireless identity transmitter performing the method 2400 described above. The method may include two passes: a first pass wherein the central server attempts to identify a wireless identity transmitter based on an encoded nonce or counter within a received message (e.g., a sighting message), and a second pass wherein the central server attempts the identification based on a rolling identifier to within the received message

In block 2452, the central server may establish a database entry having a device identifier (i.e., *deviceID*), initial nonce or counter, current nonce or counter, and secret keys (*K* and *K'*) for all wireless identity transmitters in the system. The current nonce or counter values may be the same as the initial nonces or counters at the time of registration of wireless identity transmitters. In block 2454, the central server may pre-compute encoded nonces or counters using a pseudo-random function, the second secret key (K'), and current nonce or counter values for all wireless identity transmitters. For example, the central server may generate a plurality of encoded nonce or counter values for each registered wireless identity transmitter, such as one based on the current nonce or counter value, another based on a value one larger than the current counter value, etc. In an embodiment, the central server may pre-compute 24 encoded nonce or counters for each registered wireless identity transmitter. In an embodiment, the central server may store a separate list (or data table) of the pre-computed encoded nonces or counters for all registered wireless identity transmitters that also includes the device identifiers associated with each stored pre-computed encoded nonce or counter.

In block 2456, the central server may receive a message including an encoded nonce or counter and a rolling identifier, such as within a sighting message transmitted by a proximity broadcast receiver. In block 2458, the central server may extract an encoded nonce or counter from the received message, and in block 2018 may extract a rolling identifier from the received message. In determination block 2460, the central server may determine whether the extracted nonce or counter (or *'ctr'*) matches any of the pre-computed nonce or counters. For example, the central server may compare the encoded nonce or counter value extracted from the received message to the plurality of central server-encoded nonce or counter values for each registered wireless identity transmitter to identify any matches. If the extracted nonce or counter matches a pre-computed nonce or counter (i.e., determination block 2460 = "Yes"), in block 2462 the central server may identity a candidate wireless identity transmitter based on the matching pre-computed nonce or counter. In other words, the central server may identity the candidate as the *deviceID* stored in relation to the pre-computed nonce or counter in a data table in the central server. In block 2464, the central server may decode the rolling identifier via a streaming-like encryption algorithm (e.g., the same AES-CTR wireless identity transmitters use when performing the operations in FIG. 24A) using the candidate wireless identity transmitter's stored information (e.g., *deviceID,* secret key, etc.) to find a decoded device identifier (or *M*). In determination block 2466, the central server may determine whether the decoded device identifier (*M*) matches the candidate wireless identity transmitter's *deviceID.* Such a match may enable the central server to identify the wireless identity transmitter associated with that received rolling identifier without decoding the rolling identifier or the encoded nonce or counter value. If the *deviceID* and decoded identifier (*M*) match (i.e., determination block 2466 = "Yes"), in block 2470 the central server may identity the received message as originating from the candidate wireless identity transmitter. In block 2472, the central server may update current nonces or counters and pre-computed encoded nonces or counters. For example, the database entry for the wireless identity transmitter identified as the originator of the received message may be updated with new current nonce or counter information as well as new pre-computed encoded nonces or counters. Additionally, any stored lists of pre-computed encoded nonces or counters may have older pre-computed encoded nonces or counters removed at the same time newly computed encoded nonces or counters corresponding to the identified wireless identity transmitter are added to the list. In another embodiment, if the wireless identity transmitter identified as the originator of the received message is indicated in the central server's database as "not activated" (i.e., a flag is not set), then the central server may also adjust the database to reflect that the identified wireless identity transmitter is now activated (e.g., set a flag). The central server may then continue with the operations in block 2456.

If the *deviceID* and decoded identifier (*M*) do not match (i.e., determination block 2466 = "No"), in determination block 2468, the central server may determine whether there are other candidates, such as other registered wireless identity transmitters that have not been evaluated by the central server. If there are other candidates (i.e., determination block 2468 = "Yes"), the central server may continue with the operations in block 2462, such as by identifying the next wireless identity transmitter to evaluate regarding the rolling identifier.

If there are no other candidates (i.e., determination block 2468 = "No"), or if the extracted nonce or counter does not match the pre-computed nonce or counter (i.e., determination block 2460 = "No"), the central server may attempt to identify the originator of the received message by comparing the extracted rolling identifier to information associated with all registered wireless identity transmitters in the system. Thus, in determination block 2170 the central server may determine whether there is another registered wireless identity transmitter to evaluate. For example, the central server may iteratively use information of all registered wireless identity transmitters. If there is not another (i.e., determination block 2170 = "No"), the central server may continue with the operations in block 2456.

If there is another (i.e., determination block 2170 = "Yes"), in block 2164 the central server may select the next registered wireless identity transmitter. In block 2474, the central server may decode the rolling identifier via the streaming-like encryption algorithm (e.g., AES-CTR) with the selected wireless identity transmitter's initial nonce or counter and first secret key (K) to find a decoded device identifier (*M'*), similar to as described above with reference to FIG. 20. In determination block 2476, the central server may determine whether the decoded device identifier (*M'*) matches the selected wireless identity transmitter's *deviceID.* If the identifiers do not match (i.e., determination block 2476 = "No"), the central server may continue with the operations in determination block 2170. However, if the identifiers match (i.e., determination block 2476 = "Yes"), in block 2478 the central server may identify the received messages as originating from the selected wireless identity transmitter, and may continue with the operations in block 2472.

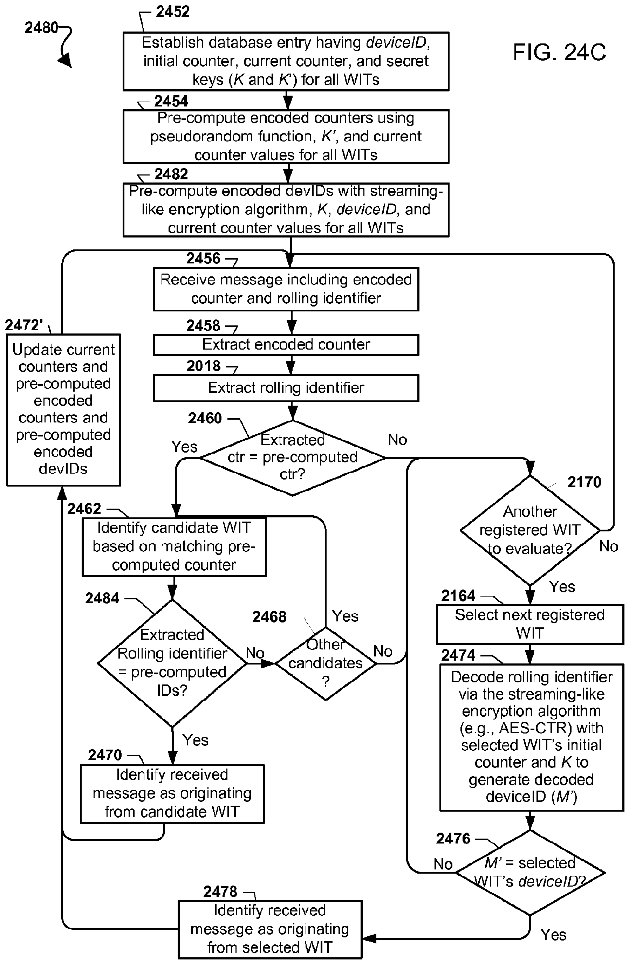

FIG. 24C illustrates an embodiment method 2480 for a central server receiving and handling messages including rolling identifiers and encoded nonces or counters. The operations of method 2480 are similar to the operations of method 2450, except that rather than perform a two pass process as discussed above in FIG. 24B, the central server may perform method 2480 as a one pass process. In particular, the central server may generate both a plurality of central server encrypted nonce or counter values for each registered wireless identity transmitter and a plurality of central server-encrypted device identifiers (i.e., *deviceID*). The central server may use the data stored in the database for each wireless identity transmitter (e.g., *deviceID, K, K',* initial nonce or counter, and current nonce or counter) and the plurality of pre-computed nonce or counter values for each device to encode a plurality of central server encrypted nonce or counter values and a plurality of server encrypted device IDs. When the central server receives the sighting message including the rolling identifier and encoded nonce or counter, the central server may compare the plurality of central server encrypted nonce or counter values and the plurality of central server encoded device IDs to the rolling identifier and encoded nonce or counters obtained from the received sighting message. The device identifier of the wireless identity transmitter that originated the rolling identifier may then be identified based entirely on matching the pre-computed nonce or counter values and device identifiers without requiring actual decoding of the rolling identifier itself.

In block 2452, the central server may establish a database entry having a device identifier (i.e., *deviceID*), initial nonce or counter, current nonce or counter, and secret keys ($K$ and $K'$) for all wireless identity transmitters in the system. In block 2454, the central server may pre-compute encoded nonces or counters using a pseudo-random function, the second secret key ($K'$), and current nonce or counter values for all wireless identity transmitters. In block 2482, the central server may pre-compute encoded device identifiers with a streaming-like encryption algorithm (e.g., AES-CTR block cipher), the device identifier, current nonce or counter, and the first secret key ($K$) for all wireless identity transmitters. In other words, the central server may generate a plurality of encoded device identifiers for each registered wireless identity transmitter, such as by using the current nonce or counter and predefined offset nonce or counter values, or alternatively, only a single encoded device identifier based only on the current nonce or counter stored within the central server.

In block 2456, the central server may receive a message including an encoded nonce or counter and a rolling identifier, such as within a sighting message transmitted by a proximity broadcast receiver. In block 2458, the central server may extract an encoded nonce or counter from the received message, and in block 2018 may extract a rolling identifier from the received message. In determination block 2460, the central server may determine whether the extracted nonce or counter (or *'ctr'*) matches any of the pre-computed nonces or counters. If the extracted nonce or counter matches a pre-computed nonce or counter (i.e., determination block 2460 = "Yes"), in block 2462 the central server may identity a candidate wireless identity transmitter based on the matching pre-computed nonce or counter. In determination block 2484, the central server may determine whether the extracted rolling identifier matches any of the pre-computed identifiers, such as the pre-computing device identifiers for the candidate wireless identity transmitter.

If the extracted rolling identifier does match any of the pre-computed identifiers for the candidate wireless identity transmitter (i.e., determination block 2484 = "Yes"), in block 2470 the central server may identity the received message as originating from the candidate wireless identity transmitter. In block 2472', the central server may update current nonces or counters and pre-computed encoded nonces or counters and pre-computed encoded device identifiers. For example, the database entry for the wireless identity transmitter identified as the originator of the received message may be updated with new current nonce or counter information as well as new pre-computed encoded nonces or counters and pre-computed encoded device identifiers. Additionally, any stored lists of pre-computed encoded nonces or counters may have older pre-computed encoded nonces or counters or encoded device identifiers removed at the same time newly computed encoded nonces or counters or device identifiers corresponding to the identified wireless identity transmitter are added to the list. In another embodiment, if the wireless identity transmitter identified as the originator of the received message is indicated in the central server's database as "not activated" (i.e., a flag is not set), then the central server may also adjust the database to reflect that the identified wireless identity transmitter is now activated (e.g., set a flag). The central server may then continue with the operations in block 2456.

If the extracted rolling identifier does not match any of the pre-computed identifiers for the candidate wireless identity transmitter (i.e., determination block 2484 = "No"), in determination block 2468, the central server may determine whether there are other candidates, such as other registered wireless identity transmitters that have not been evaluated by the central server. If there are other candidates (i.e., determination block 2468 = "Yes"), the central server may continue with the operations in block 2462, such as by identifying the next wireless identity transmitter to evaluate regarding the rolling identifier.

If there are no other candidates (i.e., determination block 2468 = "No"), or if the extracted nonce or counter does not match the pre-computed nonce or counter (i.e., determination block 2460 = "No"), the central server may attempt to identify the originator of the received message by comparing the extracted rolling identifier to information associated with all registered wireless identity transmitters in the system. Thus, in determination block 2170 the central server may determine whether there is another registered wireless identity transmitter to evaluate. For example, the central server may iteratively use information of all registered wireless identity transmitters. If there is not another (i.e., determination block 2170 = "No"), the central server may continue with the operations in block 2456.

If there is another (i.e., determination block 2170 = "Yes"), in block 2164 the central server may select the next registered wireless identity transmitter. In block 2474, the central server may decode the rolling identifier via the streaming-like encryption algorithm (e.g., AES-CTR) with the selected wireless identity transmitter's initial nonce or counter and first secret key ($K$) to find a decoded device identifier ($M'$). In determination block 2476, the central server may determine whether the decoded device identifier ($M'$) matches the selected wireless identity transmitter's *deviceID.* If the identifiers do not match (i.e., determination block 2476 = "No"), the central server may continue with the operations in determination block 2170. However, if the identifiers match (i.e., determination block 2476 = "Yes"), in block 2478 the central server may identify the received messages as originating from the selected wireless identity transmitter, and may continue with the operations in block 2472'.

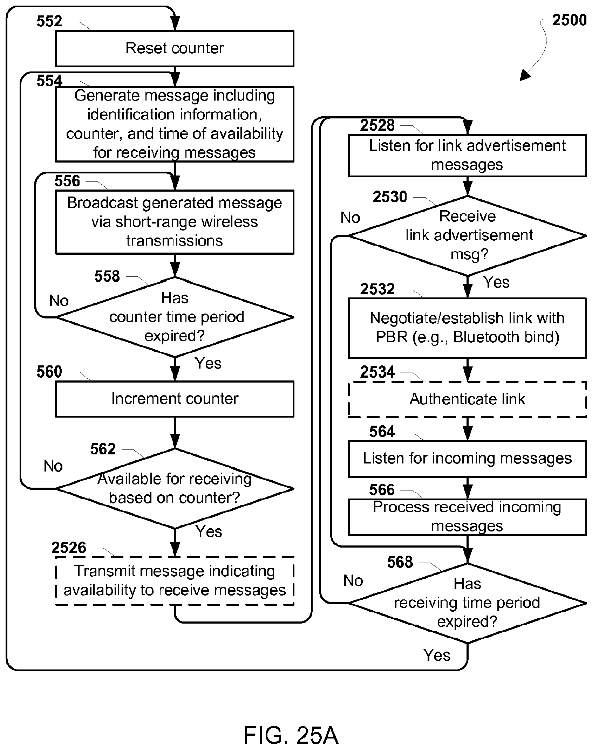

FIG. 25A illustrates an embodiment method 2500 for a wireless identity transmitter performing two-way wireless communications with a proximity broadcast receiver via a negotiated communications link. As described above, the wireless identity transmitter may receive and process short-range wireless transmissions (e.g., Bluetooth LE packets, etc.) from proximity broadcast receivers. However, the wireless identity transmitter may also receive data from particular proximity broadcast receivers using negotiated, one-to-one communication links. An example of such a link may be achieved by a Bluetooth® pairing and/or bonding.

In block 552, the wireless identity transmitter may reset a nonce or counter, such as a nonce or counter variable to indicate the beginning (or initialization) of a period during which the wireless identity transmitter may not receive messages. In block 554, the wireless identity transmitter may generate a message including identification information, nonce or counter, and time of availability for receiving messages. In block 556, the transmitter may broadcast the generated message via short-range wireless transmissions, such as Bluetooth LE packets. In determination block 558, the wireless identity transmitter may determine whether the predetermined nonce or counter time period has expired. If the nonce or counter time period has not expired (i.e., determination block 558 = "No"), the wireless identity transmitter may continue to broadcast the generated message periodically in block 556.

If the nonce or counter time period has expired (i.e., determination block 558 = "Yes"), in block 560 the wireless identity transmitter may increment the nonce or counter and, in determination block 562, determine whether the wireless identity transmitter has become available for receiving messages based on the nonce or counter value. If it is not available to receive messages (i.e., determination block 562 = "No"), the wireless identity transmitter may continue with the operations in block 554 to generate a new message to broadcast. If the wireless identity transmitter is available to receive messages (i.e., determination block 562 = "Yes"), in optional block 2526 the wireless identity transmitter may transmit a message indicating its availability to receive messages. In an embodiment, this message may include information already transmitted within the various generated broadcast messages transmitted in block 556.

In block 2528, the wireless identity transmitter may listen for link advertisement messages, which may be messages transmitted by proximity broadcast receivers indicating information required for establishing a communication link. For example, a link advertisement message may include a Bluetooth MAC address or other information needed by a proximity broadcast receiver to pair with the wireless identity transmitter. In determination block 2530, the wireless identity transmitter may determine whether a link advertisement message, such as from a proximity broadcast receiver, has been received. If no link advertisement message is received (i.e., determination block 2530 = "No"), the wireless identity transmitter may determine whether the receiving time period has expired in determination block 568. The receiving time period may be the period of availability for receiving link advertisements messages.

If a link advertisement message has been received (i.e., determination block 2530 = "Yes"), in block 2532, the wireless identity transmitter may negotiate (or establish) the communications link with a proximity broadcast receiver. For example, the wireless identity transmitter may establish a Bluetooth binding and pairing with the proximity broadcast receiver based on information within the received link advertisement message. In optional block 2534, the wireless identity transmitter may authenticate the link. Such an authentication may ensure that the identity of the proximity broadcast receiver indicated within the link advertisement message is the same as the device participating in the negotiated/established communication link. In an embodiment, such an authentication may involve transmitting data packets requesting confirmation of identity and performing comparisons of data received through the established link and received in the link advertisement message. In an embodiment, the authentication may involve comparing receiving PIN information transmitted by the paired proximity broadcast receiver to a list of known or acceptable PIN values stored in the wireless identity transmitter. Once the communication link has been established (and authenticated), in block 564 the wireless identity transmitter may listen for incoming messages, such as data from the proximity broadcast receiver via the negotiated link, and in block 566 may process received incoming messages. In determination block 568, the wireless identity transmitter may determine whether the receiving time period has expired. If so (i.e., determination block 568 = "Yes"), the wireless identity transmitter may continue with the operations in block 552. However, if the receiving time period has not expired (i.e., determination block 568 = "No"), the wireless identity transmitter is still available to receive messages and may continue to listen for link advertisement messages in block 2528.

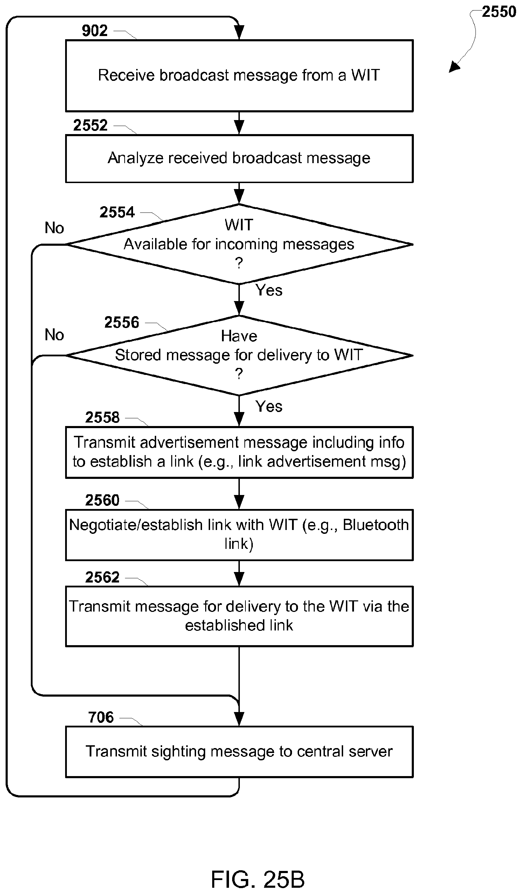

FIG. 25B illustrates an embodiment method 2550 for a proximity broadcast receiver transmitting messages to an available wireless identity transmitter. The operations of the method 2550 may correspond with the operations described above with reference to FIG. 25A. In block 902, the proximity broadcast receiver may receive a broadcast message from the wireless identity transmitter, such as a Bluetooth LE broadcast. In block 2552, the proximity broadcast receiver may analyze the received broadcast message. The proximity broadcast receiver may analyze header or metadata within the received broadcast message, as well as parse and evaluate various data within the message. In an embodiment, the broadcast message may contain encrypted and non-encrypted data which the receiver may or may not be configured to decrypt or otherwise access. In an embodiment, the proximity broadcast receiver may transmit the received broadcast message to a central server to decrypt, process, and provide instructions in a return message indicating how the proximity broadcast receiver may respond to the received broadcast message. For example, the return message may direct the proximity broadcast receiver to transmit a link advertisement message or begin a pairing operation with the wireless identity transmitter.

Additionally, as described above, the received broadcast message may contain timing, nonce or counter, countdown, or scheduling information indicating the availability of the wireless identity transmitter for receiving messages. For example, the received broadcast message may indicate that the wireless identity transmitter will accept incoming messages within a specified time window. As another example, the proximity broadcast receiver may determine that it may transmit messages to the wireless identity transmitter when received broadcast messages contain particular information (e.g., symbols indicating availability).

Based on the analysis of the received broadcast message, in determination block 2554, the proximity broadcast receiver may determine whether the wireless identity transmitter is available for incoming messages. In other words, the proximity broadcast receiver may determine whether the received broadcast message includes information that indicates when the wireless identity transmitter may be available for receiving messages from the proximity broadcast receiver. If the wireless identity transmitter is available for receiving incoming messages (i.e., determination block 2554 = "Yes"), in determination block 2556 the proximity broadcast receiver may determine whether there is a stored message (e.g., stored in memory) for delivery to the wireless identity transmitter. In an embodiment, the wireless identity transmitter may receive messages for delivery from a central server. Alternatively, the messages for delivery to the wireless identity transmitter may instead be generated by the proximity broadcast receiver. For example, a smartphone proximity broadcast receiver (or mobile proximity broadcast receiver) may receive user input within a software application (or "app") instructing the wireless identity transmitter to modify its behavior (e.g., signaling schedule, strength, etc.). The messages to be delivered may include software or firmware upgrades, instructions for execution, configuration information, debug commands, and other data to be utilized by the wireless identity transmitter. For example, the message for delivery may direct the wireless identity transmitter to activate sensor units, such as accelerometers, and begin gathering sensor data for incorporation into subsequent broadcast messages. The message for delivery may also instruct the wireless identity transmitter to modulate the signal strength of broadcasts, decrease or increase the frequency of broadcasts, change the data represented within broadcast messages, and otherwise adjust the characteristics of subsequent transmissions and/or change the behavior of the wireless identity transmitter. For example, the wireless identity transmitter may be directed to shorten its broadcast signal range to emulate near field communications (NFC).

If the proximity broadcast receiver has a message for delivery to the wireless identity transmitter (i.e., determination block 2556 = "Yes"), in block 2558 the proximity broadcast receiver may transmit a link advertisement message including information to establish a link. The link advertisement message may include information required by the wireless identity transmitter for establishing a Bluetooth® pairing/bonding. In block 2560, the proximity broadcast receiver may negotiate (or establish) a link with the wireless identity transmitter. For example, the wireless identity transmitter and proximity broadcast receiver may establish a secured Bluetooth® link. Once the link is established, in block 2562, the proximity broadcast receiver may transmit the message for delivery via the established link with the wireless identity transmitter.

If the wireless identity transmitter is not available for receiving incoming messages (i.e., determination block 2554 = "No"), or if the proximity broadcast receiver has no message for delivery to the wireless identity transmitter (i.e., determination block 2556 = "No"), or if the proximity broadcast receiver has transmitted messages for delivery via an established link with the operations in block 2562, in block 706 the proximity broadcast receiver may transmit a sighting message to a central server, and continue with the operations in block 902.

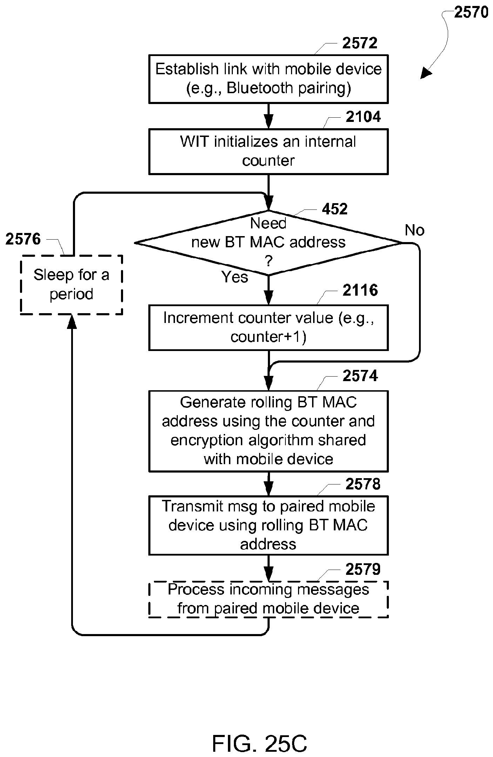

FIG. 25C illustrates an embodiment method 2570 for a wireless identity transmitter to transmit messages with increased security using a rolling Bluetooth MAC address while paired with a mobile device. As described above, when transmitting packets via Bluetooth protocols, the wireless identity transmitter may be configured to periodically change the Bluetooth MAC (referred to in FIG. 25C as "BT MAC address") address represented within each Bluetooth message to maintain privacy. This is important because even when utilizing encryption algorithms (as described above) to generate rolling identifiers for broadcasting within transmissions, the wireless identity transmitter may be followed or tracked based on static information within its transmissions. For example, nefarious packet sniffers may follow the wireless identity transmitter based on a static Bluetooth MAC address within its broadcast messages that include rolling identifiers (e.g., payloads with encrypted device IDs). In various embodiments, the wireless identity transmitter may utilize the encryption schemes described above to obfuscate a Bluetooth MAC address to create rolling Bluetooth MAC addresses in similar manners as device identifiers are obfuscated. In various embodiments, any communication device configured to communicate via Bluetooth transmissions and/or pair with other wireless devices may perform the method 2570 to increase privacy when transmitting short-range wireless transmissions. For example, a wireless earpiece (or headphones) may perform the method 2570 when paired to a smartphone.

In block 2572, the wireless identity transmitter may establish a link with a mobile device. For example, the wireless identity transmitter may perform standard Bluetooth pairing with a known mobile device, such as a user's phone. In block 2104, the wireless identity transmitter may initialize an internal nonce or counter, such as by setting the nonce or counter to 0 or some random number. In determination block 452, the wireless identity transmitter may determine whether it needs a new Bluetooth MAC address. This determination may be based on the expiration of a timer, signals received instructing a new MAC address, or any other mechanism to periodically cause new Bluetooth MAC addresses to be generated. For example, a timer may expire every few minutes, hours, etc. that indicates the wireless identity transmitter should generate a new Bluetooth MAC address. If a new Bluetooth MAC address is needed (i.e., determination block 452 = "Yes"), in block 2116, the wireless identity transmitter may increment the nonce or counter value, such as by increasing the value by a set number (e.g., '1').

If no new Bluetooth MAC address is needed (i.e., determination block 452 = "No"), or if a the nonce or counter was incremented, in block 2574 the wireless identity transmitter may generate a rolling Bluetooth MAC address using the nonce or counter and an encryption algorithm shared with the mobile device. Such an algorithm may be enable any of the encryption algorithms or techniques described above (e.g., pseudorandom function, AES-CTR, etc.). In block 2578, the wireless identity transmitter may transmit a message to the paired mobile device using the rolling Bluetooth MAC address. For example, the packet may include data that indicates that the packet was transmitted by a device associated with or identified by the rolling Bluetooth MAC address. In optional block, the wireless identity transmitter may process any incoming messages from the paired mobile device. For example, the wireless identity transmitter may received and utilize firmware, software instructions, configuration data, and other information the mobile device transmits. In optional block 2576, the wireless identity transmitter device may sleep for a period, such as a few milliseconds, seconds, or minutes, and then may continue with the operations in determination block 452.

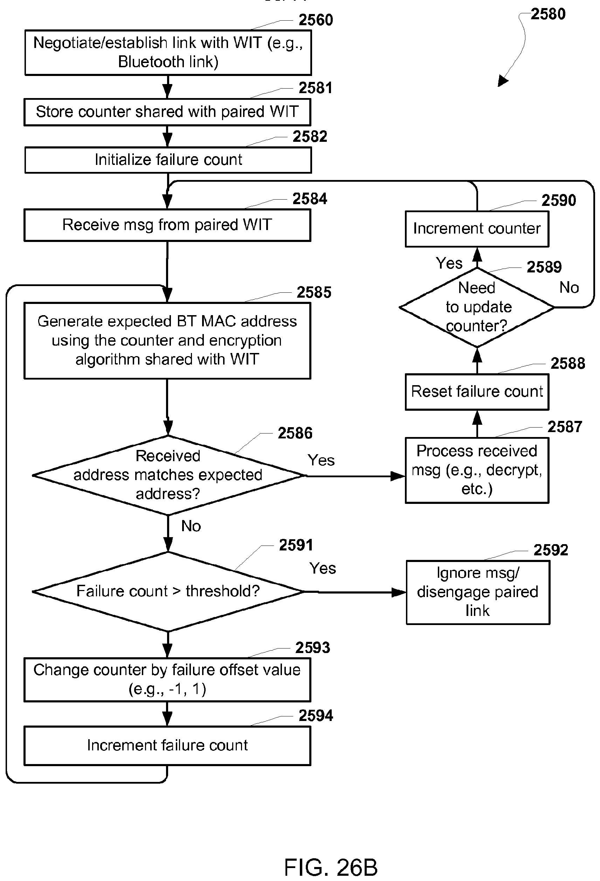

FIG. 25D illustrates an embodiment method 2580 for a mobile device, such as a smartphone, to process received messages from a wireless identity transmitter utilizing a rolling Bluetooth MAC address. In various embodiments, the mobile device may utilize the encryption (and/or decryption) schemes described above to decode and/or replicate rolling Bluetooth MAC addresses within received transmissions in order to maintain a link with a wireless identity transmitter. In block 2560, the mobile device may negotiate and/or establish a link with a wireless identity transmitter, such as a Bluetooth paired link. The mobile device may maintain a list of all devices that may pair with the mobile device, as well as any initial information required to establish such a link. In block 2581, the mobile device may store a nonce or counter shared with the paired wireless identity transmitter. This nonce or counter may be received during the establishment of the link or may instead be a pre-provisioned, such as during a bonding or registration procedure between the mobile device and the wireless identity transmitter. In various embodiments, the mobile device may be any communication device that employs a Bluetooth radio and/or Bluetooth communication protocols.

In block 2582, the mobile device may initialize a failure count. In other words, the mobile device may store a number of failures, such as in an integer system variable. In block 2584, the mobile device may receive a message from the paired wireless identity transmitter. In block 2585, the mobile device may generate an expected Bluetooth MAC address using the nonce or counter and an encryption algorithm shared with the wireless identity transmitter. The algorithm may be similar to those described above and may be performed as software or other operations in order to generate rolling Bluetooth MAC addresses that can be compared to addresses within received transmissions from the paired wireless identity transmitter.

In determination block 2586, the mobile device may determine whether received address matches the expected address. In other words, the mobile device may match the generated expected Bluetooth MAC address with the address indicated within the received message from the paired wireless identity transmitter.

If the addresses match (i.e., determination block 2586 = "Yes"), in block 2587 the mobile device may process the received message, such as by decrypting information within, transmitting messages to a central server reporting the receipt of the received message (e.g., sighting message), or performing software operations with data from the received message (e.g., configuring an application on a smartphone). In block 2588, the mobile device may reset the failure count and in determination block 2589 may determine whether the nonce or counter needs to be updated. The operations in determination block 2589 may be similar to those performed by the wireless identity transmitter in determination block 452 described above with reference to FIG. 25C. For example, the mobile device may need to update the nonce or counter every few clock cycles or in response to receiving a certain number of messages from the paired device. If the nonce or counter does need to be updated (i.e., determination block 2589 = "Yes"), in block 2590 the mobile device may increment the nonce or counter, such as by '1.' If the nonce or counter does not need to be updated (i.e., determination block 2589 = "No"), or if the nonce or counter has been incremented, the mobile device may continue with the operations in block 2584.

If the addresses do not match (i.e., determination block 2586 = "No"), in determination block 2591, the mobile device may determine whether a failure count exceeds a threshold. In other words, the value of the failure count (e.g., system variable) may be compared to a predefined number of times that the mobile device is allowed to fail to match the received address to an expected address before disregarding the link with the wireless identity transmitter. If the failure count exceeds the threshold (i.e., determination block 2591 = "Yes"), in block 2592, the mobile device may ignore the message and/or disengage the paired link.

If the failure count does not exceed the threshold (i.e., determination block 2591 = "No"), in block 2593 the mobile device may change the nonce or counter by a failure offset value. The mobile device may be configured to modify the nonce or counter by various offsets in order to account for nonce or counter drift between the paired devices, such as described above. For example, when an expected address does not match a received address, the mobile device may add an offset value of '1' to the nonce or counter and generate another expected Bluetooth MAC address for comparison to the received message's Bluetooth MAC address. In block 2594, the mobile device may increment the failure count, such as by increasing the value by one to indicate a generated expected Bluetooth MAC address did not match the received message's address. The mobile device may then continue with the operations in 2585 to generate a new expected address for comparison to the received message address.

FIG. 26A illustrates components of an exemplary wireless identity transmitter 110. The wireless identity transmitter 110 may include a microcontroller 2602, a short-range radio 2604 (e.g., a Bluetooth® radio or transceiver) coupled to an antenna 2606, a memory 2608, and a battery 2610. Although these components are shown linked by a common connection, they may be interconnected and configured in various ways. For example, a wireless identity transmitter 110 may be configured such that the microcontroller 2602 may determine when to transmit a message based on the contents of the memory 2608. In an embodiment, the microcontroller 2602 may be a Bluetooth system-on-chip unit. The memory 2608 may also include one or more messages or message portions to be transmitted by the short-range radio 2604 via the antenna 2606 based on commands from the microcontroller 2602. The battery 2610 may supply power as needed by the other components. Also, in some implementations the microcontroller 2602, the short-range radio 2604 and/or the memory 2608 may be integrated together as a single integrated circuit. Since these components may be microchips of standard or off-the-shelf configuration, they are represented in FIG. 26A as blocks consistent with the structure of an example embodiment.

The wireless identity transmitter 110 may be coupled with or built into various objects, such as a bracelet. For example, an exemplary wireless identity transmitter 110 may be in a form easily attached to a strap, such as a watchband or dog collar. Alternate embodiments may incorporate a wireless identity transmitter 110 into any other mobile objects that may need tracking.

The wireless identity transmitter 110 may conserve power by periodically entering a power saving mode or going to sleep, such as regularly alternating between sleeping and broadcasting of the packet with the wireless identity transmitter 110's identification code. Various embodiments may include different cycles of broadcasting and sleeping, such as some embodiments broadcasting more or less frequently, such as waking and broadcasting every few seconds or minutes between periods of sleep.

In an embodiment, the battery 2610 may be a replaceable coin cell battery. In another embodiment, the wireless identity transmitter 110 may utilize the antenna 2606 to receive update software, instructions, or other data for storage and use in configuration operations, such as configuring transmission intervals and/or transmissions power. The wireless identity transmitter 110 may also store and execute software, algorithms, instructions, code, or other routines for generating rolling codes or identifiers, as described above with reference to FIG. 3. In an embodiment, the wireless identity transmitter may not maintain time (e.g., UTC) information, but may instead use a 30 ppm 16 kHz crystal as a clock. Such use of a crystal as a clock may create a timing drift of approximately 40 seconds per year.

FIG. 26B illustrates components of an embodiment wireless identity transmitter 110. Similar to the embodiment described above with reference to FIG. 26A, the wireless identity transmitter 110 may include a microcontroller 2602, a short-range radio 2604 (e.g., Bluetooth®, BTLE, Zigbee®, Peanut®, etc.) connected to an antenna 2606 and coupled to the microcontroller 2602, memory 2608, and a battery unit 2610. Alternatively the memory 2608 may be contained within the microcontroller 2602, which may also include a separate processing unit. The short-range radio 2604 may be a transmitter capable of broadcasting messages or signals including a device ID or, alternatively, a transceiver configured to transmit and receive RF signals, enabling communications with other devices utilizing a communication protocol. For example, the wireless identity transmitter 110 may be configured to communicate with other short-range radio enabled devices, such as smartphones. In an embodiment, the short-range radio 2604 may be configured to communicate via various low-energy, wireless communication protocols, such as LTE-D, peer-to-peer LTE-D, and WiFi-Direct.

In an embodiment, the wireless identity transmitter 110 may include a speaker (not shown) configured to emit a sound capable of being received by a proximity broadcast receiver and/or being heard by a heard by a user. For example, the wireless identity transmitter 110 may emit audible communications that may indicate its presence to listening proximity broadcast receivers. In another embodiment, the wireless identity transmitter 110 may be configured to transmit signals at varying signal strengths, thereby varying the range at which broadcasts from the wireless identity transmitter 110 may be received by proximity broadcast receivers.

Additionally, the wireless identity transmitter 110 may include one or more sensors for measuring various conditions and variables. In an embodiment, the wireless identity transmitter 110 may include an accelerometer 2615 (or any other motion sensor such as a gyroscope or gravitometer), which may collect data indicative of motion of an asset associated with the wireless identity transmitter 110. For example, the accelerometer 2615 may generate motion data describing the movements of a child carrying the wireless identity transmitter 110. Other sensors that may be included within the wireless identity transmitter 110 include a temperature sensor 2616 (such as a thermistor), a radiation sensor 2617, a humidity sensor 2618, and a carbon dioxide ($CO_2$) sensor 2619. In the various embodiments, the wireless identity transmitter 110 may include any combination of these and other sensors. These potential sensors are only examples of the types of sensors that may be integrated into wireless identity transmitters 110 and other types of sensors may be included. For example, the wireless identity transmitter 110 may also include sensors not shown in the various diagrams, such as a microphone, a camera, a heat sensor, a pressure sensor, and a light sensor.

FIG. 27A illustrates primary components of an exemplary proximity broadcast receiver embodiment. The proximity broadcast receiver 142 may include a short-range radio 2704 (e.g., a Bluetooth radio or transceiver) capable of communicating with a short-range wireless radio (e.g., a Bluetooth radio in the wireless identity transmitter) coupled to an antenna 2706, and a secondary network device 2708 capable of communicating directly or indirectly back to a central server 120 via a network, such as the Internet. In some embodiments, the secondary network device 2708 may be a cellular or wireless radio or a modem or other wired network device. The proximity broadcast receiver 142 may also include a processor 2702, a memory 2712, and a battery 2710 either as the primary power supply or as a backup power supply in the case of proximity broadcast receiver 142 coupled to utility power. The proximity broadcast receiver 142 may include a GPS receiver 2714 or other type of location determining mechanism for determining a current location to associate with any message received from a wireless identity transmitter. If the proximity broadcast receiver is not mobile, it may not include a GPS receiver 2714 in some embodiments since the location may be known and constant. Although these components are shown linked by a common connection, they may interconnected and configured in various ways. Since these components may be microchips of standard or off-the-shelf configuration, they are represented in FIG. 27A as blocks consistent with the structure of an example embodiment.

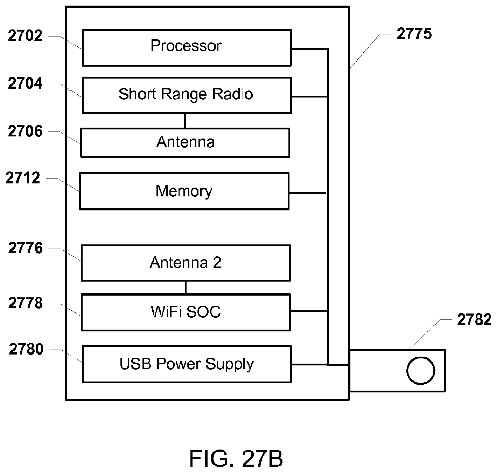

FIG. 27B illustrates an embodiment proximity broadcast receiver 2775 that can be plugged into a power outlet. Similar to the embodiment described above with reference to FIG. 27A, the proximity broadcast receiver 2775 may include a processor 2702, a memory unit 2712, and a short-range radio 2704 (e.g., Bluetooth®, Bluetooth LE, LTE-D, peer-to-peer LTE-D, Zigbee®, Peanut®, etc.) connected to an antenna 2706. The proximity broadcast receiver 2775 may also include a WiFi system-on-chip 2778 (referred to as "SOC" in FIG. 27C) coupled to a second antenna 2776. In another embodiment, the system-on-chip 2778 may be a Bluetooth Low Energy system-on-chip. The proximity broadcast receiver 2775 may utilize the system-on-chip 2778 to exchange data over a wireless local area network, such as by communicating with a WiFi router. Additionally, the proximity broadcast receiver 2775 may include a plug 2782 for interfacing with a power supply or otherwise receiving power, such as alternating current power (or "AC"). In various embodiments, the plug 2782 may be configured to connect with different power outlets standards (e.g., British Standards, National Electrical Manufacturers Association, etc.), and may include a grounding element (not shown). The plug 2782 may be coupled to a USB Power supply 2780 that provides power to the various components of the proximity broadcast receiver 2775, such as the processor 2702. In an alternative embodiment, the proximity broadcast receiver 2775 may recharge an internal battery (not shown) using power received from the plug 2782 and/or USB power supply 2780.

In an embodiment, the proximity broadcast receiver 2775 may store software instructions, such as within the memory 2712 or other circuitry that may be utilized by the processor 2702 and/or the system-on-chip 2778 to perform operations to transmit and/or receive short-range and long-range signals, respectively. In an embodiment, the proximity broadcast receiver 2775 may utilize the antennas 2706, 2776 to receive update software, instructions, or other data for storage and use in updating firmware, modifying operating parameters, and other configuration modifications.

As mentioned above, the rolling identifier and other information may be communicated within the payload of a Standard Bluetooth LE message format. Fig.28 illustrates an example Bluetooth LE message structure implementing an embodiment rolling identifier. A broadcast message 2800 according to an embodiment may include the addresses and headers of an ordinary Bluetooth LE message, data fields 2802 through 2808, and include device information and the rolling identifier within the payload portion 2810 of the Bluetooth message. For example, a broadcast message 2800 may include the standard access address block 2802, which may be 4 bytes of information identifying the type of Bluetooth message that is being transmitted, in this case, a non-connectable advertising event. Next block of data in the broadcast message 2800 may be an advertised packet data unit type 2804 (e.g., one byte of data), which may be followed by an advertised packet data unit had her 2806, which in turn is followed by an advertised packet data unit address 2808, which may be 6 bytes of data. The standard Bluetooth data fields 2802 through 2808 basically identify the message as a non-connectable advertising event, which is followed by an advertised data packet 2810 in which is included any data that is being transmitted as well as the unique rolling identifier.

The advertised data portion 2810 of the broadcast Bluetooth message 2800 may incorporate the broadcast information and rolling identifier in two portions 2820 and 2822. In advertising type Bluetooth LE packets, any type of advertising data may be included, providing flexibility for including the rolling identifier and other data within the broadcast message 2800. In an example embodiment illustrated in FIG. 28, a service universally unique user identifier (UUID) portion 2820 may be used to convey sensor or other data from the wireless identity transmitter, such as the battery state and temperature as illustrated in figure 28. For example, the data portion 2820 may include a standard Bluetooth data field 2830 that indicates the length of the data field, such as 11 HEX as illustrated in FIG. 28,which indicates that this portion of the message is 17 bytes long, which may be followed by a data type field 2832 that provides a code indicating the type of information that follows in the subsequent bytes of information. Following these header fields 2830, 2832 maybe the data portion 2834. This data portion 2834 may include a code in the form of a universally unique value that can be used as a table lookup key to obtained the intended meaning for the code. For example, globally unique identifier numbers (i.e., UUIDs) may be generated according to the procedures for creating UUIDs, which may then be linked to particular meanings, values, alerts, and/or commands in a corresponding database and may be maintained by the central server. Thus, a valid UUID may be included in the service UUID field 2834 that complies with the Bluetooth protocol but identifies a particular message or condition rather than functioning as a normal address or identifier of the device. For example, a UUID may be linked in a database to a particular battery level and temperature value or range. In this manner, the standard UUID portion of the broadcast message 2800 can be used to convey a large number of meanings, values, alerts, or commands without varying from the standard Bluetooth protocol. It may also be possible to include raw data or sensor data in the service UUID portion 2834, although such raw data would not comply with the Bluetooth protocol that this data represent a universally unique identifier.

Instead of linking UUIDs to a data table in a random manner, a standard format for UUIDs may be used to provide data fields within a range of generated UUIDs. For example, FIG. 28 illustrates and embodiment in which the service UUID data field 2834 includes a 22 bit UUID prefix 2840 and a 12 byte suffix 2846 between which three bytes of data to be transmitted are included, such as a battery level value field 2842 and a temperature value field 2844. In this example, 1024 different UUIDs may be generated that include the same UUID prefix value 2840 (e.g., 960c4) and the same UUID suffix value (e.g., 244c-11e2-b29-00a0c60077ad). This data structure then provides for three bytes of data in between the prefix and suffix for carrying data, such as two bytes to indicated the wireless identity transmitter's battery level (block 2842) and one byte for indicating a measured temperature (block 2844). This data structure is provided as an example, and many other data structures may be use and different types of information (or no information) may be communicated in this manner.

Following the service UUID portion 2820 is a data field 2822 in which the rolling identifier can be included. For example, this identifier data portion 2822 may include a packet length of byte 2835 that identifies the number of bytes of data within the packet. The data field may be followed by a packet type field 2836, which includes a code indicating the type of information that follows, in this case that the data field is manufacture specific. These header data fields may be followed by a manufacture ID field 2837 that includes 2 bytes of data (for example) that may be used to identify the manufacturer or type of wireless identity transmitter, a service provider for the system, etc. The rolling identifier may be included in a final portion 2838 of the message 2800. Various embodiment methods for generating the rolling identifier included in the final portion 2838 are described above. For example, this data field 2838 may include a nonce (e.g., a timer, nonce, or counter) and an obscured "blob" generated using the nonce, a key known only to the wireless identity transmitter and the central server, and the unique (e.g., MAC) identifier of the wireless identity transmitter. As another example discussed above, this data field 2838 may include a single "blob" that was generated using a counter/clock/nonce, a security key known to the known only to the wireless identity transmitter and the central server, and the unique (e.g., MAC) identifier of the wireless identity transmitter.

In various embodiments, the length of the rolling identifier included in the final data portion 2822 may be increased by reducing the number of bytes of data included in the service UUID portion 2820 for communicating data (i.e., data field 2834).

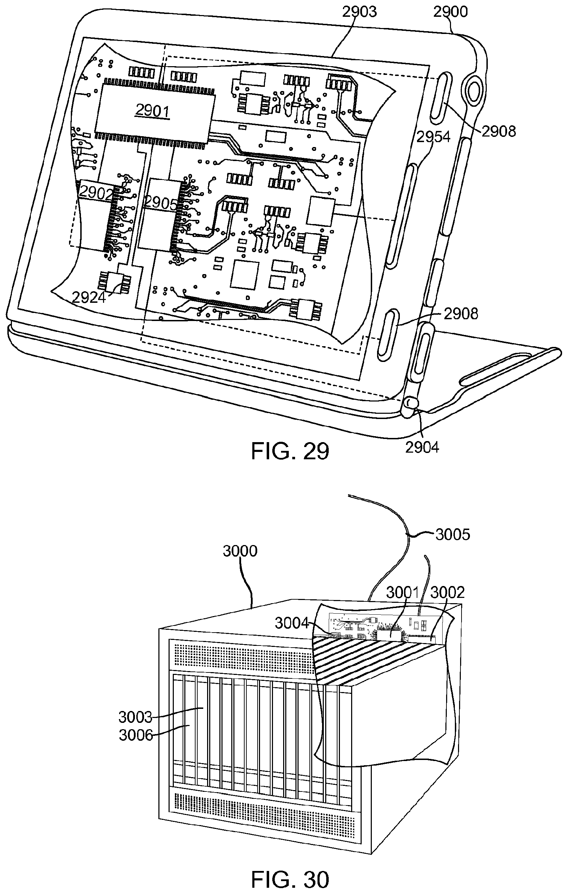

FIG. 29 is a system block diagram of a smartphone type mobile device suitable for use with various embodiments. A smartphone 2900 may include a processor 2901 coupled to internal memory 2902, a display 2903, and to a speaker 2954. Additionally, the smartphone 2900 may include an antenna 2904 for sending and receiving electromagnetic radiation that may be connected to a wireless data link and/or cell telephone transceiver 2905 coupled to the processor 2901 and capable of communicating over a wide area wireless communication network. Smartphones may include a separate short-range radio transceiver 2924 capable of communicating or pairing with wireless identity transmitters. Smartphones 2900 typically may also include menu selection buttons or rocker switches 2908 for receiving user inputs.

FIG. 30 is a system block diagram of a server 3000 suitable for implementing the various embodiments of this disclosure. The server 3000 may be a commercially available server device. Such a server 3000 typically includes a processor 3001 coupled to volatile memory 3002 and a large capacity nonvolatile memory, such as a disk drive 3003. The server 3000 may also include a floppy disc drive, compact disc (CD) or DVD disc drive 3006 coupled to the processor 3001. The server 3000 may also include network access ports 3004 coupled to the processor 3001 for establishing data connections with a network 3005, such as a local area network coupled to other broadcast system computers and servers.

The processors 2901, 3001 may be any programmable microprocessor, microcomputer or multiple processor chip or chips that can be configured by software instructions (applications) to perform a variety of functions, including the functions of the various embodiments described below. In some mobile proximity broadcast receivers, multiple processors 2901 may be provided, such as one processor dedicated to wireless communication functions and one processor dedicated to running other applications. Typically, software applications may be stored in the internal memory 2902, 3002, 3003 before they are accessed and loaded into the processor 2901, 3001. The processor 2901, 3001 may include internal memory sufficient to store the application software instructions.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored on or transmitted over as one or more instructions or code on a computer-readable medium. The steps of a method or algorithm disclosed herein may be embodied in a processor-executable software module, which may reside on a tangible, non-transitory computer-readable storage medium. Tangible, non-transitory computer-readable storage media may be any available media that may be accessed by a computer. By way of example, and not limitation, such non-transitory computer-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of non-transitory computer-readable media. Additionally, the operations of a method or algorithm may reside as one or any combination or set of codes and/or instructions on a tangible, non-transitory machine readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art. Thus, the present invention is not intended to be limited to the embodiments shown herein but is to be accorded the widest scope consistent with the following claims.

## Claims

1. A method (2000) for a server to securely identify an originator of a message including obscured information, comprising:

   associating (2012) a shared secret key with a device identifier corresponding to a wireless identity transmitter;
   receiving (2014) the message including a rolling identifier and a nonce;
   extracting (2016, 2018) the rolling identifier and the nonce from the received message;
   decoding (2020) the extracted rolling identifier using a streaming-like encryption algorithm, the shared secret key and the nonce to generate a decoded device identifier;
   determining (2022) whether the decoded device identifier matches the device identifier associated with the shared secret key; and
   identifying the originator of the received message as the wireless identity transmitter when the decoded device identifier matches the device identifier associated with the wireless identity transmitter.

2. The method (2000) of claim 1, wherein the streaming-like encryption algorithm is an AES-CTR cipher.

**3.** The method (2000) of claim 1, wherein the shared secret key has a size of 128 bits.

**4.** The method (2000) of claim 1, wherein decoding (2020) the extracted rolling identifier using a streaming-like encryption algorithm, the shared secret key and the nonce to generate a decoded device identifier further comprises decoding data that was concatenated to the device identifier prior to encryption.

**5.** A method (2000) for a wireless identity transmitter to transmit obscured information to enable one-way communication of identification information, comprising:

   initializing a nonce within the wireless identity transmitter;
   generating (2004) a rolling identifier by encoding a device identifier associated with the wireless identity transmitter with a streaming-like encryption algorithm using a secret key shared with a server and the nonce; and
   periodically broadcasting (2006) a message including the rolling identifier and the nonce using short-range wireless transmissions; and
   incrementing the nonce at a predefined interval.

**6.** The method of claim 5, wherein the nonce represents a non-repeating number generated by the wireless identity transmitter whose value changes each time the device identifier encoding is required to change.

**7.** The method of claim 5, wherein the streaming-like encryption algorithm is an AES-CTR cipher.

**8.** The method of claim 5, wherein the message is a single packet with a size of 80 bits or less and wherein the secret key is 128 bits.

**9.** A server configured to securely identify an originator of a message including obscured information, comprising:

   means for associating a shared secret key with a device identifier corresponding to a wireless identity transmitter;
   means for receiving the message including a rolling identifier and a nonce;
   means for extracting the rolling identifier and the nonce from the received message;
   means for decoding the extracted rolling identifier using a streaming-like encryption algorithm, the shared secret key and the nonce to generate a decoded device identifier;
   means for determining whether the decoded device identifier matches the device identifier associated with the shared secret key; and
   means for identifying the originator of the received message as the wireless identity transmitter when the decoded device identifier matches the device identifier associated with the wireless identity transmitter.

**10.** A wireless identity transmitter configured to transmit obscured information to enable one-way communication of identification inform, comprising:

   means for initializing a nonce within the wireless identity transmitter;
   means for generating a rolling identifier by encoding a device identifier associated with the wireless identity transmitter with a streaming-like encryption algorithm using a secret key shared with a server and the nonce; and
   means for periodically broadcasting a message including the rolling identifier and the nonce using short-range wireless transmissions; and
   means for incrementing the nonce at a predefined interval.

**11.** A non-transitory server-readable storage medium having stored thereon server-executable instructions configured to cause a server to perform operations for the server to securely identify an originator of a message including obscured information, the operations comprising:

   associating a shared secret key with a device identifier corresponding to a wireless identity transmitter;
   receiving the message including a rolling identifier and a nonce;
   extracting the rolling identifier and the nonce from the received message;
   decoding the extracted rolling identifier using a streaming-like encryption algorithm, the shared secret key and the nonce to generate a decoded device identifier;
   determining whether the decoded device identifier matches the device identifier associated with the shared secret key; and
   identifying the originator of the received message as the wireless identity transmitter when the decoded device identifier matches the device identifier associated with the wireless identity transmitter.

12. A non-transitory processor-readable storage medium having stored thereon processor-executable software instructions configured to cause a processor to perform operations for a wireless identity transmitter to transmit obscured information to enable one-way communication of identification information, the operations comprising:

initializing a nonce within the wireless identity transmitter;
generating a rolling identifier by encoding a device identifier associated with the wireless identity transmitter with a streaming-like encryption algorithm using a secret key shared with a server and the nonce;
periodically broadcasting a message including the rolling identifier and the nonce using short-range wireless transmissions; and
incrementing the nonce at a predefined interval.

13. A system, comprising:

a server;
a wireless identity transmitter; and
a proximity broadcast receiver,
wherein the wireless identity transmitter comprises:

a first memory;
a first transceiver configured to broadcast short-range wireless signals capable of being received by the proximity broadcast receiver; and
a first processor coupled to the first memory and the first transceiver, and configured with processor-executable instructions to perform operations comprising:

initializing a nonce within the wireless identity transmitter;
generating a rolling identifier by encoding a device identifier associated with the wireless identity transmitter, a secret key shared with the server, and the nonce with a streaming-like encryption algorithm;
periodically broadcasting a message including the rolling identifier and the nonce using short-range wireless transmissions via the first transceiver; and
incrementing the nonce at a predefined interval, and

wherein the proximity broadcast receiver comprises:

a second memory;
a second transceiver configured to exchange short-range wireless signals with the wireless identity transmitter;
a network device configured to exchange signals with the server;
a second processor coupled to the second memory, the second transceiver, and the network device and configured with processor-executable instructions to perform operations comprising:

receiving the message including the rolling identifier and the nonce from the wireless identity transmitter via the second transceiver;
transmitting to the server via the network device a sighting

message that includes the rolling identifier and the nonce, and

wherein the server is configured with server-executable instructions to perform operations comprising:

associating the secret key with the device identifier corresponding to the wireless identity transmitter;
receiving the sighting message including the rolling identifier and the nonce;
extracting the nonce and the rolling identifier from the received sighting message;
decoding the extracted rolling identifier using the streaming-like encryption algorithm, the secret key, and the extracted nonce to generate a decoded device identifier;
determining whether the decoded device identifier matches the device identifier associated with the secret key; and
identifying an originator of the received message as the wireless identity transmitter when the decoded device identifier matches the device identifier associated with the wireless identity transmitter.

**Patentansprüche**

1.  Ein Verfahren (2000) für einen Server zum sicheren Identifizieren eines Absenders bzw. Urhebers einer Nachricht, die verdeckte Information beinhaltet, das Folgendes aufweist:

    Assoziieren (2012) eines geteilten bzw. gemeinsam verwendeten, geheimen Schlüssels mit einem Einrichtungsidentifikator, der einem Drahtlosidentitätssender entspricht;
    Empfangen (2014) der Nachricht, die einen durchlaufenden Identifikator bzw. Rolling-Identifikator und eine Nonce beinhaltet;
    Extrahieren (2016, 2018) des durchlaufenden Identifikators und der Nonce aus der empfangenen Nachricht;
    Decodieren (2020) des extrahierten, durchlaufenden Identifikators unter Verwendung eines Streaming-artigen Verschlüsselungsalgorithmus, des gemeinsam verwendeten, geheimen Schlüssels und der Nonce zum Generieren eines decodierten Einrichtungsidentifikators;
    Bestimmen (2022), ob der decodierte Einrichtungsidentifikator mit dem Einrichtungsidentifikator zusammenpasst, der mit dem gemeinsam verwendeten, geheimen Schlüssel assoziiert ist; und
    Identifizieren des Urhebers der empfangenen Nachricht als der Drahtlosidentitätssender, wenn der decodierte Einrichtungsidentifikator mit dem Einrichtungsidentifikator zusammenpasst, der mit dem Drahtlosidentitätssender assoziiert ist.

2.  Verfahren (2000) nach Anspruch 1, wobei der Streaming-artige Verschlüsselungsalgorithmus eine AES-CTR-Verschlüsselung ist.

3.  Verfahren (2000) nach Anspruch 1, wobei der gemeinsam verwendete, geheime Schlüssel eine Größe von 128 Bits hat.

4.  Verfahren (2000) nach Anspruch 1, wobei das Decodieren (2020) des extrahierten, durchlaufenden Identifikators unter Verwendung eines Streaming-artigen Verschlüsselungsalgorithmus, des gemeinsam verwendeten, geheimen Schlüssels und der Nonce zum Generieren eines decodierten Einrichtungsidentifikators weiter Decodieren von Daten aufweist, die vor der Verschlüsselung mit dem Einrichtungsidentifikator verkettet wurden.

5.  Ein Verfahren (2000) für einen Drahtlosidentitätssender zum Senden von verdeckter Information, um einseitig gerichtete Kommunikation von Identifikationsinformation zu ermöglichen, das Folgendes aufweist:

    Initialisieren einer Nonce innerhalb des Drahtlosidentitätssenders;
    Generieren (2004) eines durchlaufenden Identifikators durch Codieren eines Einrichtungsidentifikators, der mit dem Drahtlosidentitätssender assoziiert ist, mit einem Streaming-artigen Verschlüsselungsalgorithmus unter Verwendung eines geheimen Schlüssels, der mit einem Server geteilt bzw. gemeinsam verwendet wird, und der Nonce; und
    periodisches Broadcasten bzw. Ausstrahlen (2006) einer Nachricht, die den durchlaufenden Identifikator und die Nonce enthält, unter Verwendung von Kurzstreckendrahtlossendungen; und
    Inkrementieren der Nonce in einem vordefinierten Intervall.

6.  Verfahren nach Anspruch 5, wobei die Nonce eine sich nicht wiederholende Zahl darstellt, die durch den Drahtlosidentitätssender generiert wird, deren Wert sich jedes Mal ändert, wenn erforderlich ist, dass sich die Einrichtungsidentifikatorcodierung ändert.

7.  Verfahren nach Anspruch 5, wobei der Streaming-artige Verschlüsselungsalgorithmus eine AES-CTR-Verschlüsselung ist.

8.  Verfahren nach Anspruch 5, wobei die Nachricht ein Einzelpaket mit einer Größe von 80 Bits oder weniger ist und wobei der geheime Schlüssel 128 Bits ist.

9.  Ein Server, der konfiguriert ist zum sicheren Identifizieren eines Urhebers bzw. Absenders einer Nachricht, die verdeckte Information beinhaltet, der Folgendes aufweist:

Mittel zum Assoziieren eines geteilten bzw. gemeinsam verwendeten, geheimen Schlüssels mit einem Einrichtungsidentifikator, der einem Drahtlosidentitätssender entspricht;

Mittel zum Empfangen der Nachricht, die einen durchlaufenden Identifikator bzw. Rolling-Identifikator und eine Nonce beinhaltet;

Mittel zum Extrahieren des durchlaufenden Identifikators und der Nonce aus der empfangenen Nachricht;

Mittel zum Decodieren des extrahierten, durchlaufenden Identifikators unter Verwendung eines Streaming-artigen Verschlüsselungsalgorithmus, des gemeinsam verwendeten, geheimen Schlüssels und der Nonce zum Generieren eines decodierten Einrichtungsidentifikators;

Mittel zum Bestimmen, ob der decodierte Einrichtungsidentifikator mit dem Einrichtungsidentifikator zusammenpasst, der mit dem gemeinsam verwendeten, geheimen Schlüssel assoziiert ist; und

Mittel zum Identifizieren des Urhebers der empfangenen Nachricht als der Drahtlosidentitätssender, wenn der decodierte Einrichtungsidentifikator mit dem Einrichtungsidentifikator zusammenpasst, der mit dem Drahtlosidentitätssender assoziiert ist.

10. Ein Drahtlosidentitätssender, der konfiguriert ist zum Senden von verdeckter Information zum Ermöglichen von einseitig gerichteter Kommunikation von Identifikationsinformation, der Folgendes aufweist:

Mittel zum Initialisieren einer Nonce innerhalb des Drahtlosidentitätssenders;

Mittel zum Generieren eines durchlaufenden Identifikators bzw. Rolling-Identifikators durch Codieren eines Einrichtungsidentifikators, der mit dem Drahtlosidentitätssender assoziiert ist, mit einem Streaming-artigen Verschlüsselungsalgorithmus unter Verwendung eines geheimen Schlüssels, der mit einem Server geteilt bzw. gemeinsam verwendet wird, und der Nonce; und

Mittel zum periodischen Broadcasten bzw. Ausstrahlen einer Nachricht, die den durchlaufenden Identifikator und die Nonce enthält, unter Verwendung von Kurzstreckendrahtlossendungen; und

Mittel zum Inkrementieren der Nonce in einem vordefinierten Intervall.

11. Ein nicht transitorisches, von einem Server lesbares Speichermedium mit darauf gespeicherten, von einem Server ausführbaren Instruktionen, die konfiguriert sind, um einen Server zu veranlassen, Operationen auszuführen, damit der Server sicher einen Urheber bzw. Absender einer Nachricht identifiziert, die verdeckte Information beinhaltet, wobei die Operationen Folgendes aufweisen:

Assoziieren eines geteilten bzw. gemeinsam verwendeten, geheimen Schlüssels mit einem Einrichtungsidentifikator, der einem Drahtlosidentitätssender entspricht;

Empfangen der Nachricht, die einen durchlaufenden Identifikator bzw. Rolling-Identifikator und eine Nonce beinhaltet;

Extrahieren des durchlaufenden Identifikators und der Nonce aus der empfangenen Nachricht;

Decodieren des extrahierten, durchlaufenden Identifikators unter Verwendung eines Streaming-artigen Verschlüsselungsalgorithmus, des gemeinsam verwendeten, geheimen Schlüssels und der Nonce zum Generieren eines decodierten Einrichtungsidentifikators;

Bestimmen, ob der decodierte Einrichtungsidentifikator mit dem Einrichtungsidentifikator zusammenpasst, der mit dem gemeinsam verwendeten, geheimen Schlüssel assoziiert ist; und

Identifizieren des Urhebers der empfangenen Nachricht als der Drahtlosidentitätssender, wenn der decodierte Einrichtungsidentifikator mit dem Einrichtungsidentifikator zusammenpasst, der mit dem Drahtlosidentitätssender assoziiert ist.

12. Ein nicht transitorisches, prozessorlesbares Speichermedium mit darauf gespeicherten, von einem Prozessor ausführbaren Software-Instruktionen, die konfiguriert sind, um einen Prozessor zu veranlassen, Operationen auszuführen, damit ein Drahtlosidentitätssender verdeckte Information sendet, um eine einseitig gerichtete Kommunikation von Identifikationsinformation zu ermöglichen, wobei die Operationen Folgendes aufweisen:

Initialisieren einer Nonce innerhalb des Drahtlosidentitätssenders;

Generieren eines durchlaufenden Identifikators bzw. Rolling-Identifikators durch Codieren eines Einrichtungsidentifikators, der mit dem Drahtlosidentitätssender assoziiert ist, mit einem Streaming-artigen Verschlüsselungsalgorithmus unter Verwendung eines geheimen Schlüssels, der mit einem Server geteilt bzw. gemeinsam verwendet wird, und der Nonce;

periodisches Broadcasten bzw. Ausstrahlen einer Nachricht, die den durchlaufenden Identifikator und die Nonce enthält, unter Verwendung von Kurzstreckendrahtlossendungen; und

Inkrementieren der Nonce in einem vordefinierten Intervall.

**13.** Ein System, das Folgendes aufweist:

einen Server;
einen Drahtlosidentitätssender; und
einen Nahbereichs-Broadcast-Empfänger,
wobei der Drahtlosidentitätssender Folgendes aufweist:

einen ersten Speicher;
einen ersten Transceiver, der konfiguriert ist zum Ausstrahlen bzw. Broadcasten von Kurzstreckendrahtlossignalen, die in der Lage sind, von dem Nahbereichs-Broadcast-Empfänger empfangen zu werden; und
einen ersten Prozessor, der an den ersten Speicher und den ersten Transceiver gekoppelt ist und konfiguriert ist mit von einem Prozessor ausführbaren Instruktionen zum Durchführen von Operationen, die Folgendes aufweisen:

Initialisieren einer Nonce innerhalb des Drahtlosidentitätssenders;
Generieren eines durchlaufenden Identifikators bzw. Rolling-Identifikators durch Codieren eines Einrichtungsidentifikators, der mit dem Drahtlosidentitätssender assoziiert ist, mit einem geheimen Schlüssel, der mit einem Server geteilt bzw. gemeinsam verwendet wird, und der Nonce mit einem Streaming-artigen Verschlüsselungsalgorithmus; und
periodisches Broadcasten bzw. Ausstrahlen einer Nachricht, die den durchlaufenden Identifikator und die Nonce enthält, unter Verwendung von Kurzstreckendrahtlossendungen über den ersten Transceiver; und
Inkrementieren der Nonce in einem vordefinierten Intervall, und wobei der Nahbereichs-Broadcast-Empfänger Folgendes aufweist:

einen zweiten Speicher;
einen zweiten Transceiver, der konfiguriert ist zum Austauschen von Kurzstreckendrahtlossignalen mit einem Drahtlosidentitätssender;
eine Netzwerkeinrichtung, die konfiguriert ist zum Austauschen von Signalen mit dem Server;
einen zweiten Prozessor, der an den zweiten Speicher, den zweiten Transceiver und die zweite Netzwerkeinrichtung gekoppelt ist und mit von einem Prozessor ausführbaren Instruktionen konfiguriert ist zum Durchführen von Operationen, die Folgendes aufweisen:

Empfangen der Nachricht, die den durchlaufenden Identifikator und
die Nonce enthält von dem Drahtlosidentitätssender über den zweiten Transceiver;
Senden, an den Server über die Netzwerkeinrichtung, einer Sichtungsnachricht, die den durchlaufenden Identifikator und die
Nonce enthält, und

wobei der Server konfiguriert ist mit von einem Server ausführbaren Instruktionen zum Durchführen von Operationen, die Folgendes aufweisen:

Assoziieren des geteilten bzw. gemeinsam verwendeten, geheimen Schlüssels mit einem Einrichtungsidentifikator, der dem Drahtlosidentitätssender entspricht;
Empfangen der Sichtungsnachricht, die den durchlaufenden Identifikator und die Nonce beinhaltet;
Extrahieren der Nonce und des durchlaufenden Identifikators aus der empfangenen Sichtungsnachricht;
Decodieren des extrahierten, durchlaufenden Identifikators unter Verwendung eines Streaming-artigen Verschlüsselungsalgorithmus, des geheimen Schlüssels und der extrahierten Nonce zum Generieren eines decodierten Einrichtungsidentifikators;
Bestimmen, ob der decodierte Einrichtungsidentifikator mit dem Einrichtungsidentifikator, der mit dem geheimen Schlüssel assoziiert ist, zusammenpasst; und
Identifizieren des Urhebers der empfangenen Nachricht als der Drahtlosidentitätssender, wenn der decodierte Einrichtungsidentifikator mit dem Einrichtungsidentifikator, der mit dem Drahtlosidentitätssender assoziiert ist, zusammenpasst.

**Revendications**

1. Un procédé (2000) destiné à un serveur de façon à identifier de manière sécurisée un expéditeur d'un message contenant des informations cachées, comprenant :

   l'association (2012) d'une clé secrète partagée à un identifiant de dispositif correspondant à un émetteur d'identité sans fil,
   la réception (2014) du message contenant un identifiant roulant et un nonce,
   l'extraction (2016, 2018) de l'identifiant roulant et du nonce du message reçu,
   le décodage (2020) de l'identifiant roulant extrait au moyen d'un algorithme de chiffrement de type en flux continu, de la clé secrète partagée et du nonce de façon à générer un identifiant de dispositif décodé,
   la détermination (2022) si l'identifiant de dispositif décodé correspond à l'identifiant de dispositif associé à la clé secrète partagée, et
   l'identification de l'expéditeur du message reçu en tant qu'émetteur d'identité sans fil lorsque l'identifiant de dispositif décodé correspond à l'identifiant de dispositif associé à l'émetteur d'identité sans fil.

2. Le procédé (2000) selon la Revendication 1, où l'algorithme de chiffrement de type en flux continu est un chiffrement AES-CTR.

3. Le procédé (2000) selon la Revendication 1, où la clé secrète partagée possède une taille de 128 bits.

4. Le procédé (2000) selon la Revendication 1, où le décodage (2020) de l'identifiant roulant extrait au moyen d'un algorithme de chiffrement de type en flux continu, de la clé secrète partagée et du nonce de façon à générer un identifiant de dispositif décodé comprend en outre le décodage de données qui étaient concaténées en l'identifiant de dispositif avant le chiffrement.

5. Un procédé (2000) destiné à un émetteur d'identité sans fil de façon à transmettre des informations cachées pour permettre une communication unidirectionnelle d'informations d'identification, comprenant :

   l'initialisation d'un nonce à l'intérieur de l'émetteur d'identité sans fil,
   la génération (2004) d'un identifiant roulant par le codage d'un identifiant de dispositif associé à l'émetteur d'identité sans fil avec un algorithme de chiffrement de type en flux continu au moyen d'une clé secrète partagée avec un serveur et le nonce, et
   la diffusion périodique (2006) d'un message contenant l'identifiant roulant et le nonce au moyen de transmissions sans fil à courte portée, et
   l'incrémentation du nonce à un intervalle prédéfini.

6. Le procédé selon la Revendication 5, où le nonce représente un nombre non répété généré par l'émetteur d'identité sans fil dont la valeur change chaque fois que le codage de l'identifiant de dispositif doit changer.

7. Le procédé selon la Revendication 5, où l'algorithme de chiffrement de type en flux continu est un chiffrement AES-CTR.

8. Le procédé selon la Revendication 5, où le message est un paquet unique d'une taille de 80 bits ou moins et où la clé secrète est de 128 bits.

9. Un serveur configuré de façon à identifier de manière sécurisée un expéditeur d'un message contenant des informations cachées, comprenant :

   un moyen d'association d'une clé secrète partagée à un identifiant de dispositif correspondant à un émetteur d'identité sans fil,
   un moyen de réception du message contenant un identifiant roulant et un nonce,
   un moyen d'extraction de l'identifiant roulant et du nonce du message reçu,
   un moyen de décodage de l'identifiant roulant extrait au moyen d'un algorithme de chiffrement de type en flux continu, de la clé secrète partagée et du nonce de façon à générer un identifiant de dispositif décodé,
   un moyen de détermination si l'identifiant de dispositif décodé correspond à l'identifiant de dispositif associé à la clé secrète partagée, et
   un moyen d'identification de l'expéditeur du message reçu en tant qu'émetteur d'identité sans fil lorsque l'identifiant de dispositif décodé correspond à l'identifiant de dispositif associé à l'émetteur d'identité sans fil.

10. Un émetteur d'identité sans fil configuré de façon à transmettre des informations cachées pour permettre une communication unidirectionnelle d'informations d'identification, comprenant :

un moyen d'initialisation d'un nonce à l'intérieur de l'émetteur d'identité sans fil,
un moyen de génération d'un identifiant roulant par le codage d'un identifiant de dispositif associé à l'émetteur d'identité sans fil avec un algorithme de chiffrement de type en flux continu au moyen d'une clé secrète partagée avec un serveur et le nonce, et
un moyen de diffusion périodique d'un message contenant l'identifiant roulant et le nonce au moyen de transmissions sans fil à courte portée, et
un moyen d'incrémentation du nonce à un intervalle prédéfini.

11. Un support à mémoire lisible par un serveur non transitoire possédant conservées en mémoire sur celui-ci des instructions exécutables par un serveur configurées de façon à amener un serveur à exécuter des opérations pour le serveur de façon à identifier de manière sécurisée un expéditeur d'un message contenant des informations cachées, les opérations comprenant :

l'association d'une clé secrète partagée à un identifiant de dispositif correspondant à un émetteur d'identité sans fil,
la réception du message contenant un identifiant roulant et un nonce,
l'extraction de l'identifiant roulant et du nonce du message reçu,
le décodage de l'identifiant roulant extrait au moyen d'un algorithme de chiffrement de type en flux continu, de la clé secrète partagée et du nonce de façon à générer un identifiant de dispositif décodé,
la détermination si l'identifiant de dispositif décodé correspond à l'identifiant de dispositif associé à la clé secrète partagée, et
l'identification de l'expéditeur du message reçu en tant qu'émetteur d'identité sans fil lorsque l'identifiant de dispositif décodé correspond à l'identifiant de dispositif associé à l'émetteur d'identité sans fil.

12. Un support à mémoire lisible par un processeur non transitoire possédant conservées en mémoire sur celui-ci des instructions logicielles exécutables par un processeur configurées de façon à amener un processeur à exécuter des opérations pour un émetteur d'identité sans fil de façon à transmettre des informations cachées pour permettre une communication unidirectionnelle d'informations d'identification, les opérations comprenant :

l'initialisation d'un nonce à l'intérieur de l'émetteur d'identité sans fil,
la génération d'un identifiant roulant par le codage d'un identifiant de dispositif associé à l'émetteur d'identité sans fil avec un algorithme de chiffrement de type en flux continu au moyen d'une clé secrète partagée avec un serveur et le nonce,
la diffusion périodique d'un message contenant l'identifiant roulant et le nonce au moyen de transmissions sans fil à courte portée, et
l'incrémentation du nonce à un intervalle prédéfini.

13. Un système, comprenant :

un serveur,
un émetteur d'identité sans fil, et
un récepteur de diffusion de proximité,
où l'émetteur d'identité sans fil comprend :

une première mémoire,
un premier émetteur-récepteur configuré de façon à diffuser des signaux sans fil à courte portée pouvant être reçus par le récepteur de diffusion de proximité, et
un premier processeur couplé à la première mémoire et au premier émetteur-récepteur et configuré avec des instructions exécutables par un processeur de façon à exécuter des opérations comprenant :

l'initialisation d'un nonce à l'intérieur de l'émetteur d'identité sans fil,
la génération d'un identifiant roulant par le codage d'un identifiant de dispositif associé à l'émetteur d'identité sans fil, d'une clé secrète partagée avec le serveur et du nonce avec un algorithme de chiffrement de type en flux continu,

la diffusion périodique d'un message contenant l'identifiant roulant et le nonce au moyen de transmissions sans fil à courte portée par l'intermédiaire du premier émetteur-récepteur, et

l'incrémentation du nonce à un intervalle prédéfini, et

où le récepteur de diffusion de proximité comprend :

une deuxième mémoire,

un deuxième émetteur-récepteur configuré de façon à échanger des signaux sans fil à courte portée avec l'émetteur d'identité sans fil,

un dispositif de réseau configuré de façon à échanger des signaux avec le serveur,

un deuxième processeur couplé à la deuxième mémoire, au deuxième émetteur-récepteur et au dispositif de réseau et configuré avec des instructions exécutables par un processeur de façon à exécuter des opérations comprenant :

la réception du message contenant l'identifiant roulant et le nonce à partir de l'émetteur d'identité sans fil par l'intermédiaire du deuxième émetteur-récepteur,

la transmission au serveur par l'intermédiaire du dispositif de réseau d'un message de visée qui contient l'identifiant roulant et le nonce,

et

où le serveur est configuré avec des instructions exécutables par un serveur de façon à exécuter des opérations comprenant :

l'association de la clé secrète à l'identifiant de dispositif correspondant à l'émetteur d'identité sans fil,

la réception du message de visée contenant l'identifiant roulant et le nonce,

l'extraction du nonce et de l'identifiant roulant du message de visée reçu,

le décodage de l'identifiant roulant extrait au moyen de l'algorithme de chiffrement de type en flux continu, de la clé secrète et du nonce extrait de façon à générer un identifiant de dispositif décodé,

la détermination si l'identifiant de dispositif décodé correspond à l'identifiant de dispositif associé à la clé secrète, et

l'identification d'un expéditeur du message reçu en tant qu'émetteur d'identité sans fil lorsque l'identifiant de dispositif décodé correspond à l'identifiant de dispositif associé à l'émetteur d'identité sans fil.

**120** ⌐  ⌐**100**

**Central Server**

**104** ⌐
Data Warehouse

Long-term data

**105** ⌐
OA & M

-Portal
-Scripts
-Tools

**106** ⌐
Developer Portal

-Registration
-Acct Mgmt
-Alert Mgmt

Accounts

**107** ⌐
Rolling ID Resolver

Factory Keys

**108** ⌐
Core

-Authentication
-Alert Engine
-APIs

Sightings

**109** ⌐
User Portal

-Registrations
-Acct Mgmt
-Search

Accounts

Internet ⌐ **103**

**121** ⌐
Cellular network

**142** ⌐
PBRs

Core Client

**115** ⌐

**138** ⌐
MPBRs

3rd Party Apps

Core Client

⌐ **116**

⌐ **115**

**101** ⌐
3rd Party Systems

**102** ⌐
Other Support Systems and/or Services

**110** ⌐
WITs

FIG. 1

FIG. 2

110 ○

302
Broadcast a message
(i.e., broadcast
message) including an
identifier

300

304
Enter a sleep mode

306
Wake up

142

308
Generate new device
identifier from algorithm
(e.g., rolling identifier
algorithm)

312
Receive the broadcast
message

314
Transmit a sighting
message to central
server including the
identifier, location info,
and time corresponding
to receipt of the
broadcast message

120

322
Receive the sighting
message from PBR

324
Associate identifier
indicated by sighting
message with the WIT

326
Store data from
sighting message in
database (e.g., location
info and time)

340
Perform action in
response to sighting
message (e.g., transmit
msg, send coupon,
calculate rewards, etc.)

FIG. 3

400

402

Boot-up

403

Activate short range radio

404

Broadcast configuration message indicating there are configuration parameters that can be set

411

Wait a period

No

406

Receive configuration settings ?

Yes

408

Set parameters based on received configuration settings

410

Config period elapsed?

No

Yes

302'

Broadcast a message including an identifier based on config parameters

412

Go to sleep for period based on config parameters

308

Generate new device identifier from algorithm

FIG. 4A

450

**402**
Boot-up

**403**
Activate short range radio

**404**
Broadcast configuration message indicating there are configuration parameters that can be set

**411**
Wait a period

**406**
Receive configuration settings? — No

Yes **408**
Set parameters based on received configuration settings

**410** No
Config period elapsed?

Yes

**302'**
Broadcast a message including an identifier based on config parameters

**452**
Need new BT MAC address? — No

Yes **454**
Generate new BT MAC address

**412**
Go to sleep for period based on config parameters

**456**
Need new device identifier? — No

Yes **308**
Generate new device identifier from algorithm

FIG. 4B

550

552 — Reset counter

554 — Generate message including identification information, counter, and time of availability for receiving messages

556 — Broadcast generated message via short-range wireless transmissions

558 — Has counter time period expired?

No

Yes

560 — Increment counter

562 — Available for receiving based on counter?

No

Yes

564 — Listen for incoming messages

566 — Process received incoming messages

568 — Has receiving time period expired?

No

Yes

FIG. 5

600

138

3rd Party Applications — 116

Core Client — 115

API — 606

Authorization System — 608

610 — Radio Specific Sightings receiver (BTLE, LTE-D, WiFi, etc.)

OA&M Module — 612

614 — WIT Network Manager

Event Registration — 616
Look-ahead IDs

Sightings Manager — 618
Cache

OS & Platform — 620

BTLE | LTE-D, etc. | Time Services | Location Services | Storage | WWAN/ WLAN — 622

624 — 626 — 630 — 632 —

628 —

Internet — 103

110 — WITs

Central Server — 120

FIG. 6

700

```
                    ┌─────────────────────────────────┐
                    │                 ▼               ┌── 702
              ┌──┐  │          ╱ Receive ╲
              │No│──┼────────◄  broadcast message from a  ►
              └──┘  │          ╲      WIT?      ╱
                    │                 │  Yes
                    │                 ▼        ┌── 704
                    │   ┌───────────────────────────────┐
                    │   │ Generate sighting message based on info │
                    │   │ from the received broadcast message (e.g.,│
                    │   │ rolling identifier) and other associated data│
                    │   │ (e.g., time of broadcast message receipt,│
                    │   │       location info, etc.)     │
                    │   └───────────────────────────────┘
                    │                 │        ┌── 706
                    │   ┌───────────────────────────────┐
                    │   │ Transmit sighting message to a central server│
                    └───┤                               │
                        └───────────────────────────────┘
```

FIG. 7A

70

FIG. 7B

FIG. 8

900

902

```
Receive broadcast message (e.g.,
advertisement packet) from a WIT
```

904

```
Perform an action based on a code in the
received message
```

FIG. 9

1000

1002

Receive a broadcast message from a WIT
containing an identification code and/or
second segment

1005

Is an action
associated with the identification
code and/or second segment
stored locally?

No

Yes

1008

Perform the action

1010

Transmit a sighting message with the
identifier code and/or second segment to a
central server

1012

Receive an instruction message

1014

Perform an action based on the received
instruction

FIG. 10

FIG. 11

1250

Wireless
Identity
Transmitter    PBR    Central
Server    User
Device

Short Range
Broadcast Message

802

User Request

806

Alert

1252

Short Range
Broadcast Message

1254

Sighting message
(e.g., message with
identifier and
associated data)

804

Response

808

FIG. 12

1300

120

# Central Server

104
## Data Warehouse

Long-term data

108
## Core

1302
### Data Layer

Short-term data

3rd Party Specific

105
## OA & M

-Portal
-Scripts
-Tools

1304
Alert Engine

1306
Data Anonimizer

1308
Privacy Manager

1310
Search Manager

106
## Developer Portal

-Registration
-Acct Mgmt
-Alert Mgmt

Accounts

107
## Rolling ID Resolver

Factory Keys

1312
Authorization System

1314
Sightings resolver

1316
API

1318
Sightings Aggregator

109
## User Portal

-Registrations
-Acct Mgmt
-Search

Accounts

1320
Network

Internet — 103

121
Cellular network

101

102

PBRs

MPBRs

3rd Party Systems

Other Support Systems, Services

142

138

## FIG. 13

| Wireless Identity Transmitter | User's Mobile Device | Central Server |
|---|---|---|

**1402**
Install application for use with WIT

**1404**
Transmit registration request with user info (e.g., deviceID)

**1406**
Receive user info for account registration

**1408**
Register account for user

**402**
Boot-up (e.g., battery inserted)

**1412**
Store account info (e.g., authentication info, deviceID, etc.)

**1410**
Provide account creation info to user

**1413**
Broadcast a message including an encoded (or rolling) identifier

**1414**
Receive the broadcast message

**1416**
Transmit message with WIT's rolling identifier and other info (e.g., deviceID, and authentication info)

**1418**
Receive message with encoded info, etc.

**1420**
Validate authentication info

**1422**
Generate set of rolling identifiers using deviceID and possible counter values

**1424**
When matched with received rolling identifier, store relevant counter value and time in relation to WIT

FIG. 14

**1428**
Receive registration result msg

**1426**
Transmit registration result msg to user

78

1500

No 1502 ◇ Receive sighting message?

Yes

**1504** → Identify WIT info, PBR info, and associated data based on sighting message

**1506** → Obtain WIT identity based on rolling identifier within sighting message

**1508** → Retrieve WIT user info based on obtained WIT identity

**1510** → Retrieve PBR identification info (e.g., PBR user info, related services, etc.) based on identified PBR info

**1511** → Authenticate sighting message

**1512** → Generate hashed data based on obtained and/or retrieved data

**1514** → Store data based on sighting message in relation to WIT identity

FIG. 15A

1550

No ─ **1502**

Receive
sighting message?

Yes

**1504**

Identify rolling identifier, PBR info
and associated data (e.g., timestamp
info, app ID, and location
information) based on sighting
message

**1506**

Obtain WIT identity based on rolling
identifier within sighting message

**1508**

Obtain WIT user info based on
obtained WIT identity

**1510**

Obtain PBR identification info (e.g.,
PBR user ID, PBR ID, related
services, etc.) based on identified
PBR info

**1512**

Generate hashed data based on
obtained data

**1514**

Store data based on sighting
message in relation to WIT identity

**1552**

Yes                                                    No

Third-party app
allowed to have obtained
PBR info?

**1554**

Transmit message to user's
device that includes WIT
identification info, PBR info, and
associated data from sighting
message

**1556**

Transmit message to user's
device that includes only WIT
identification info and associated
data from sighting message

FIG. 15B

FIG. 16

1702

Receive request for proximity info of target WIT from requester

1704

Identify initial sectors to search for the target WIT

1706

Transmit alert to PBRs based on identified sectors

1710

Report of Target WIT's proximity received via sighting msg ?

Yes

1712

Transmit response to requester

No

Search duration > time threshold, reported locations indicate WIT is leaving sector, or search sector command received?

1714

No

Yes

1716

Identify new sectors to search for the target WIT

1700

FIG. 17

**1802**

Register relationship between WIT and PBR

**1800**

**1805**

Wait a
period

Yes

**1804**

Receive
sighting msg from PBR related to WIT
?

No

**1806**

Transmit message indicating lost WIT

FIG. 18

1900

1902

Receive a WIT rolling identifier in a sighting
message from a PBR

1904

Compare the rolling identifier with code
calculated by algorithm shared with WIT (e.g.,
pseudo-random function, etc.)

1906

Associate matching identifier and any
associated data with a serial code
corresponding to the WIT

FIG. 19

WIT | Central Server | 2000

**2002**
Receive shared secret key (*K*)

**2004**
Encode *deviceID*, *K*, and counter value via streaming-like encryption algorithm (e.g., AES-CTR) to generate rolling identifier

**2006**
Broadcast message (e.g., a Bluetooth LE® chirp message of 1 packet length) that includes counter and rolling identifier

**2010**
Receive shared secret key (*K*)

**2012**
Associate shared secret key (*K*) with WIT's device identifier (*deviceID*)

**2014**
Receive message including counter and rolling identifier

**2016**
Extract counter

**2018**
Extract rolling identifier

**2019**
Select a WIT to evaluate

**2020**
Decode rolling identifier via same streaming-like encryption algorithm (e.g., AES-CTR) with counter and selected WIT's *K* to generate a decoded deviceID (*M*)

**2022**
Yes ← *M = deviceID?* → No

**2024**
Identify Message as Originating from selected WIT

**2026**
Decode rolling identifier with secret keys associated with other WITs

FIG. 20

2100

2102 — User registers device with central server

2104 — WIT initializes an internal counter (e.g., 0)

2106 — Encrypt counter and device identifier using secret key and encryption algorithm (e.g., AES-CTR) known to central server

2108 — Truncate data to generate indecipherable rolling identifier

2110 — Concatenate current counter with truncated data to make a message payload

2112 — Periodically transmit broadcast messages that include payload with rolling identifier

2114 — Counter time period expired ?  No

Yes

2116 — Increment counter value (e.g., counter+1)

2117 — Reset counter time period

FIG. 21A

2152

Establish database entry having deviceID, counter, and secret key for WIT at its registration

2154

Generate and store initial model payloads for WIT for a defined initialization period

2155

Generate and store current model payloads for WITs expected to be received within defined time window

2150

2156

Counter time period expired? No

2155'

Yes

Generate and store updated current model payloads for registered WITs

2160

Received payloads? No

Yes

2162

Configure central server to evaluate received payload using stored, current model payloads

2164

Select next registered WIT

2166

Compare received payload to stored model payloads for selected WIT based on system configuration

2168

Stored model payload match received payload? Yes

No

2170

Yes — Is there another registered WIT to evaluate?

No

2172

Configure central server to evaluate received payload using stored, initial model payloads

2174

Determine WIT identity based on match

2176

Update database with WIT counter based on received payload

FIG. 21B

WIT | Central Server | 2200

**2002** — Receive shared secret key (K)

**2204** — Synchronize counter

**2206** — Increment counter to WIT's current time

**2208** — Encode via pseudorandom function the *deviceID*, K, and counter to generate rolling identifier

**2210** — Broadcast message (e.g., a Bluetooth LE® chirp message of 1 packet length) that includes rolling identifier

**2010** — Receive shared secret key (K)

**2212** — Synchronize counter

**2214** — Associate shared secret key (K) and counter with WIT's device identifier (*deviceID*)

**2216** — Receive message including rolling identifier

**2018** — Extract rolling identifier

**2217** — Select a WIT to evaluate

**2218** — Increment selected WIT's counter to server's current time

**2220** — Encode via pseudorandom function the selected WIT's *deviceID*, K, and counter to generate server-encrypted data (C')

**2222** — Rolling identifier =C'?

No

Yes

**2024** — Identify Message as Originating from selected WIT

**2224** — Encode *deviceID*, K, and counter for other WITs to identify originator of the received message

## FIG. 22

2300

2102 — User registers device with central server

2104 — WIT initializes an internal counter (e.g., 0)

2302 — Concatenate current counter with unique device identifier (i.e., *deviceID*)

2304 — Generate payload with rolling identifier using pseudo-random function with concatenated data and secret key

2112 — Periodically transmit broadcast messages that include payload with rolling identifier

2114 — Counter time period expired ? — No

Yes

2116 — Increment counter value (e.g., counter+1)

2117 — Reset counter time period

FIG. 23A

2352

**Establish database records having** *deviceID, counter, time, reg_stat* **and secret key for each WIT**

2354

**Receive rolling identifier payload via sighting message from PBR**

2356

**Obtain PBR time** (*ir_time*) **from sighting message**

2350

2164

**Select next registered WIT**

2360

**Compute time difference** (*t_diff*) **between selected WIT's stored time** (*sel_time*) **and** *ir_time*

2362

**Set clock drift offset to next value** (*offset*)

2364

**Compute** *new_ctr* **based on selected WIT's stored** *counter, t_diff,* **and** *offset*

2366

**Encode via pseudorandom function the selected WIT's** *deviceID, K,* **and** *new_ctr* **to generate server-encrypted data (C')**

2222

**Rolling identifier** =*C'*?

Yes

No

2370

**Is there a next clock drift offset value ?**

Yes

No

2170

**Is there another registered WIT?**

Yes

No

2376

**Update database record of selected WIT with counter and time information**

2374

**Configure system to evaluate initial counter stored for each selected WIT**

FIG. 23B

**2102** — User registers device with central server

**2400**

**2402** — Store first and second secret keys ($K$, $K'$) and initial counter known to central server

**2404** — Initialize current counter = initial counter

**2406** — Encode *deviceID*, $K$, and current counter value via streaming-like encryption algorithm (e.g., AES-CTR) to generate rolling identifier

**2408** — Encode via pseudorandom function, the current counter, and $K'$ to generate encoded counter

**2410** — Periodically transmit broadcast messages that include payload with rolling identifier and encoded counter

**2114** — Counter time period expired ? — No

Yes

**2412** — Increment current counter value (e.g., current counter+1)

**2117** — Reset counter time period

FIG. 24A

# FIG. 24B

**2450**

**2452**
Establish database entry having *deviceID*, initial counter, current counter, and secret keys (*K* and *K'*) for all WITs

**2454**
Pre-compute encoded counters using pseudorandom function, *K'*, and current counter values for all WITs

**2456**
Receive message including encoded counter and rolling identifier

**2458**
Extract encoded counter

**2018**
Extract rolling identifier

**2460** Extracted ctr = pre-computed ctr?

**2472**
Update current counters and pre-computed encoded counters

Yes →

**2462**
Identify candidate WIT based on matching pre-computed counter

**2464**
Decode rolling identifier via a streaming-like encryption algorithm (e.g., AES-CTR) using candidate WIT's stored info to generate decoded deviceID (M)

**2466** M = candidate WIT's *deviceID*?

**2468** Other candidates?

**2470**
Identify received message as originating from candidate WIT

No →

**2170** Another registered WIT to evaluate? No

Yes

**2164**
Select next registered WIT

**2474**
Decode rolling identifier via the streaming-like encryption algorithm (e.g., AES-CTR) with selected WIT's initial counter and K to generate decoded deviceID (M')

**2476** M' = selected WIT's *deviceID*?

No

**2478**
Identify received message as originating from selected WIT

**FIG. 24C**

**2480**

**2452**
Establish database entry having *deviceID*, initial counter, current counter, and secret keys (*K* and *K'*) for all WITs

**2454**
Pre-compute encoded counters using pseudorandom function, *K'*, and current counter values for all WITs

**2482**
Pre-compute encoded devIDs with streaming-like encryption algorithm, *K*, *deviceID*, and current counter values for all WITs

**2456**
Receive message including encoded counter and rolling identifier

**2458**
Extract encoded counter

**2018**
Extract rolling identifier

**2460**
Extracted ctr = pre-computed ctr? — Yes / No

**2472'**
Update current counters and pre-computed encoded counters and pre-computed encoded devIDs

**2462**
Identify candidate WIT based on matching pre-computed counter

**2484**
Extracted Rolling identifier = pre-computed IDs? — No / Yes

**2468**
Other candidates? — Yes / No

**2470**
Identify received message as originating from candidate WIT

**2170**
Another registered WIT to evaluate? — No / Yes

**2164**
Select next registered WIT

**2474**
Decode rolling identifier via the streaming-like encryption algorithm (e.g., AES-CTR) with selected WIT's initial counter and *K* to generate decoded deviceID (*M'*)

**2476**
*M'* = selected WIT's *deviceID*? — No / Yes

**2478**
Identify received message as originating from selected WIT

FIG. 25A

**2550**

**902**
Receive broadcast message from a WIT

**2552**
Analyze received broadcast message

**2554**
WIT
Available for incoming messages
?

No

Yes

**2556**
Have
Stored message for delivery to WIT
?

No

Yes

**2558**
Transmit advertisement message including info to establish a link (e.g., link advertisement msg)

**2560**
Negotiate/establish link with WIT (e.g., Bluetooth link)

**2562**
Transmit message for delivery to the WIT via the established link

**706**
Transmit sighting message to central server

FIG. 25B

2570

2572

Establish link with mobile device
(e.g., Bluetooth pairing)

2104

WIT initializes an internal
counter

452

Need
new BT MAC address
?

No

Yes

2576

Sleep for a
period

2116

Increment counter value (e.g.,
counter+1)

2574

Generate rolling BT MAC
address using the counter and
encryption algorithm shared
with mobile device

2578

Transmit msg to paired mobile
device using rolling BT MAC
address

2579

Process incoming messages
from paired mobile device

FIG. 25C

FIG. 26B

110

2602 — Microcontroller

2604 — Short Range Radio

2606 — Antenna

2608 — Memory

2610 — Battery

FIG. 26A

**110**

**2602** — Microcontroller

**2604** — Short Range Radio

**2606** — Antenna

**2608** — Memory

**2610** — Battery

**2615** — Accelerometer

**2616** — Temperature sensor

**2617** — Radiation sensor

**2618** — Humidity sensor

**2619** — CO2 sensor

FIG. 26B

**142**

| | |
|---|---|
| 2702 | Processor |
| 2704 | Short Range Radio |
| 2706 | Antenna |
| 2708 | Secondary Network Device |
| 2710 | Battery |
| 2712 | Memory |
| 2714 | GPS Receiver |

FIG. 27

FIG. 27B

2800

| Access Address 0x8E89BED6 4 bytes | Adv PDU Type 1 Byte | Adv PDU Header 1 Byte | Adv PDU Address 6 Bytes | Adv Data Up to 31 Bytes |
|---|---|---|---|---|

2802 · 2804 · 2806 · 2808 · 2810

| Service UUID / Temp / Bat 18 Bytes | FYX Data 13 Bytes |
|---|---|

2820 · 2822

| Length 11 1 Byte | Type 07 1 Byte | Serv UUID / Bat / Temp 960c4800-244c-11e2-b299-00a0c60077ad 16 Bytes | Length 0C 1 Byte | Type FF 1 Byte | Man ID A0C6 2 Bytes | Blob 0000... 9 Bytes |
|---|---|---|---|---|---|---|

2830 · 2832 · 2834 · 2835 · 2837 · 2836 · 2838

| UUID Pref 960c4 (10XX) 22 Bits | Bat 00 2 Bits | Temp 00 1 Byte | UUID Suffix -244c-11e2-b299-00a0c60077ad 12 Bytes |
|---|---|---|---|

2844

2840 · 2842 · 2846

FIG. 28

FIG. 29

FIG. 30

EP 2 817 937 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2200218 A

- EP 1626363 A

**Non-patent literature cited in the description**

- Symmetric Encryption in RFID Authentication Protocol for Strong Location Privacy and Forward Security. **HUN-WOOK KIM et al.** HYBRID INFORMATION TECHNOLOGY, 2006, ICHIT '06. IEEE, 09 November 2006, 718-723